# EUROPEAN PATENT APPLICATION

(11) **EP 4 842 100 A1**
(43) Date of publication of application: **18.11.2026**
(21) Application number: 24917231.3
(22) Date of filing: 11.01.2024
(51) Int. Cl.: H04W 72/044, H04W 72/23

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); NAGATA, Satoshi, Tokyo 100-6150 (JP); XU, Jialong, Beijing 100190 (CN); LIU, Liu, Beijing 100190 (CN); CHEN, Lan, Beijing 100190 (CN); WANG, Jing, Beijing 100190 (CN); PI, Qiping, Beijing 100190 (CN)
(74) Representative: Hoffmann Eitle
(86) International application number: PCT/JP2024/000489
(87) International publication number: WO 2025/150167

(57) **Abstract**

A terminal according to one aspect of the present disclosure includes a receiving section that receives a configuration of a demodulation reference signal (DMRS) for a physical downlink shared channel, and a control section that determines, based on the configuration, a plurality of resources for some of a plurality of specific resources with an orthogonal cover code and that controls reception of the DMRS by using one or more time resources.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a terminal (user terminal, User Equipment (UE)) that uses a demodulation reference signal (DMRS) for transmission/reception is under study. The DMRS is used for channel estimation on a receiver side.

However, when DMRS resources are increased, resources for data are reduced, and communication throughput may be reduced.

Thus, an object of the present disclosure is to provide a terminal, a radio communication method, and a base station that can reduce DMRS resources.

### Solution to Problem

A terminal according to one aspect of the present disclosure includes a receiving section that receives a configuration of a demodulation reference signal (DMRS) for a physical downlink shared channel, and a control section that determines, based on the configuration, a plurality of resources for some of a plurality of specific resources with an orthogonal cover code and that controls reception of the DMRS by using one or more time resources.

### Advantageous Effects of Invention

According to one aspect of the present disclosure, it is possible to reduce DMRS resources.

### Brief Description of Drawings

[FIG. 1] FIG. 1 shows an example of an AI model management framework.
[FIG. 2] FIG. 2 shows an example of a front-loaded DMRS and an additional DMRS.
[FIG. 3] FIG. 3A and FIG. 3B show examples of DMRSs for DMRS mapping types.
[FIG. 4] FIG. 4A and FIG. 4B show examples of a single-symbol DMRS.
[FIG. 5] FIG. 5A and FIG. 5B show examples of a double-symbol DMRS.
[FIG. 6] FIG. 6 shows an example of a parameter for PDSCH DMRS configuration type 1.
[FIG. 7] FIG. 7 shows an example of a parameter for PDSCH DMRS configuration type 2.
[FIG. 8] FIG. 8 shows an example of a parameter for PUSCH DMRS configuration type 1.
[FIG. 9] FIG. 9 shows an example of a parameter for PUSCH DMRS configuration type 2.
[FIG. 10] FIG. 10A and FIG. 10B show examples of DMRS configurations 1 and 2.
[FIG. 11] FIG. 11A and FIG. 11B show examples of DMRS configurations 3 and 4.
[FIG. 12] FIG. 12A and FIG. 12B show examples of DMRS configurations 5 and 6.
[FIG. 13] FIG. 13A and FIG. 13B show examples of DMRS configurations 6 and 7.
[FIG. 14] FIG. 14A and FIG. 14B show examples of k for a basic DMRS.
[FIG. 15] FIG. 15 shows an example of k for enhanced DMRS configuration type 1.
[FIG. 16] FIG. 16 shows an example of k for enhanced DMRS configuration type 2.
[FIG. 17] FIG. 17 shows a table for PDSCH DMRS positions in a single-symbol DMRS.
[FIG. 18] FIG. 18 shows a table for PUSCH DMRS positions in a single-symbol DMRS.
[FIG. 19] FIG. 19 shows a table for PDSCH DMRS positions in a double-symbol DMRS.
[FIG. 20] FIG. 20 shows a table for PUSCH DMRS positions in a double-symbol DMRS.
[FIG. 21] FIG. 21A and FIG. 21B show FD-OCCs for CDM group 0 (ports #1000, #1001) for a single-symbol DMRS of PDSCH DMRS enhanced type 1.
[FIG. 22] FIG. 22A and FIG. 22B show FD-OCCs for CDM group 0 (ports #1008, #1009) for a single-symbol DMRS of PDSCH DMRS enhanced type 1.
[FIG. 23] FIG. 23A and FIG. 23B show FD-OCCs for CDM group 1 (ports #1002, #1003) for a single-symbol DMRS of PDSCH DMRS enhanced type 1.
[FIG. 24] FIG. 24A and FIG. 24B show FD-OCCs for CDM group 1 (ports #1010, #1011) for a single-symbol DMRS of PDSCH DMRS enhanced type 1.
[FIG. 25] FIG. 25A and FIG. 25B show FD-OCCs and TD-OCCs for CDM group 0 (ports #1000, #1001) for a double-symbol DMRS of PDSCH DMRS basic type 2.
[FIG. 26] FIG. 26A and FIG. 26B show FD-OCCs and TD-OCCs for CDM group 0 (ports #1006, #1007) for a double-symbol DMRS of PDSCH DMRS basic type 2.
[FIG. 27] FIG. 27A and FIG. 27B show FD-OCCs and TD-OCCs for CDM group 1 (ports #1002, #1003) for a double-symbol DMRS of PDSCH DMRS basic type 2.
[FIG. 28] FIG. 28A and FIG. 28B show FD-OCCs and TD-OCCs for CDM group 1 (ports #1008, #1009) for a double-symbol DMRS of PDSCH DMRS basic type 2.
[FIG. 29] FIG. 29A and FIG. 29B show FD-OCCs and TD-OCCs for CDM group 2 (ports #1004, #1005) for a double-symbol DMRS of PDSCH DMRS basic type 2.
[FIG. 30] FIG. 30A and FIG. 30B show FD-OCCs and TD-OCCs for CDM group 2 (ports #1010, #1011) for a double-symbol DMRS of PDSCH DMRS basic type 2.
[FIG. 31] FIG. 31 shows a ratio of PUSCH EPRE to DMRS EPRE.
[FIG. 32] FIG. 32 shows a ratio of PDSCH EPRE to DMRS EPRE.
[FIG. 33] FIG. 33 shows a table corresponding to UE processing capability 1.
[FIG. 34] FIG. 34 shows a table corresponding to UE processing capability 2.
[FIG. 35] FIG. 35A and FIG. 35B show examples of mapping based on equation 0 in case 1 of option 1 of Embodiment 1-1.
[FIG. 36] FIG. 36A and FIG. 36B show examples of mapping based on equation 1 in case 1 of option 1 of Embodiment 1-1.
[FIG. 37] FIG. 37A and FIG. 37B show examples of mapping based on equation 2 in case 1 of option 1 of Embodiment 1-1.
[FIG. 38] FIG. 38A and FIG. 38B show examples of mapping based on equation 3 in case 1 of option 1 of Embodiment 1-1.
[FIG. 39] FIG. 39A and FIG. 39B show examples of mapping based on equation 0 in case 2 of option 1 of Embodiment 1-1.
[FIG. 40] FIG. 40A and FIG. 40B show examples of mapping based on equation 1 in case 2 of option 1 of Embodiment 1-1.
[FIG. 41] FIG. 41A and FIG. 41B show examples of mapping based on equation 2 in case 2 of option 1 of Embodiment 1-1.
[FIG. 42] FIG. 42A and FIG. 42B show examples of mapping based on equation 3 in case 2 of option 1 of Embodiment 1-1.
[FIG. 43] FIG. 43A and FIG. 43B show examples of mapping based on equation 0 in case 3 of option 1 of Embodiment 1-1.
[FIG. 44] FIG. 44A and FIG. 44B show examples of mapping based on equation 1 in case 3 of option 1 of Embodiment 1-1.
[FIG. 45] FIG. 45A and FIG. 45B show examples of mapping based on equation 2 in case 3 of option 1 of Embodiment 1-1.
[FIG. 46] FIG. 46A and FIG. 46B show examples of mapping based on equation 0 in case 4 of option 1 of Embodiment 1-1.
[FIG. 47] FIG. 47A and FIG. 47B show examples of mapping based on equation 1 in case 4 of option 1 of Embodiment 1-1.
[FIG. 48] FIG. 48A and FIG. 48B show examples of mapping based on equation 2 in case 4 of option 1 of Embodiment 1-1.
[FIG. 49] FIG. 49A and FIG. 49B show examples of mapping based on equation 0 in case 1 of option 2 of Embodiment 1-1.
[FIG. 50] FIG. 50A and FIG. 50B show examples of mapping based on equation 1 in case 1 of option 2 of Embodiment 1-1.
[FIG. 51] FIG. 51A and FIG. 51B show examples of mapping based on equation 0 in case 2 of option 2 of Embodiment 1-1.
[FIG. 52] FIG. 52A and FIG. 52B show examples of mapping based on equation 1 in case 2 of option 2 of Embodiment 1-1.
[FIG. 53] FIG. 53A and FIG. 53B show examples of mapping based on equation 0 in case 3 of option 2 of Embodiment 1-1.
[FIG. 54] FIG. 54A and FIG. 54B show examples of mapping based on equation 1 in case 3 of option 2 of Embodiment 1-1.
[FIG. 55] FIG. 55A and FIG. 55B show examples of mapping based on equation 0 in case 4 of option 2 of Embodiment 1-1.
[FIG. 56] FIG. 56A and FIG. 56B show examples of mapping based on equation 1 in case 4 of option 2 of Embodiment 1-1.
[FIG. 57] FIG. 57A and FIG. 57B show examples of mapping based on equation 0 in case 1 of option 3 of Embodiment 1-1.
[FIG. 58] FIG. 58A and FIG. 58B show examples of mapping based on equation 1 in case 1 of option 3 of Embodiment 1-1.
[FIG. 59] FIG. 59A and FIG. 59B show examples of mapping based on equation 0 in case 2 of option 3 of Embodiment 1-1.
[FIG. 60] FIG. 60A and FIG. 60B show examples of mapping based on equation 1 in case 2 of option 3 of Embodiment 1-1.
[FIG. 61] FIG. 61A and FIG. 61B show examples of mapping based on equation 0 in case 1 of option 4 of Embodiment 1-1.
[FIG. 62] FIG. 62A and FIG. 62B show examples of mapping based on equation 1 in case 1 of option 4 of Embodiment 1-1.
[FIG. 63] FIG. 63A and FIG. 63B show examples of mapping based on equation 0 in case 2 of option 4 of Embodiment 1-1.
[FIG. 64] FIG. 64A and FIG. 64B show examples of mapping based on equation 1 in case 2 of option 4 of Embodiment 1-1.
[FIG. 65] FIG. 65A and FIG. 65B show examples of mapping based on equation 0 in case 3 of option 4 of Embodiment 1-1.
[FIG. 66] FIG. 66A and FIG. 66B show examples of mapping based on equation 1 in case 3 of option 4 of Embodiment 1-1.
[FIG. 67] FIG. 67A and FIG. 67B show examples of mapping based on equation 0 in case 4 of option 4 of Embodiment 1-1.
[FIG. 68] FIG. 68A and FIG. 68B show examples of mapping based on equation 1 in case 4 of option 4 of Embodiment 1-1.
[FIG. 69] FIG. 69A and FIG. 69B show examples of mapping based on equation 0 in case 1 of option 1 of Embodiment 1-2.
[FIG. 70] FIG. 70A and FIG. 70B show examples of mapping based on equation 0 in case 2 of option 1 of Embodiment 1-2.
[FIG. 71] FIG. 71A and FIG. 71B show examples of mapping based on equation 0 in case 3 of option 1 of Embodiment 1-2.
[FIG. 72] FIG. 72A and FIG. 72B show examples of mapping based on equation 0 in case 4 of option 1 of Embodiment 1-2.
[FIG. 73] FIG. 73A and FIG. 73B show examples of mapping based on equation 0 in case 1 of option 2 of Embodiment 1-2.
[FIG. 74] FIG. 74A and FIG. 74B show examples of mapping based on equation 0 in case 2 of option 2 of Embodiment 1-2.
[FIG. 75] FIG. 75 shows an example of mapping based on equation 0 in case 3 of option 2 of Embodiment 1-2.
[FIG. 76] FIG. 76 shows an example of mapping based on equation 0 in case 4 of option 2 of Embodiment 1-2.
[FIG. 77] FIG. 77 shows an example of mapping based on equation 0 in case 1 of option 3 of Embodiment 1-2.
[FIG. 78] FIG. 78 shows an example of mapping based on equation 0 in case 2 of option 3 of Embodiment 1-2.
[FIG. 79] FIG. 79 shows an example of mapping based on equation 0 in case 3 of option 3 of Embodiment 1-2.
[FIG. 80] FIG. 80 shows an example of mapping based on equation 0 in case 4 of option 3 of Embodiment 1-2.
[FIG. 81] FIG. 81 shows an example of mapping based on equation 0 in case 1 of option 4 of Embodiment 1-2.
[FIG. 82] FIG. 82 shows an example of mapping based on equation 0 in case 2 of option 4 of Embodiment 1-2.
[FIG. 83] FIG. 83 shows an example of mapping based on equation 0 in case 1 of option 5 of Embodiment 1-2.
[FIG. 84] FIG. 84 shows an example of mapping based on equation 0 in case 2 of option 5 of Embodiment 1-2.
[FIG. 85] FIG. 85 shows an example of mapping based on equation 0 in case 3 of option 5 of Embodiment 1-2.
[FIG. 86] FIG. 86 shows an example of mapping based on equation 0 in case 4 of option 5 of Embodiment 1-2.
[FIG. 87] FIG. 87 shows an example of case 1/2 of option 1 of Embodiment 1-3.
[FIG. 88] FIG. 88 shows an example of case 3/4 of option 1 of Embodiment 1-3.
[FIG. 89] FIG. 89 shows an example of DMRS configuration type 1 in option 2 of Embodiment 1-3.
[FIG. 90] FIG. 90 shows an example of DMRS configuration type 2 in option 2 of Embodiment 1-3.
[FIG. 91] FIG. 91A and FIG. 91B show examples of Embodiment 1-5.
[FIG. 92] FIG. 92A and FIG. 92B show examples of Embodiment 2-0.
[FIG. 93] FIG. 93A and FIG. 93B show examples of Embodiment 2-1.
[FIG. 94] FIG. 94 shows an example of a table including DMRS positions for a single-symbol DMRS for PDSCH in Embodiment 2-1.
[FIG. 95] FIG. 95 shows an example of a table including DMRS positions for a double-symbol DMRS for PDSCH in Embodiment 2-1.
[FIG. 96] FIG. 96A and FIG. 96B show examples of Embodiment 2-2.
[FIG. 97] FIG. 97 shows an example of a table including DMRS positions for a single-symbol DMRS for PDSCH in Embodiment 2-2.
[FIG. 98] FIG. 98 shows an example of a procedure in example 1 of Embodiment 3-1.
[FIG. 99] FIG. 99 shows an example of a changed OCC in example 1 of Embodiment 3-1.
[FIG. 100] FIG. 100 shows an example of a procedure in example 2 of Embodiment 3-1.
[FIG. 101] FIG. 101 shows an example of a changed OCC in example 2 of Embodiment 3-1.
[FIG. 102] FIG. 102 shows an example of example 3 of Embodiment 3-1.
[FIG. 103] FIG. 103 shows an example of example 4 of Embodiment 3-1.
[FIG. 104] FIG. 104 shows an example of a table for CDM configuration for DMRS configuration type 1 for PDSCH in example 1 of Embodiment 3-2.
[FIG. 105] FIG. 105 shows an example of a table for CDM configuration for DMRS configuration type 2 for PDSCH in example 1 of Embodiment 3-2.
[FIG. 106] FIG. 106 shows an example of a procedure in example 2 of Embodiment 3-2.
[FIG. 107] FIG. 107 shows an example of a changed OCC in example 2 of Embodiment 3-2.
[FIG. 108] FIG. 108 shows an example of example 1 of Embodiment 3-3.
[FIG. 109] FIG. 109 shows an example of example 2 of Embodiment 3-3.
[FIG. 110] FIG. 110 shows an example of example 3 of Embodiment 3-3.
[FIG. 111] FIG. 111 is a diagram to show an example of a schematic structure of a radio communication system according to one embodiment.
[FIG. 112] FIG. 112 is a diagram to show an example of a structure of a base station according to one embodiment.
[FIG. 113] FIG. 113 is a diagram to show an example of a structure of a user terminal according to one embodiment.
[FIG. 114] FIG. 114 is a diagram to show an example of a hardware structure of the base station and the user terminal according to one embodiment.
[FIG. 115] FIG. 115 is a diagram to show an example of a vehicle according to one embodiment.

### Description of Embodiments

### (Application of Artificial Intelligence (AI) technology to Radio Communication)

For future radio communication technologies, it is studied to utilize the AI technology such as machine learning (ML) for control, management, and the like of networks/devices.

For example, it is studied that a terminal (user terminal, User Equipment (UE))/base station (BS) utilizes the AI technology for improvement in channel state information (CSI) feedback (for example, overhead reduction, accuracy enhancement, prediction), enhancement in beam management (for example, accuracy enhancement, prediction in time/spatial domain), enhancement in location measurement (for example, location estimation/prediction enhancement), and the like.

The AI model may output at least one piece of information among an estimated value, a predicted value, a selected operation, classification, and the like, based on the input information. The UE/BS may input channel state information, a reference signal measurement value, and the like to the AI model and output highly accurate channel state information / measured value / beam selection/position, future channel state information / radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, estimation, prediction, and inference may be interchangeably interpreted. In the present disclosure, "estimate," "predict," and "infer" may be interchangeably interpreted.

In the present disclosure, the object may be, for example, an apparatus, a device, or the like, such as a UE or a BS. In the present disclosure, the object may correspond to a program/model/entity operating in the apparatus.

Note that, in the present disclosure, the AI model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, the AI model may mean a data-driven algorithm that applies AI technology and generates a set of outputs based on a set of inputs.

In the present disclosure, an AI model, a model, an ML model, predictive analytics, a predictive analytics model, a tool, an autoencoder, an encoder, a decoder, a neural network model, an AI algorithm, a scheme, and the like may be interchangeably interpreted. The AI model may be derived by using at least one of regression analysis (for example, linear regression analysis, multiple regression analysis, logistic regression analysis), support vector machine, random forest, neural network, deep learning, and the like.

In the present disclosure, examples of an AI model training method may include supervised learning, unsupervised learning, reinforcement learning, federated learning, and the like. The supervised learning may mean processing of training a model, based on an input and a corresponding label. The unsupervised learning may mean processing of training a model without labeled data. The reinforcement learning may mean processing of training a model, based on an input (that is, a state) and a feedback signal (that is, a reward) generated from a model output (that is, an action), in an environment in which models interact with each other.

In the present disclosure, generation, computation, derivation, and the like may be interchangeably interpreted. In the present disclosure, "perform," "manage," "operate," "carry out," and the like may be interchangeably interpreted. In the present disclosure, training, learning, update, retraining, and the like may be interchangeably interpreted. In the present disclosure, inference, after-training, substantial use, actual use, and the like may be interchangeably interpreted. In the present disclosure, a signal and a signal/channel may be interchangeably interpreted.

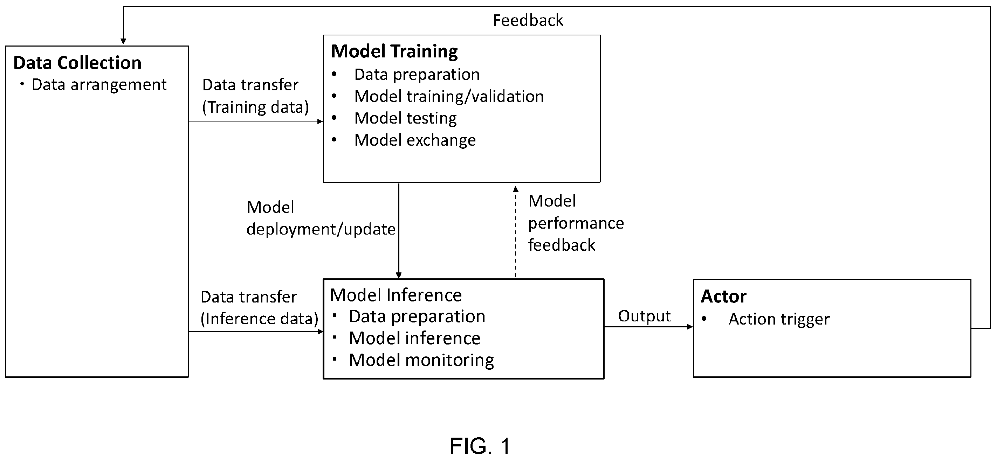

FIG. 1 is a diagram to show an example of an AI model management framework. In the present example, stages related to an AI model are shown using blocks. The present example is also expressed as AI model life cycle management (LCM).

A data collection stage corresponds to a stage to collect data for generating/updating the AI model. The data collection stage may include data arrangement (for example, determining which data is transferred for model training /model inference), data transfer (for example, transferring data to an entity (for example, UE, gNB) performing model training/model inference), and the like.

Note that data collection may mean processing in which a network node, a management entity, or a UE collects data for the purpose of AI model training/data analysis/inference. In the present disclosure, processing and a procedure may be interchangeably interpreted. In the present disclosure, collection may mean acquiring a data set (for example, available as inputs/outputs) for AI model training/inference, based on measurement (channel measurement, beam measurement, radio link quality measurement, position estimation, or the like).

In the present disclosure, offline field data may be data collected from a field (real world) and used for offline training of an AI model. In the present disclosure, online field data may be data collected from a field (real world) and used for online training of an AI model.

In a model training stage, the model training is performed based on data (training data) transferred from the collection stage. This stage may include data preparation (for example, performing preprocessing, cleaning, formatting, conversion, and the like of data), model training/validation, model testing (for example, checking whether a trained model meets a performance threshold), model exchange (for example, transferring a model for distributed learning), model deployment/update (deploying/updating a model for an entity performing model inference), and the like.

Note that AI model training may mean processing for training an AI model with a data-driven method and acquiring a trained AI model for inference.

AI model validation may mean sub-processing of training for evaluating quality of an AI model by using a data set different from the data set used for model training. The sub-processing is useful for selection of model parameters generalized beyond the data set used for model training.

AI model testing may mean sub-processing of training for evaluating performance of a final AI model by using a data set different from the data set used for model training/validation. Note that testing may not presuppose subsequent model tuning, unlike validation.

In a model inference stage, model inference is performed based on the data (inference data) transferred from the collection stage. This stage may include data preparation (for example, performing preprocessing, cleaning, formatting, conversion, and the like of data), model inference, model monitoring (for example, monitoring of performance of model inference), model performance feedback (feeding back model performance to an entity performing model training), output (providing a model output to an actor), and the like.

Note that AI model inference may mean processing for producing a set of outputs from a set of inputs by using a trained AI model.

A UE side model may mean an AI model whose inference is entirely performed in the UE. A network side model may mean an AI model whose inference is entirely performed in the network (for example, the gNB).

A one-sided model may mean the UE side model or the network side model. A two-sided model may mean a pair of AI models that perform joint inference. Here, the joint inference may include AI inference whose inference is jointly performed by the UE and the network, and for example, a first part of the inference may be first performed by the UE and the remaining part may be performed by the gNB (or vice versa).

AI model monitoring may mean processing for monitoring inference performance of an AI model, and may be interpreted as model performance monitoring, performance monitoring, or the like, and vice versa.

Note that model registration may mean assigning a version identifier to a model and making (registering) the model executable by compiling it into specific hardware used in the inference stage. Model deployment may mean delivering a runtime image (or an image of an execution environment) of a fully developed and tested model to a target (for example, the UE/gNB) in which inference is performed (or enabling the runtime image in the target).

An actor stage may include an action trigger (for example, determining whether to trigger action to another entity), feedback (for example, feeding back information required for training data/inference data /performance feedback), and the like.

Note that, for example, training of a model for mobility optimization may be performed in, for example, maintenance, operation, and administration in a network (NW) (Operation, Administration and Maintenance (Management) (OAM))/gNodeB (gNB). In the former case, interoperation, large amounts of storage, operator manageability, and model flexibility (such as feature engineering) are advantageous. In the latter case, model update latency, data exchange for model deployment, and the like are advantageously not required. The inference of the model above may be performed in the gNB, for example.

Note that model activation may mean activating an AI model for a specific function. Model deactivation may mean deactivating an AI model for a specific function. Model switching may mean deactivating a currently active AI model for a specific function and activating a different AI model.

Model transfer may mean delivering an AI model on an air interface. The delivering may include delivering one or both of parameters of a model structure known to a receiving side and a new model having parameters. The delivering may include a full model or a partial model. Model download may mean model transfer from the network to the UE. Model upload may mean model transfer from the UE to the network.

### (DMRS)

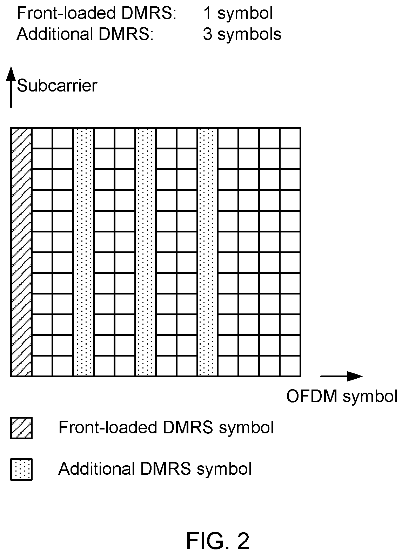

A front-loaded demodulation reference signal (DMRS) is the first DMRS (in the first symbol or a symbol near the first symbol) for faster demodulation (FIG. 2). {0, 1, 2, 3} additional DMRS(s) can be configured by RRC for a high-speed moving terminal (user terminal, User Equipment (UE)) or a high modulation and coding scheme (MCS)/rank. A frequency position of the additional DMRS is the same as that of the front-loaded DMRS.

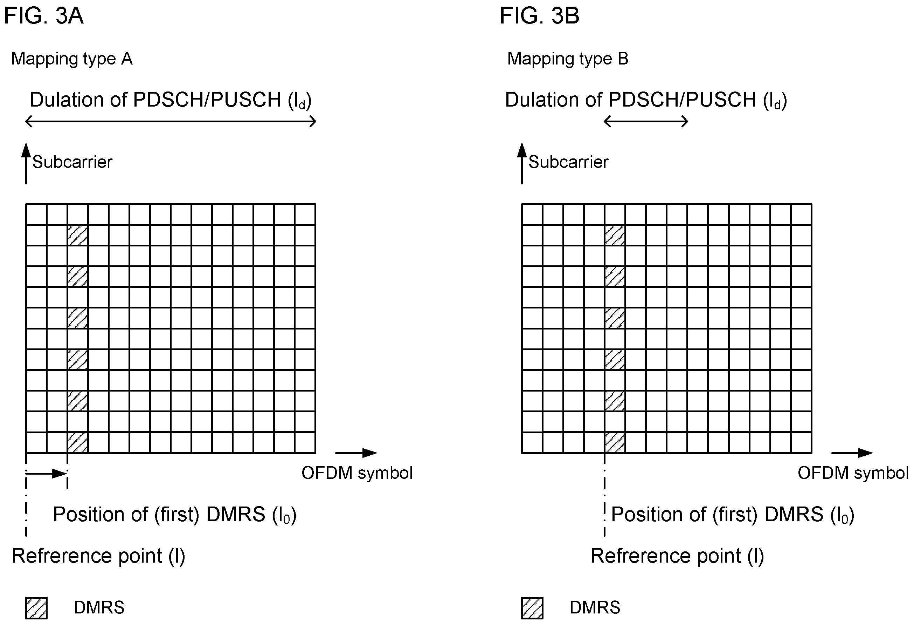

DMRS mapping type A or B is configured for a time domain.
- In DMRS mapping type A, DMRS position l_0 is counted by a symbol index in a slot (FIG. 3A). l_0 is configured by a parameter (dmrs-TypeA-Position) in an MIB or a common serving cell configuration (ServingCellConfigCommon). DMRS position 0 (reference point l) means the first symbol of the slot or each frequency hop.
- In DMRS mapping type B, DMRS position l_0 is counted by a symbol index in a PDSCH/PUSCH (FIG. 3B). l_0 is always 0. DMRS position 0 (reference point l) means the first symbol of the PDSCH/PUSCH or each frequency hop.

The DMRS position is defined by a table in a specification, and depends on duration l_d of the PDSCH/PUSCH. The position of the additional DMRS is fixed.
- In DMRS mapping type A, duration l_d of the PDSCH/PUSCH is from the first symbol of the slot to the last symbol of the scheduled PDSCH/PUSCH.
- In DMRS mapping type B, duration l_d of the PDSCH/PUSCH is from the first symbol of the scheduled PDSCH/PUSCH to the last symbol of the scheduled PDSCH/PUSCH.

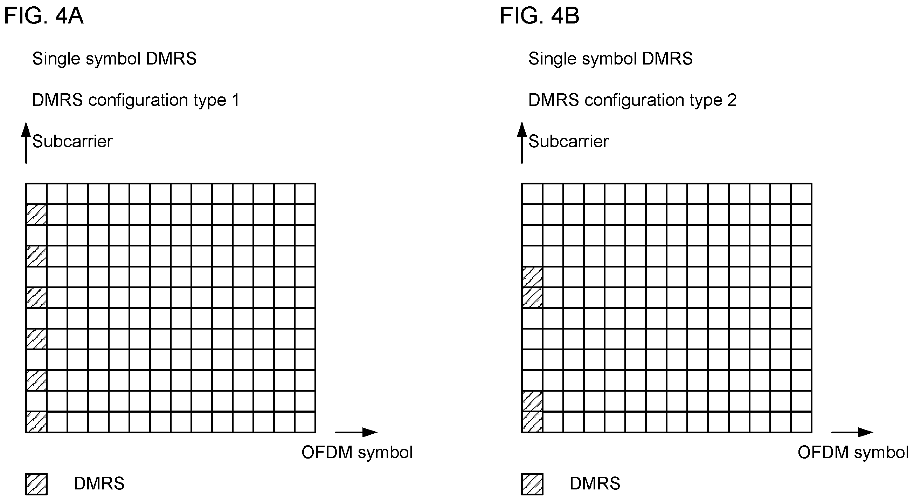

(PDSCH/PUSCH) DMRS configuration type 1 or 2 is configured for a frequency domain.
- DMRS configuration type 1 has a comb structure and is applicable to both CP-OFDM (transport precoding=disabled) and DFT-S-OFDM (transport precoding=enabled). A minimum RE (subcarrier) group in the frequency domain is one RE. FIG. 4A shows an example of DMRS configuration type 1 for a single-symbol DMRS.
- DMRS configuration type 2 is applicable to only CP-OFDM. A minimum RE group in the frequency domain is two consecutive REs. FIG. 4B shows an example of DMRS configuration type 2 for a single-symbol DMRS.

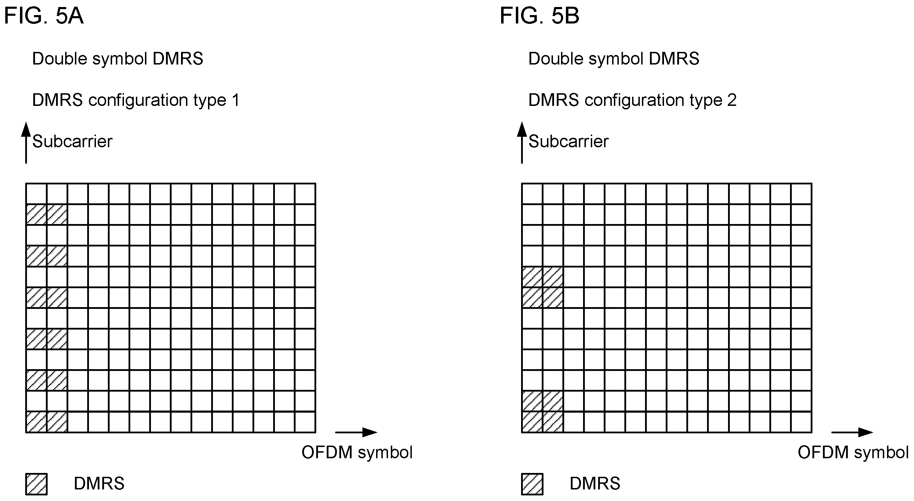

A single-symbol DMRS or a double-symbol DMRS is configured.
- The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured. In DMRS configuration type 1, a DMRS is arranged in one RE for each two consecutive REs in the frequency domain (FIG. 4A described above). In DMRS configuration type 2, DMRSs are arranged in two consecutive REs for each six consecutive REs in the frequency domain (FIG. 4B described above).
- The double-symbol DMRS is used for more DMRS ports (particularly, Multi-User Multi-Input Multi-Output (MU-MIMO)). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant. A DMRS is arranged in one RE for each two consecutive REs in the frequency domain. FIG. 5A shows an example of DMRS configuration type 1 for a double-symbol DMRS. In DMRS configuration type 2, DMRSs are arranged in two consecutive REs for each six consecutive REs in the frequency domain. FIG. 5B shows an example of DMRS configuration type 2 for a double-symbol DMRS.

For an additional DMRS (in the time domain), an additional DMRS position is configured by a higher layer parameter dmrs-AdditionalPosition.
- For example, in a case of a single-symbol DMRS, DMRS mapping type A, and dmrs-AdditionalPosition=pos0, the DMRS position is l_0. For example, in a case of a single-symbol DMRS, DMRS mapping type A, and dmrs-AdditionalPosition=pos1, and l_d = 10, the DMRS position is l_0, 9. For example, in a case of a single-symbol DMRS, DMRS mapping type A, dmrs-AdditionalPosition=pos3, and l_d = 12, the DMRS position is l_0, 5, 8, 11. For example, in a case of a single-symbol DMRS, DMRS mapping type B, and dmrs-AdditionalPosition=pos0, the DMRS position is l_0. For example, in a case of a single-symbol DMRS, DMRS mapping type B, dmrs-AdditionalPosition=pos3, and l_d = 7, the DMRS position is l_0, 4.
- For example, in a case of a double-symbol DMRS, DMRS mapping type A, and dmrs-AdditionalPosition=pos0, the DMRS position is l_0. For example, in a case of a double-symbol DMRS, DMRS mapping type A, and dmrs-AdditionalPosition=pos1, and l_d = 10, the DMRS position is l_0, 8. For example, in a case of a double-symbol DMRS, DMRS mapping type B, and dmrs-AdditionalPosition=pos0, the DMRS position is l_0. For example, in a case of a double-symbol DMRS, DMRS mapping type B, dmrs-AdditionalPosition=pos1, and l_d = 10, the DMRS position is l_0, 7.

A plurality of DMRS ports mapped to the same resource element (RE, time and frequency resources) are referred to as a DMRS code division multiplexing (CDM) group.

For a basic DMRS in Rel. 15, an enhanced DMRS is introduced in Rel. 18. The enhanced DMRS is configured by a higher layer parameter dmrs-TypeEnh.

There are some parameters below for DMRS ports.
- OCC type: A Walsh matrix is used for an OCC for the PDSCH. A cyclic shift is used for the OCC for the PUSCH.
- FD-OCC: As two FD-OCCs for the basic DMRS, W_f(0) to W_f(1) are used. As four FD-OCCs for the enhanced DMRS, W_f(0) to W_f(3) are used.
- TD-OCC: As two TD-OCCs for a double-symbol DMRS, W_t(0) to W_t(1) are used.

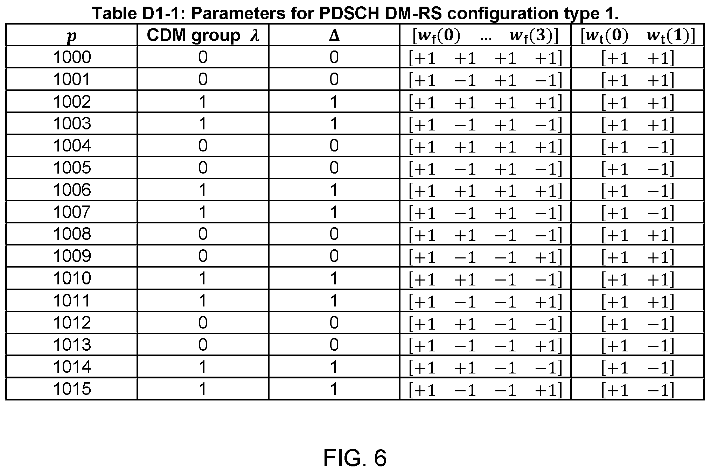

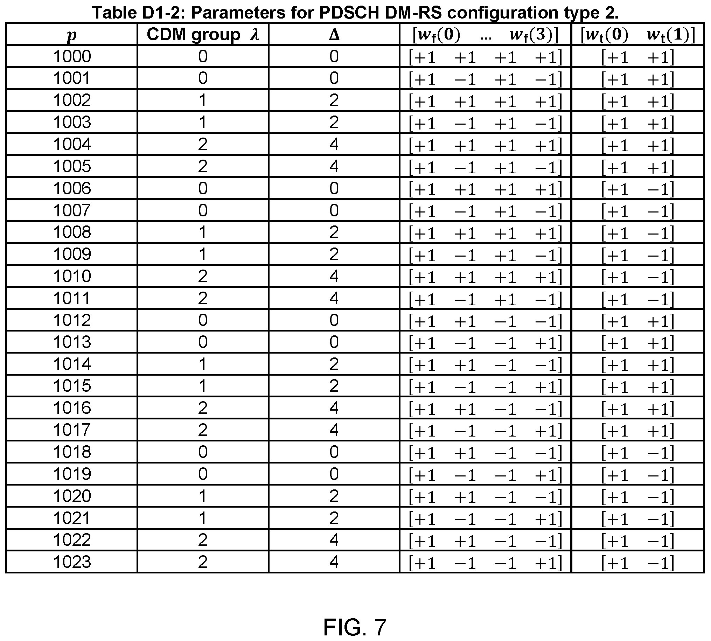

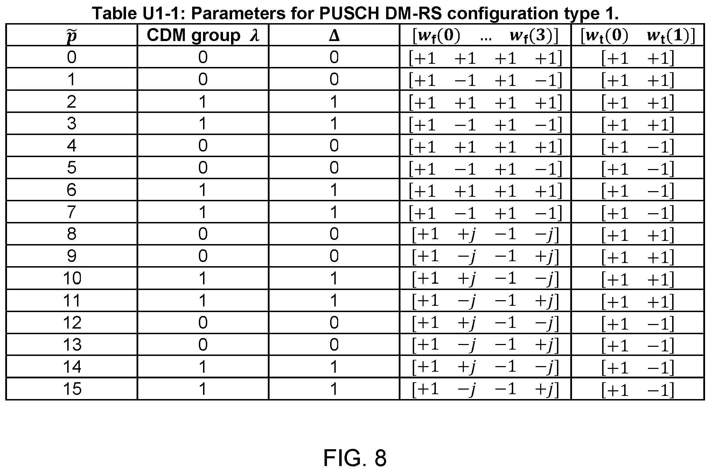

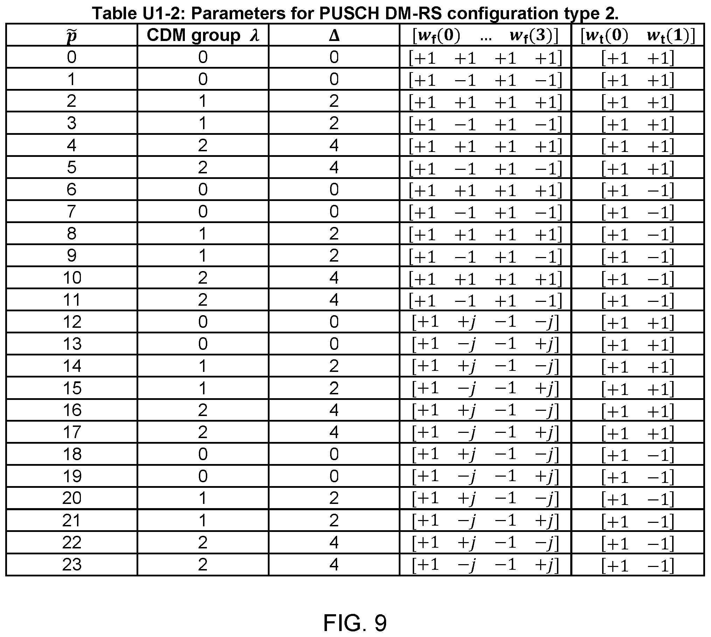

Each table of parameters for DMRSs includes PDSCH DMRS port p or PUSCH DMRS port p~, CDM group λ, Δ related to a frequency offset, FD-OCC W_{f}(k'), and TD-OCC Wₜ(l').
- Table D1-1 shown in FIG. 6 shows an example of parameters for PDSCH DMRS configuration type 1. A basic type 1 single-symbol DMRS uses ports 1000 to 1003. A basic type 1 double-symbol DMRS uses ports 1000 to 1007. An enhanced type 1 single-symbol DMRS uses ports 1000 to 1003 and 1008 to 1011. An enhanced type 1 double-symbol DMRS uses ports 1000 to 1015.
- Table D1-2 shown in FIG. 7 shows an example of parameters for PDSCH DMRS configuration type 2.
- Table U1-1 shown in FIG. 8 shows an example of parameters for PUSCH DMRS configuration type 1.
- Table U1-2 shown in FIG. 9 shows an example of parameters for PUSCH DMRS configuration type 2.

Some configurations below are possible for DMRSs.
- Configuration 1: basic DMRS, configuration type 1, single-symbol DMRS

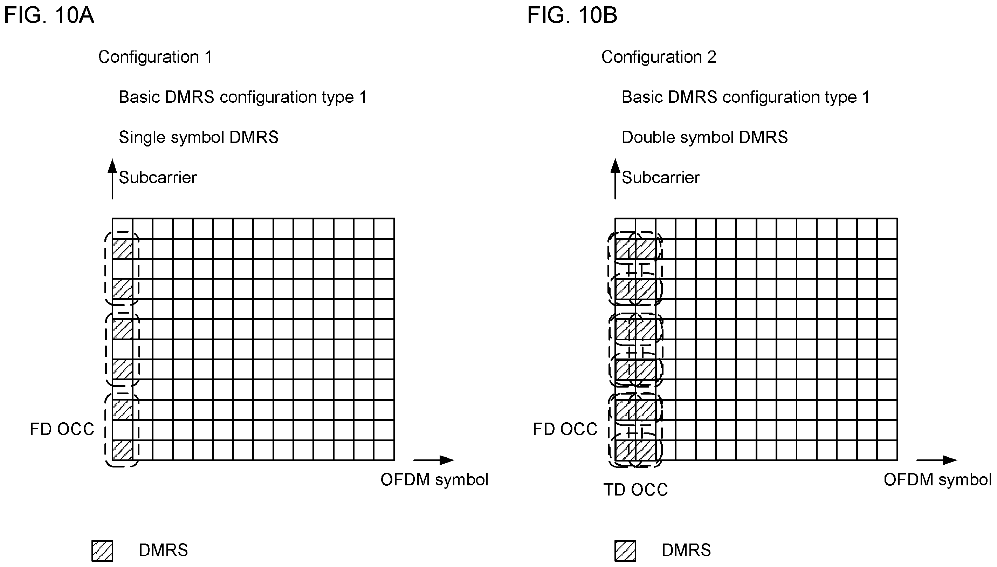

With FDM in two CDM groups and two FD-OCCs (length of 2), up to 4 DMRS ports are available (FIG. 10A).
- Configuration 2: basic DMRS, configuration type 1, double-symbol DMRS

With FDM in two CDM groups, two FD-OCCs (length of 2), and two TD-OCCs (length of 2), up to 8 DMRS ports are available (FIG. 10B).
- Configuration 3: basic DMRS, configuration type 2, single-symbol DMRS

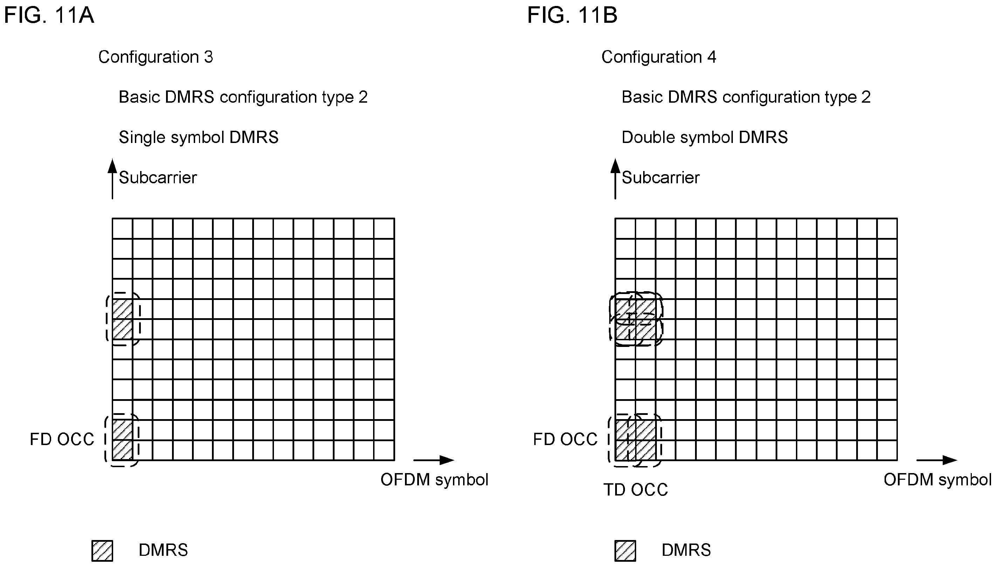

With FDM in three CDM groups and two FD-OCCs (length of 2), up to 6 DMRS ports are available (FIG. 11A).
- Configuration 4: basic DMRS, configuration type 2, double-symbol DMRS

With FDM in three CDM groups, two FD-OCCs (length of 2), and two TD-OCCs (length of 2), up to 12 DMRS ports are available (FIG. 11B).
- Configuration 5: enhanced DMRS, configuration type 1, single-symbol DMRS

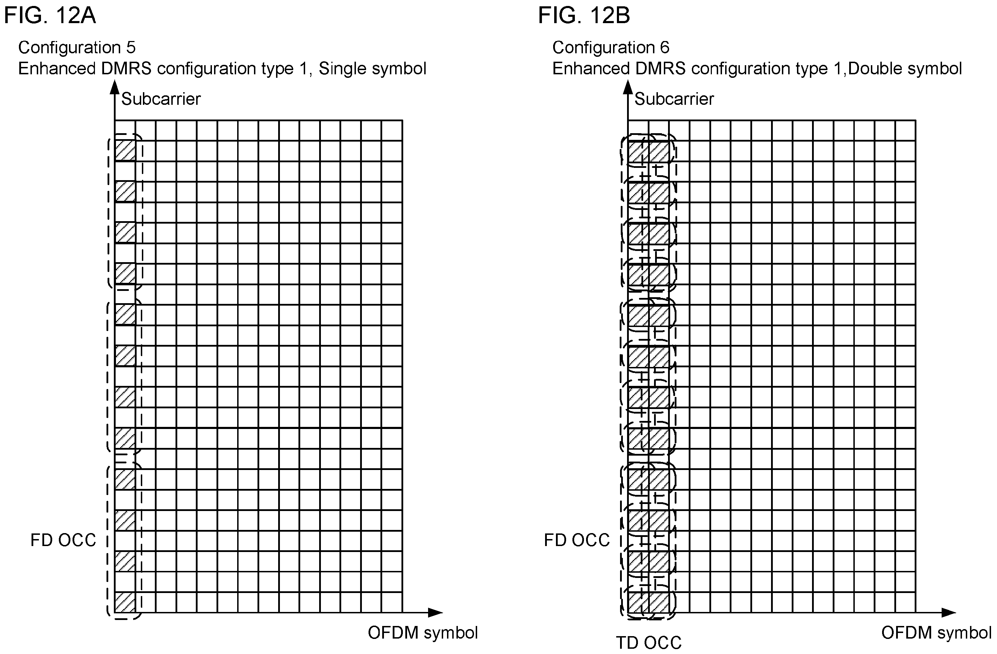

With FDM in two CDM groups and four FD-OCCs (length of 4), up to 8 DMRS ports are available (FIG. 12A).
- Configuration 6: enhanced DMRS, configuration type 1, double-symbol DMRS

With FDM in two CDM groups, four FD-OCCs (length of 4), and two TD-OCCs (length of 2), up to 16 DMRS ports are available (FIG. 12B).
- Configuration 7: enhanced DMRS, configuration type 2, single-symbol DMRS

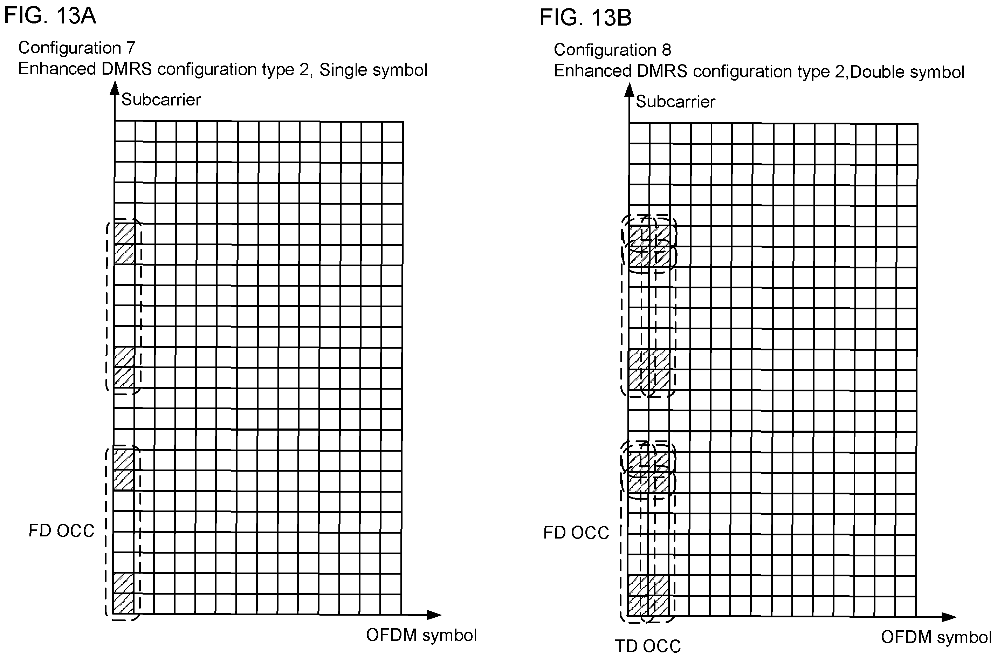

With FDM in three CDM groups and four FD-OCCs (length of 4), up to 12 DMRS ports are available (FIG. 13A).
- Configuration 8: enhanced DMRS, configuration type 2, double-symbol DMRS

With FDM in three CDM groups, four FD-OCCs (length of 4), and two TD-OCCs (length of 2), up to 24 DMRS ports are available (FIG. 13B).

In the present disclosure, an existing DMRS, an existing DMRS function, an existing DMRS type, an existing DMRS configuration type, dmrs-Type, DMRS configuration type 1/2, a DMRS with a length-2 FD-OCC, and a Rel-15 DMRS type may be interchangeably interpreted. In the present disclosure, an existing DMRS configuration type being configured, existing DMRS configuration type 1 or 2 being configured, and an enhanced DMRS type not being configured may be interchangeably interpreted. In the present disclosure, DMRS configuration type 1, DMRS type 1, DMRS type = 1, DMRS Type 1, and dmrs-Type set to type2 not being configured may be interchangeably interpreted. In the present disclosure, DMRS configuration type 2, DMRS type 2, DMRS type = 2, DMRS Type 2, and dmrs-Type set to type2 being configured may be interchangeably interpreted.

In the present disclosure, an enhanced DMRS, an enhanced DMRS function, an enhanced DMRS type, an enhanced DMRS configuration type, a configuration/higher layer parameter for an enhanced DMRS type, an enhanced DMRS type, enhanced-dmrs-Type_r18, dmrs-TypeEnh, enhanced DMRS configuration type 1/2, a DMRS with a length-4 FD-OCC, and a Rel-18 DMRS type may be interchangeably interpreted. In the present disclosure, an enhanced DMRS configuration type being configured, enhanced-dmrs-Type_r18 being configured, enhanced DMRS configuration type 1 or 2 being configured, and an enhanced DMRS type being configured may be interchangeably interpreted. In the present disclosure, enhanced DMRS configuration type 1, DMRS enhanced type 1, DMRS enhanced type = 1, DMRS eType 1, and an enhanced DMRS type being configured and dmrs-Type set to type2 not being configured may be interchangeably interpreted. In the present disclosure, enhanced DMRS configuration type 2, DMRS enhanced type 2, DMRS enhanced type = 2, DMRS eType 2, and an enhanced DMRS type being configured and dmrs-Type set to type2 being configured may be interchangeably interpreted.

In the present disclosure, a maximum DMRS length, maxLength, and the maximum number of OFDM symbols of a front-loaded DMRS may be interchangeably interpreted.

In the present disclosure, an FD-OCC and w_{f}(k') may be interchangeably interpreted. In the present disclosure, a TD-OCC, wₜ(l'), and a length-2 TD-OCC may be interchangeably interpreted.

In the present disclosure, an existing OCC, an existing FD-OCC, a length-2 FD-OCC, and a Rel-15 FD-OCC may be interchangeably interpreted. In the present disclosure, a new OCC, a new FD-OCC, an FD-OCC longer than 2, a Rel-18 FD-OCC, w_{f}(k'), and a length-4 FD-OCC may be interchangeably interpreted.

In the present disclosure, an existing DMRS port, a Rel-15 DMRS port, a DMRS port to which an existing FD-OCC is applied, a DMRS port within a range of existing DMRS port numbers, an existing DMRS port, and an existing DMRS may be interchangeably interpreted. In the present disclosure, a new DMRS port, a Rel-18 DMRS port, a DMRS port to which a new FD-OCC is applied, a DMRS port outside a range of existing DMRS port numbers, an enhanced DMRS port, and an enhanced DMRS may be interchangeably interpreted.

### (Frequency Domain Resources for DMRS)

A DMRS configuration in the frequency domain is represented by parameter k (subcarrier index).

k in the basic DMRS is calculated by the following equation. Here, Δ is related to a CDM group ID. CDM group 0 corresponds to Δ = 0, CDM group 1 corresponds to Δ = 1, and CDM group 2 corresponds to Δ = 4. $k = 4 n + 2 k ′ + Δ \left(configuration type 1\right)$ $k = 6 n + k ′ + Δ \left(configuration type 2\right)$ $k ′ = 0 , 1$ $n = 0 , 1 , …$

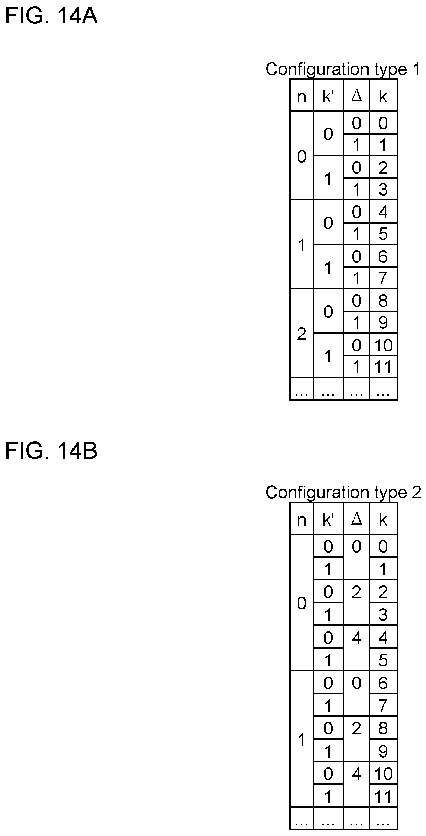

As shown in FIG. 14A, k for basic DMRS configuration type 1 is determined. CDM group 0 is arranged in REs with k = 0, 2, 4, 6, ..., and CDM group 1 is arranged in REs with k = 1, 3, 5, 7, ....

As shown in FIG. 14B, k for basic DMRS configuration type 2 is determined. CDM group 0 is arranged in REs with k = 0, 1, 6, 7, ..., CDM group 1 is arranged in REs with k = 2, 3, 8, 9, ..., and CDM group 2 is arranged in REs with k = 4, 5, 10, 11, ....

k in the enhanced DMRS is calculated by the following equation. Here, Δ is related to a CDM group ID. $k = 8 n + 2 k ′ + Δ \left(configuration type 1\right)$ $k = 12 n + k ′ + Δ \left(configuration type 2, k′=0, 1\right)$ $k = 12 n + k ′ + Δ + 4 \left(configuration type 2, k′=2, 3\right)$ $k ′ = 0 , 1 , 2 , 3$ $n = 0 , 1 , …$

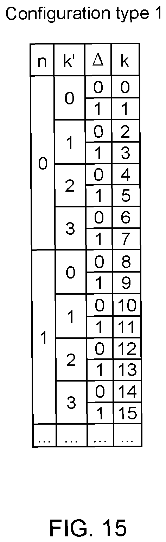

As shown in FIG. 15, k for enhanced DMRS configuration type 1 is determined. CDM group 0 is arranged in REs with k = 0, 2, 4, 6, 8, 10, 12, 14, ..., and CDM group 1 is arranged in REs with k = 1, 3, 5, 7, 9, 11, 13, 15, ....

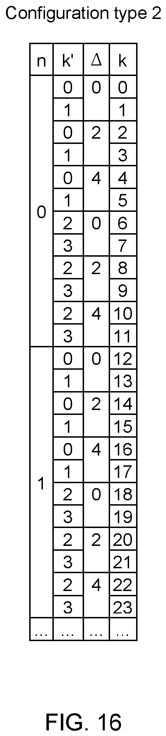

As shown in FIG. 16, k for enhanced DMRS configuration type 2 is determined. CDM group 0 is arranged in REs with k = 0, 1, 6, 7, 12, 13, ..., CDM group 1 is arranged in REs with k = 2, 3, 8, 9, 14, 15, ..., and CDM group 2 is arranged in REs with k = 4, 5, 10, 11, 16, 17, ....

### (Time Domain Resources for DMRS)

In an existing specification, a DMRS configuration in a time domain is represented by parameter l (symbol index). Mapping of a DMRS in the frequency domain and the time domain is calculated by the following equation.
- When a higher layer parameter dmrs-TypeEnh is configured (enhanced DMRS), $α {{∼}_{k , l}}^{\left(p_j, μ\right)} = {w}_{f} \left(k′\right) {w}_{t} \left(l′\right) r \left(4n+k′\right)$ $k = 8 n + 2 k ′ + Δ \left(configuration type 1\right)$ $k = 12 n + k ′ + Δ \left(configuration type 2, k′=0, 1\right)$ $k = 12 n + k ′ + Δ + 4 \left(configuration type 2, k′=2, 3\right)$ $k ′ = 0 , 1 , 2 , 3$ $l ′ = {l}^{-} + l ′$ $n = 0 , 1 , …$ $j = 0 , 1 , … , v - 1$
- Otherwise (basic DMRS), $α {{∼}_{k , l}}^{\left(p_j, μ\right)} = {w}_{f} \left(k′\right) {w}_{t} \left(l′\right) r \left(2n+k′\right)$ $k = 4 n + 2 k ′ + Δ \left(configuration type 1\right)$ $k = 6 n + k ′ + Δ \left(configuration type 2\right)$ $k ′ = 0 , 1 , 2 , 3$ $l ′ = {l}^{-} + l ′$ $n = 0 , 1 , …$ $j = 0 , 1 , … , v - 1$
   l⁻ represents a position of the DMRS in the time domain.
   l' = 0 for a single-symbol DMRS. l' = 0, 1 for a double-symbol DMRS.

Reference point l and position l₀ of the first DMRS symbol depend on a mapping type.
- For PDSCH mapping type A, l and l₀ follow the following.
   -- l is defined for a start of a slot.
   -- When a higher layer parameter dmrs=TypeA-Position is equal to 'pos3,' l₀ = 3. Otherwise, l₀ = 2.
- For PDSCH mapping type B, l and l₀ follow the following.
   -- l is defined for a start of a scheduled PDSCH resource.
   -- l₀ = 0.

A position of a DMRS symbol is given by l⁻ and duration l_{d}. Here l_{d} follows the following.
- For PDSCH mapping type A, l_{d} is duration between the first OFDM symbol of the slot and the last OFDM symbol of a scheduled PDSCH resource in the slot.
- For PDSCH mapping type B, l_{d} is duration of a scheduled PDSCH resource.

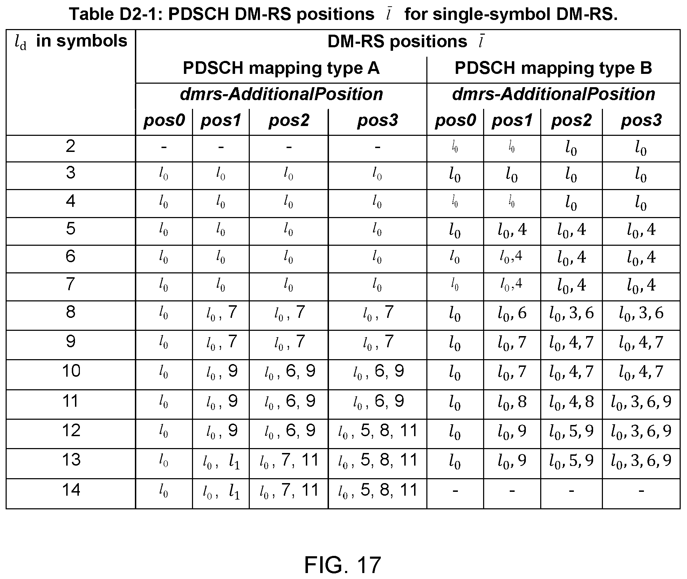

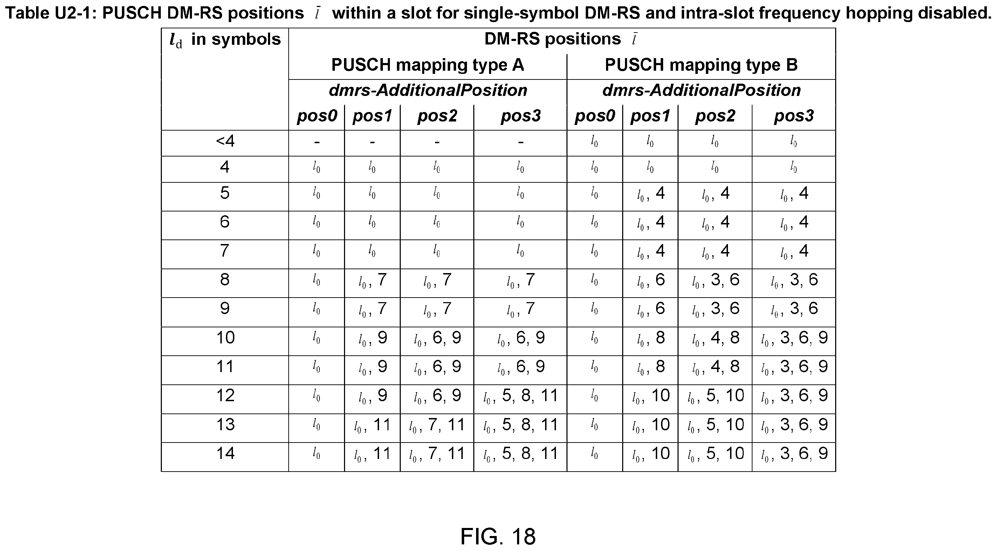

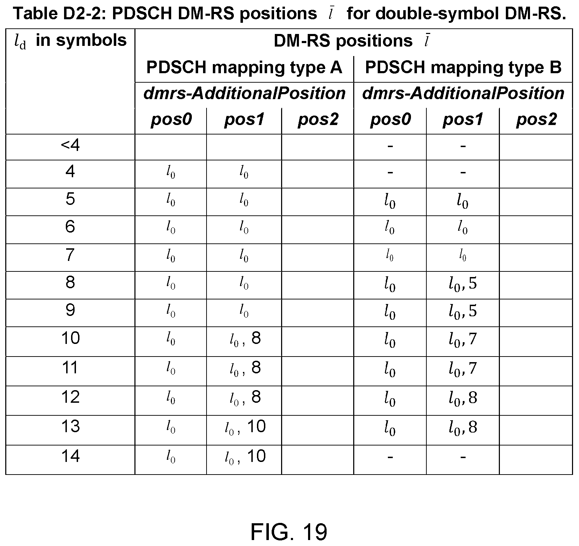

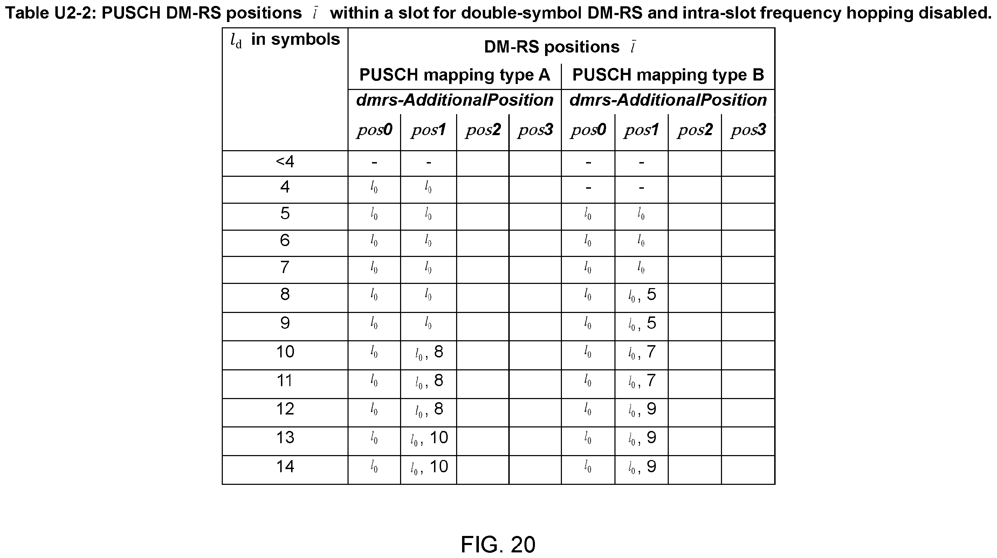

FIG. 17 shows table D2-1 for PDSCH DMRS positions in a single-symbol DMRS. FIG. 18 shows table U2-1 for PUSCH DMRS positions in a single-symbol DMRS. l- is determined based on a mapping type, dmrs-AddtionalPosition, and l_d. The maximum number of available positions is 4. FIG. 19 shows table D2-2 for PDSCH DMRS positions in a double-symbol DMRS. FIG. 20 shows table U2-2 for PUSCH DMRS positions in a double-symbol DMRS.

### (Code Domain Resources for DMRS)

In an existing specification, a DMRS configuration in a code domain is represented by parameters w_{f}(k') and wₜ(l').

A value (sequence) for the DMRS is represented by α~_{k,l}^{(p_j,µ)} and is given by the following equation.
- When a higher layer parameter dmrs-TypeEnh is configured (enhanced DMRS), $α {{∼}_{k , l}}^{\left(p_j, μ\right)} = {w}_{f} \left(k′\right) {w}_{t} \left(l′\right) r \left(4n+k′\right)$
- Otherwise (basic DMRS), $α {{∼}_{k , l}}^{\left(p_j, μ\right)} = {w}_{f} \left(k′\right) {w}_{t} \left(l′\right) r \left(2n+k′\right)$

w_{f}(k') (FD-OCC) and wₜ(l') (TD-OCC) are given by table D1-1/D1-2 described above.

r(n) is represented using quasi-random sequence c(n).

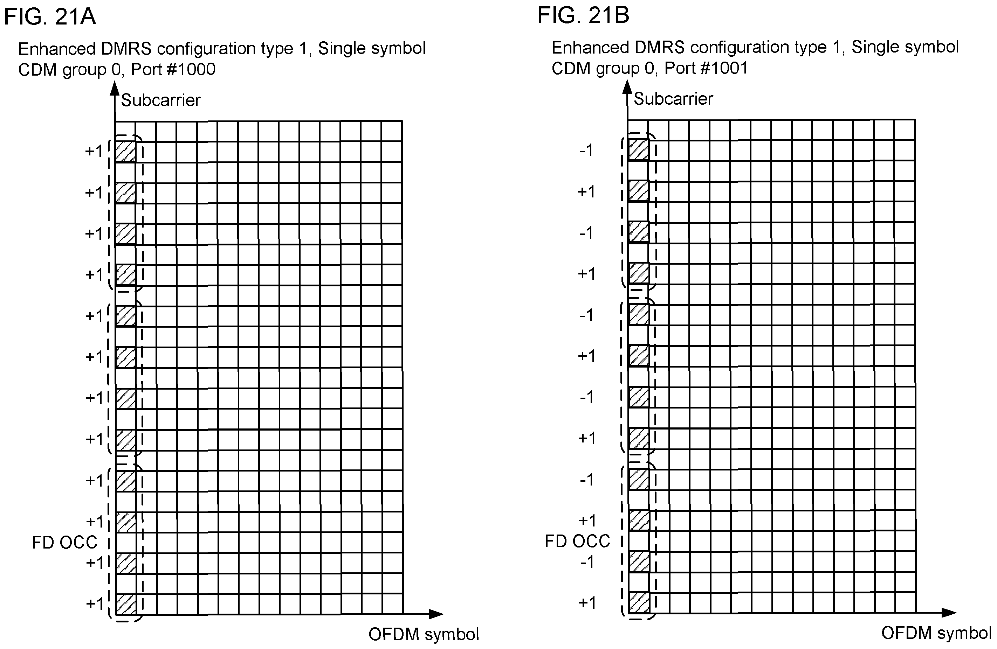

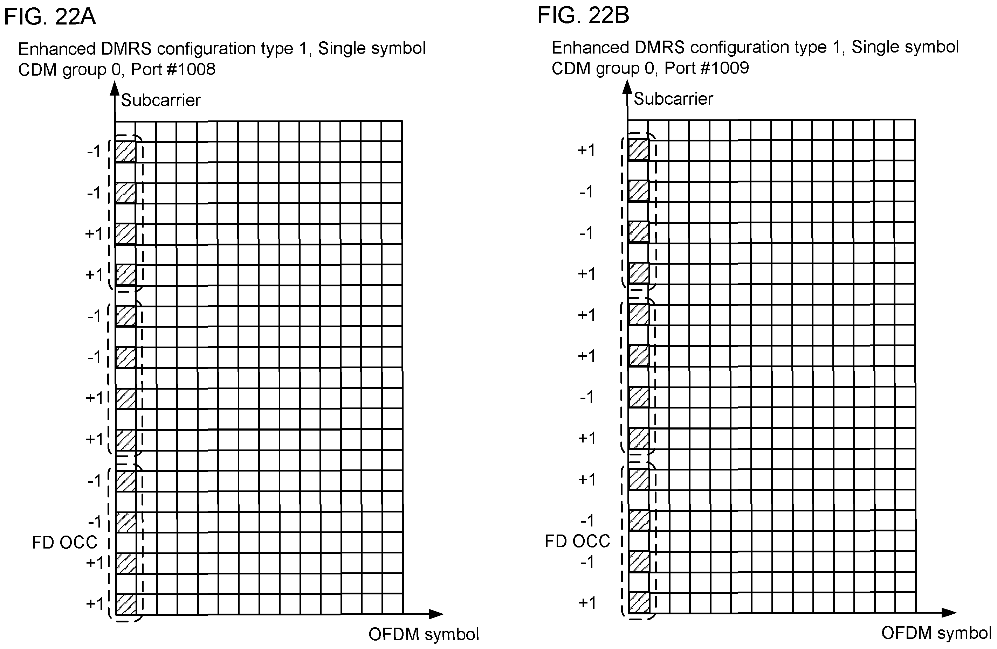

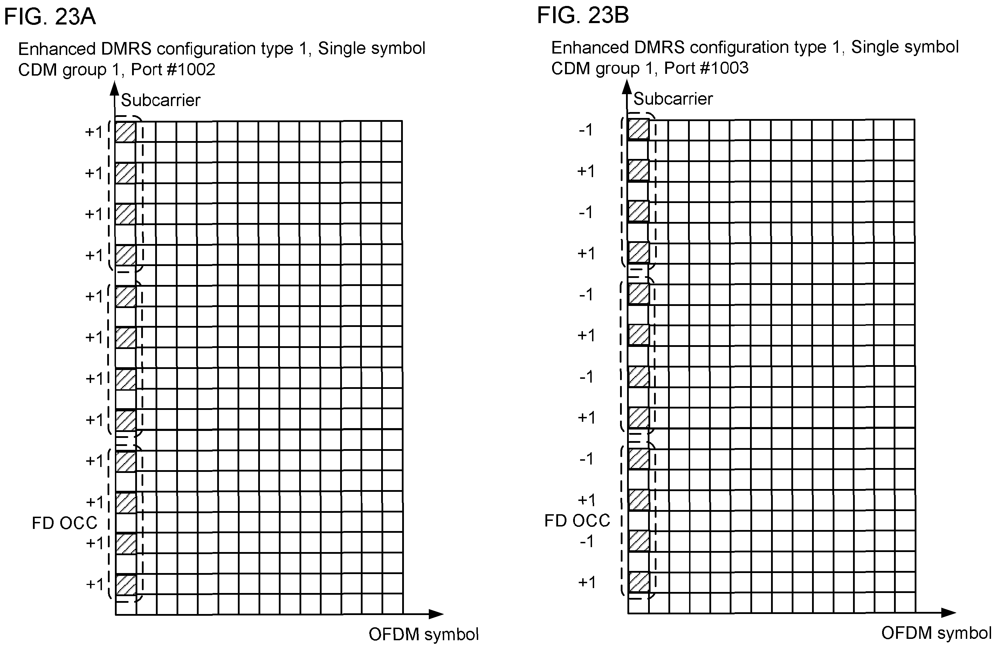

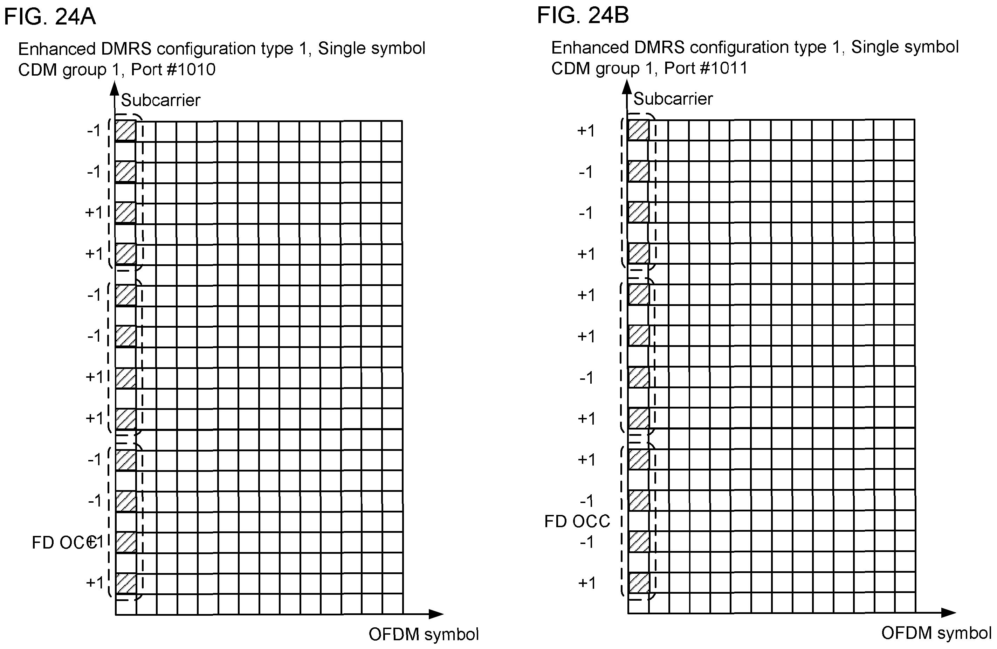

FIG. 21A and FIG. 21B show FD-OCCs for CDM group 0 (ports #1000, #1001) for a single-symbol DMRS of PDSCH DMRS enhanced type 1. FIG. 22A and FIG. 22B show FD-OCCs for CDM group 0 (ports #1008, #1009) for a single-symbol DMRS of PDSCH DMRS enhanced type 1. FIG. 23A and FIG. 23B show FD-OCCs for CDM group 1 (ports #1002, #1003) for a single-symbol DMRS of PDSCH DMRS enhanced type 1. FIG. 24A and FIG. 24B show FD-OCCs for CDM group 1 (ports #1010, #1011) for a single-symbol DMRS of PDSCH DMRS enhanced type 1.

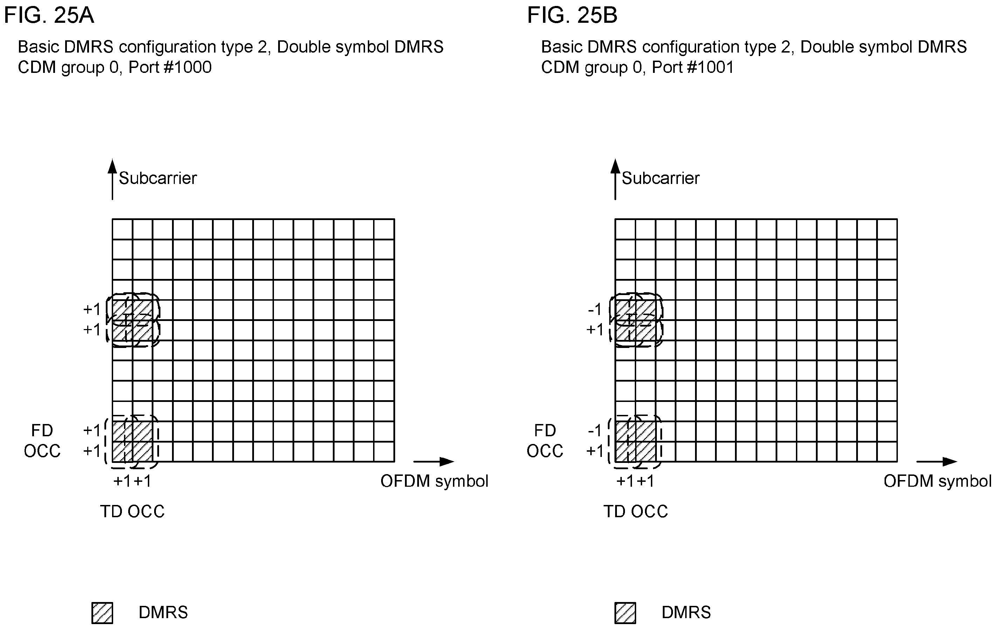

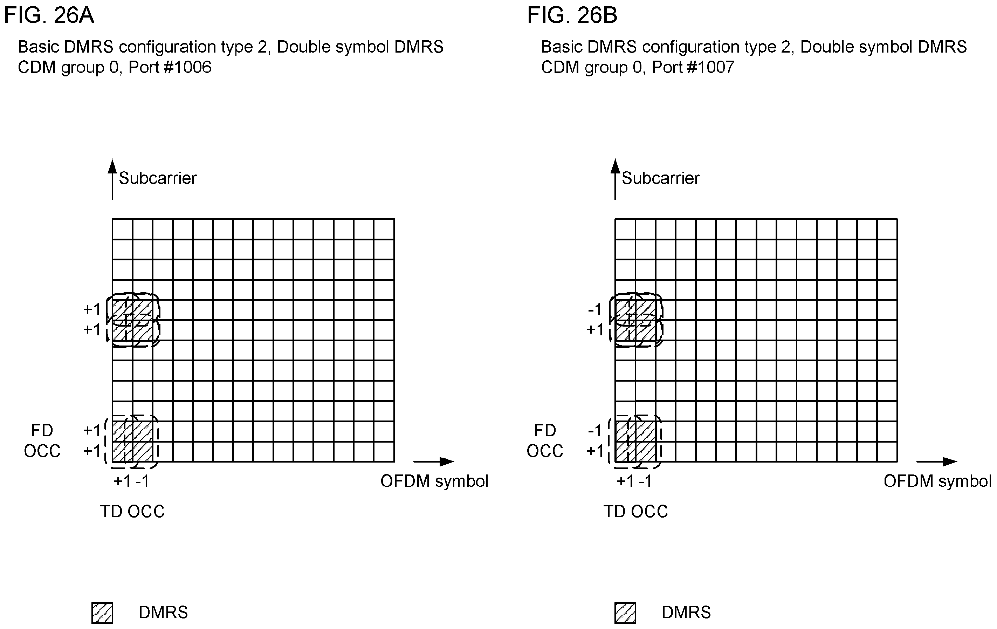

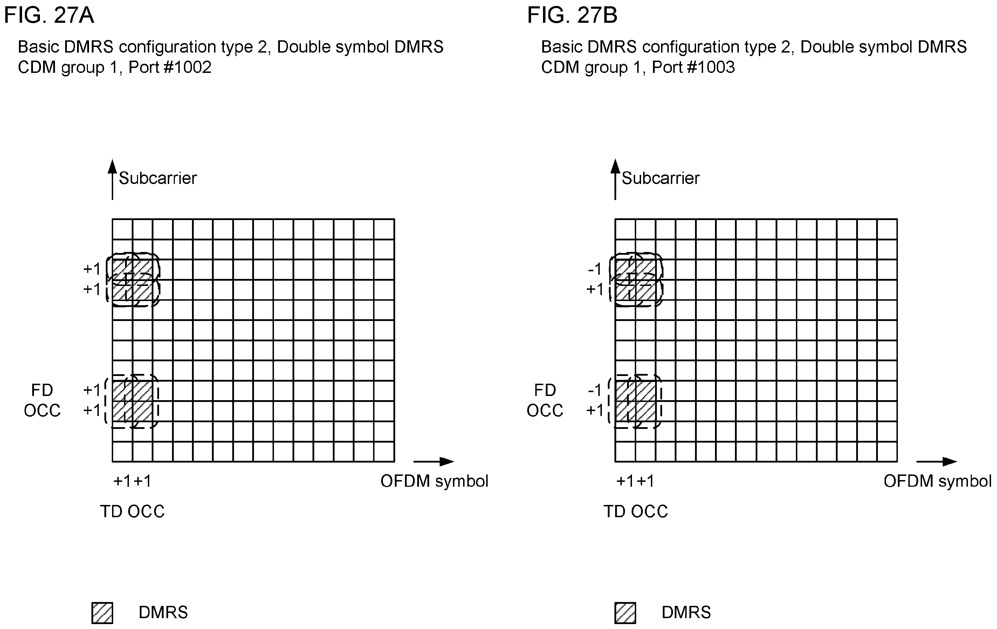

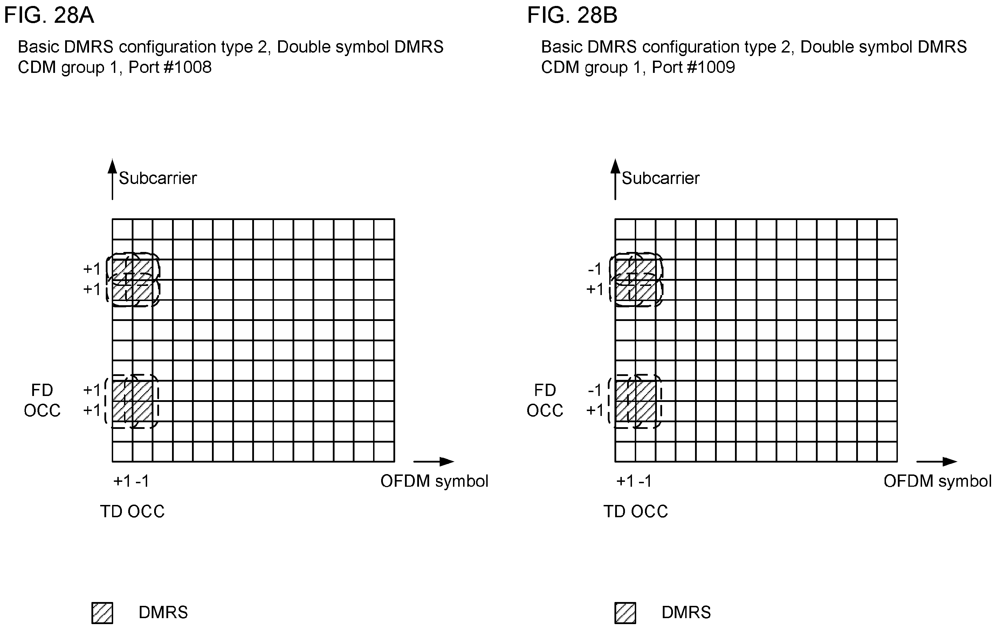

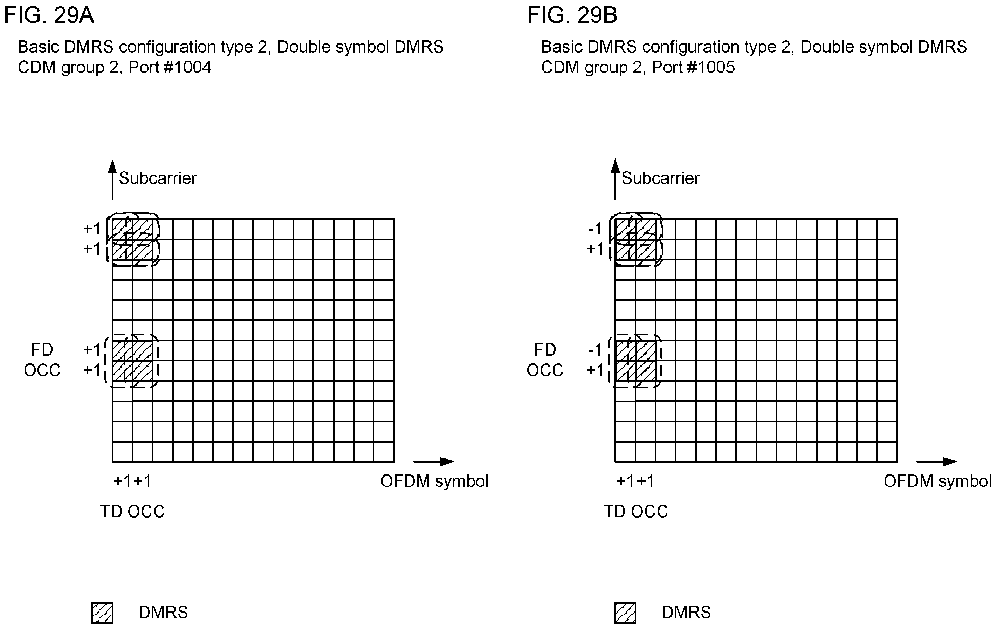

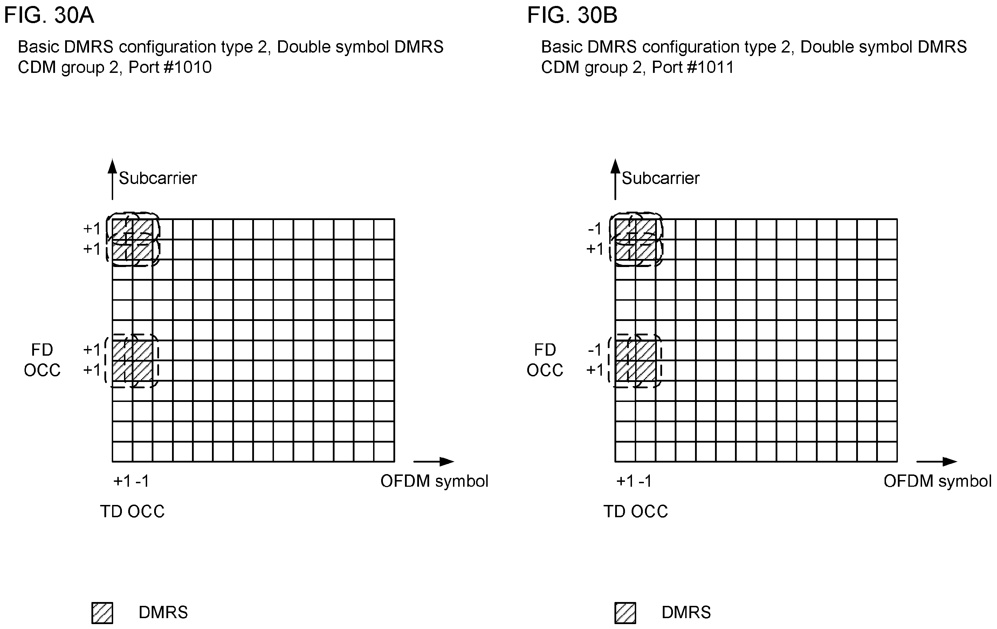

FIG. 25A and FIG. 25B show FD-OCCs and TD-OCCs for CDM group 0 (ports #1000, #1001) for a double-symbol DMRS of PDSCH DMRS basic type 2. FIG. 26A and FIG. 26B show FD-OCCs and TD-OCCs for CDM group 0 (ports #1006, #1007) for a double-symbol DMRS of PDSCH DMRS basic type 2. FIG. 27A and FIG. 27B show FD-OCCs and TD-OCCs for CDM group 1 (ports #1002, #1003) for a double-symbol DMRS of PDSCH DMRS basic type 2. FIG. 28A and FIG. 28B show FD-OCCs and TD-OCCs for CDM group 1 (ports #1008, #1009) for a double-symbol DMRS of PDSCH DMRS basic type 2. FIG. 29A and FIG. 29B show FD-OCCs and TD-OCCs for CDM group 2 (ports #1004, #1005) for a double-symbol DMRS of PDSCH DMRS basic type 2. FIG. 30A and FIG. 30B show FD-OCCs and TD-OCCs for CDM group 2 (ports #1010, #1011) for a double-symbol DMRS of PDSCH DMRS basic type 2.

### (DMRS Power Boosting)

For a UL DMRS, intermediate quantity α~_{k,l}^{(p_j,µ)} is precoded, is multiplied by amplitude scaling factor β_{PUSCH}^{DMRS} so that transmission power is matched, and is mapped to physical resources. α_{k,l}^{(p_j,µ)} based on α~_{k,l}^{(p_j,µ)} is given by the following equation. $\left[\begin{matrix}{a}_{k , l}^{\left({p}_{0}, μ\right)} \\ ⋮ \\ {a}_{k , l}^{\left({p}_{ρ - 1}, μ\right)}\end{matrix}\right] = {β}_{PUSCH}^{DMRS} W \left[\begin{matrix}{{a}^{˜}}_{k , l}^{\left({{p}^{˜}}_{0}, μ\right)} \\ ⋮ \\ {{a}^{˜}}_{k , l}^{\left({{p}^{˜}}_{υ - 1}, μ\right)}\end{matrix}\right]$ (E1)

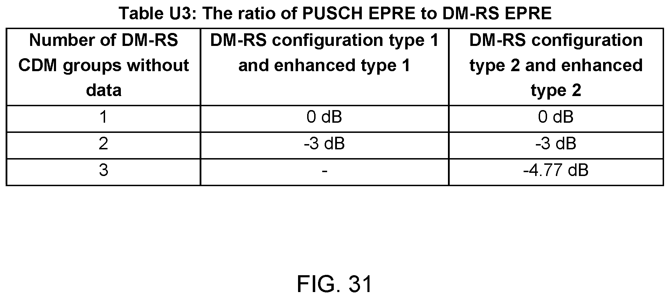

For the UL DMRS with a PUSCH, a UE assumes that the ratio of PUSCH EPRE to DMRS energy per resource element (EPRE) (β_{DMRS} [dB]) is given by table U3 in FIG. 31, according to the number of DMRS CDM groups without data. DMRS scaling factor β_{PUSCH}^{DMRS} is given by β_{PUSCH}^{DMRS} = 10^{-β_DMRS/20}.

For a DL DMRS, the UE assumes that sequence r(m) is scaled by factor β_{PDSCH}^{DMRS} so that transmission power is matched.

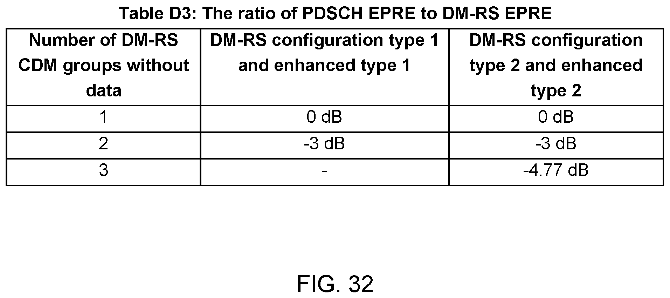

For the DL DMRS with a PDSCH, the UE assumes that the ratio of PDSCH EPRE to DMRS EPRE (β_{DMRS} [dB]) is given by table D3 in FIG. 32, according to the number of DMRS CDM groups without data. DMRS scaling factor β_{PDSCH}^{DMRS} is given by β_{PDSCH}^{DMRS} = 10^{-β_DMRS/20}.

In each layer, power for a DMRS allocated to a CDM group other than a specific CDM group is set to 0, and thus reserved power for the DMRS originally allocated to such another CDM group can be used to increase transmission power for a DMRS in the specific CDM group.

### (PDSCH Processing Time in UE)

The UE provides a valid HARQ-ACK message when, as defined by allocated HARQ-ACK timing K₁ and K_{offset}, the first UL symbol for a PUCCH delivering HARQ-ACK information, and a PUCCH resource to be used and including the effect of timing advance start after symbol L₁. Here, L₁ is defined as a next UL symbol with a CP start T_{proc,1} = (N₁ + d_{1,1} + d₂)(2048 + 144) · κ2^{-µ} · T_{C} + Tₑₓₜ later than an end of the last symbol for a PDSCH carrying a recognized TB.

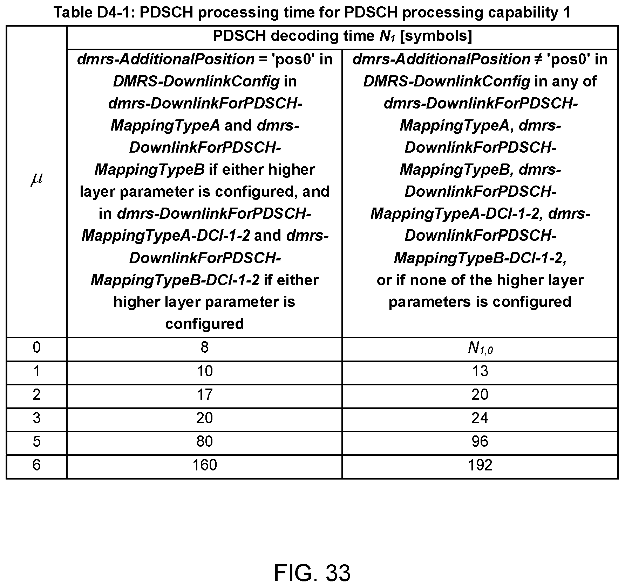

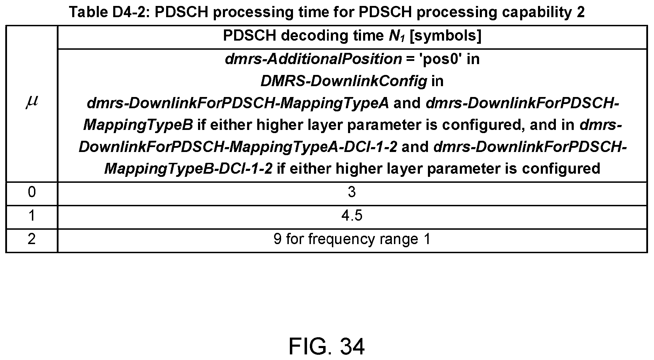

N₁ is based on µ for table D4-1 (FIG. 33) corresponding to UE processing capability 1 and table D4-2 (FIG. 34) corresponding to UE processing capability 2. Here, µ corresponds to one of (µ_{PDCCH}, µ_{PDSCH}, µ_{UL}) leading to largest T_{proc,1}. µP_{DCCH} corresponds to a subcarrier interval for a PDCCH for scheduling the PDSCH. µ_{PDSCH} corresponds to a subcarrier interval for the scheduled PDSCH. µU_{L} corresponds to a subcarrier interval for a UL channel on which HARQ-ACK is assumed to be transmitted irrespective of whether PDSCH reception provides a transport block for a HARQ process with HARQ-ACK information disabled to be indicated by HARQ-feedbackEnabling-disablingperHARQprocess.

### (Improvement of DMRS)

For Rel. 18, it has been studied to support a larger number of orthogonal DMRS ports in DL and UL multi-user (MU)-multi-input multi-output (MIMO) (without increasing DMRS overhead) and to support up to 24 orthogonal DMRS ports.

In some typical scenarios in next-generation radio communication systems, ensuring decoding performance of receivers requires increase of DMRSs in at least one of a frequency domain, a time domain, and a code domain. The typical scenarios are, for example, a high-frequency scenario, a high-speed scenario, and multiple DMRS ports in an FR3 scenario.

Increase in resources occupied by DMRSs reduces resources available for transmission data in PUSCHs/PDSCHs and reduces data throughput in radio communication systems.

In order to detect signals efficiently at receivers, some known signals are transmitted in an RE at a fixed time and frequency. The RE is recognized as a DMRS in the 5G standard.

Conventional channel estimation using a DMRS may be performed by following two steps.
- Estimating a channel in the DMRS
- Expanding the channel estimation to all other REs

New applications, for example, next-generation communication systems for immersive communications have higher throughput requirements, and two solutions are considered.
- More REs are allocated to data to be transmitted.
- More antenna ports transmit more data streams on the same time-frequency resource.

Both of the solutions require that, for some of the following, a DMRS density in each data stream is reduced.
- Saving, for data to be transmitted, some REs originally occupied by DMRSs
- Supporting a DMRS for an additional antenna port

There is a limit to the performance of conventional channel estimation algorithms related to a DMRS, and there is a non-linear relationship between an RE for the DMRS and another RE, and thus the conventional channel estimation algorithms become relatively worse when a DMRS density is reduced.

Thus, the inventors of the present invention studied design/configuration of a DMRS based on a channel estimation capability, and came up with the idea of an embodiment.

By utilizing a powerful capability of AI/ML related to prediction of a non-linear relationship, the performance of AI/ML-based channel estimation is higher than that of the conventional channel estimation algorithms. It is considered that AI/ML-based channel estimation greatly reduces DMRS resource utilization. A scheme of each embodiment can design DMRS patterns and CDM groups corresponding to different AI/ML functionalities/models (IDs) in detail.

AI/ML-based channel estimation can improve the performance, as compared with a conventional channel estimation method. A theoretical minimum mean square error (MMSE) value is the best theoretical channel estimation performance. The performance can be made closer to the theoretical MMSE value by the AI/ML-based channel estimation.

Another AI/ML-based module, for example, AI/ML-based detection can further improve transmission/reception performance.

Enhancement of an AI/ML receiver (not limited to a channel estimation module) can reduce DMRSs for each data stream.

A DMRS of each embodiment can be applied to at least one of a PDSCH and a PUSCH.

Embodiments according to the present disclosure will be described in detail with reference to the drawings as follows. The radio communication methods according to respective embodiments may each be employed individually, or may be employed in combination.

### (Various Interpretations)

In the present disclosure, wording in "()" in a sentence may indicate a description of the immediately preceding wording (for example, a description of the spell), rewording, a specific example, a supplementary explanation, and the like. In the present disclosure, regarding wording in "[]" in a sentence, meaning of the entire sentence may be interpreted including such wording, or meaning of the entire sentence may be interpreted without including (by ignoring) such wording. Note that "()" and "[]" may be used for a purpose/meaning other than these.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, ceil(x) and a ceiling function may be interchangeably interpreted. In the present disclosure, floor(x) and a floor function may be interchangeably interpreted. In the present disclosure, sqrt(x) and a square root (root) may be interchangeably interpreted. In the present disclosure, x mod y, mod (x, y), a mod function, and a modulo operation may be interchangeably interpreted. In the present disclosure, Σ_{i=M}^{M+N-1}f(i), Σ_{i=M}^{M+N-1}fᵢ, the summation of f(i) or fᵢ over i = M, M + 1, ..., M + N - 1, f(M) + f(M + 1) + ... + f(M + N - 1), and f_{M} + f_{M+1} + ... + f_{M+N-1} may be interchangeably interpreted. C(n, k), the number of combinations (combinatorial coefficient) to select k values from n values, binomial coefficients, ₙCₖ, and Cₙ^{k} may be interchangeably interpreted. In the present disclosure, x//y and floor(x/y) may be interchangeably interpreted.

In the present disclosure, a_{b}, a_b, and a representation of a with b attached at the lower right thereof may be interchangeably interpreted. In the present disclosure, a^{c}, a^c, and a representation of a with c attached at the upper right thereof may be interchangeably interpreted. In the present disclosure, a_{b}^{c}, a_b^c, and a representation of a with b attached at the lower right thereof and c attached at the upper right thereof may be interchangeably interpreted. In the present disclosure, x~ may be expressed by adding "~" above x, or may be referred to as x tilde. In the present disclosure, x⁻ may be expressed by adding "-" above x, or may be referred to as x bar.

In the present disclosure, FR may be, for example, at least one of FR1, FR2, FR2-1, FR2-2, FR3, sub-terahertz, and terahertz. In the present disclosure, a frequency range corresponding to FR1 may be 410 to 7125 MHz. In the present disclosure, FR2 may include FR2-1 and FR2-2, a frequency range corresponding to FR2-1 may be 24250 to 52600 MHz, and a frequency range corresponding to FR2-1 may be 52600 to 71000 MHz.

In the present disclosure, a base station (BS), a gNB, and a network (NW) may be interchangeably interpreted.

In the present disclosure, a function, a functionality, and a model may be interchangeably interpreted.

In the present disclosure, a frequency domain position, an RE, a subcarrier, an RE index, and a subcarrier index may be interchangeably interpreted. In the present disclosure, a time domain position, a symbol, and a symbol index may be interchangeably interpreted.

In the present disclosure, DMRS configuration in a frequency domain, a table for DMRS configuration in a frequency domain, DMRS frequency domain configuration, DMRS subcarrier position configuration, and DMRS configuration may be interchangeably interpreted. In the present disclosure, DMRS configuration in a time domain, a table for DMRS configuration in a time domain, DMRS time domain configuration, DMRS symbol position configuration, and DMRS configuration may be interchangeably interpreted. In the present disclosure, DMRS configuration in a code domain, a table for DMRS configuration in a code domain, DMRS code domain configuration, CDM configuration, OCC configuration, and DMRS configuration may be interchangeably interpreted.

In the present disclosure, a specific configuration, an existing specification, and a Rel-15/Rel-18 DMRS configuration may be interchangeably interpreted. In the present disclosure, a specific DMRS, a DMRS in compliance with an existing specification, and a Rel-15/Rel-18 DMRS may be interchangeably interpreted.

In the present disclosure, a reserved DMRS resource, a (time/frequency) DMRS resource determined based on a specification (table), and a (time/frequency) DMRS resource indicated in a specification (table) may be interchangeably interpreted.

In the present disclosure, PDSCH DMRS port number 1000 + p and PUSCH DMRS port number p may be interchangeably interpreted.

### (Radio Communication Method)

In each embodiment, data (PDSCH/PUSCH) may be arranged for resources in which DMRSs are not arranged.

In each embodiment, a procedure applied to a PDSCH may be applied to a PUSCH. In each embodiment, a procedure applied to a PUSCH may be applied to a PDSCH.

### <Embodiment 1>

The present embodiment relates to a new DMRS configuration in a frequency domain. The configuration may correspond to a certain AI/ML functionality/model (ID).

The present embodiment may regularly improve an interval between a plurality of DMRS frequency resources by passing through a sparse (dilution, thinning) factor for DMRSs in an existing specification.

According to the present embodiment, DMRS resources configured for DMRS ports/CDM groups can be reduced in the frequency domain.

In the present disclosure, a multiplexing group interval is a difference (minimum interval) between the first subcarrier indices of two FD-OCCs to be FDMed in the same CDM group. In the present disclosure, the multiplexing group interval, an inter-FD-OCC interval, and an FD-OCC offset may be interchangeably interpreted.

In the present disclosure, an inter-group interval is a difference (minimum interval) between the first subcarrier indices of two CDM groups. In the present disclosure, the inter-group interval and a group offset may be interchangeably interpreted.

In the present disclosure, an intra-group interval is a difference (minimum interval) between two subcarrier indices in one FD-OCC. In the present disclosure, the intra-group interval, an intra-FD-OCC interval, an inter-subcarrier interval, and a subcarrier offset may be interchangeably interpreted.

Reduction of DMRSs configured for DMRS ports/CDM groups in a time domain may follow at least one of some embodiments 1-x below.

### <<Embodiment 1-1>>

The present embodiment reduces DMRS resources configured for respective DMRS ports, by using the same DMRS density (for a plurality of CDM groups). The present embodiment may follow at least one of some options below.

### - Option 1

A multiplexing group interval is increased, an intra-group interval is maintained, and an inter-group interval is maintained. This option may be applied to at least one of some cases below.

### -- Case 1: basic DMRS type 1

k may follow at least one of some equations below.

### --- Equation 0: k may be calculated by the following equation.

$k = \left(4+s\right) n + 2 k ′ + Δ \left(configuration type 1\right)$ $k ′ = 0 , 1$ $n = 0 , 1 , …$ $s ∈ \left\{0, 1, …\right\}$

s may be configured by a NW, or may be defined by a specification.

4 + s may represent the multiplexing group interval.

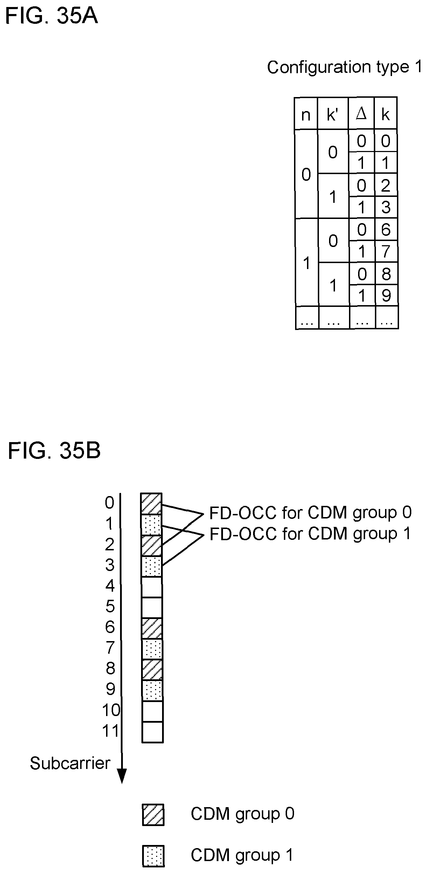

In an example in FIG. 35A, s = 2, and k is determined based on n = 0, 1, ..., k' = 0, 1, and Δ = 0, 1. In this case, as shown in FIG. 35B, CDM group 0 may be arranged in REs with k = 0, 2, 6, 8, ..., and CDM group 1 may be arranged in REs with k = 1, 3, 7, 9, .... The multiplexing group interval is increased from an existing value of 4 to 6.
--- Equation 1: Equation 0 in a case where s is a multiple of 4 may be changed based on an existing equation for a basic DMRS, and n may be set to a multiple of (s/4 + 1). k may be calculated by the following equation. $k = 4 n + 2 k ′ + Δ \left(configuration type 1\right)$ $k ′ = 0 , 1$ $n = 0 , \left(s/4+1\right) , 2 \left(s/4+1\right) , … , if s mod 4 = 0$

s may be configured by the NW. s may be defined by the specification.

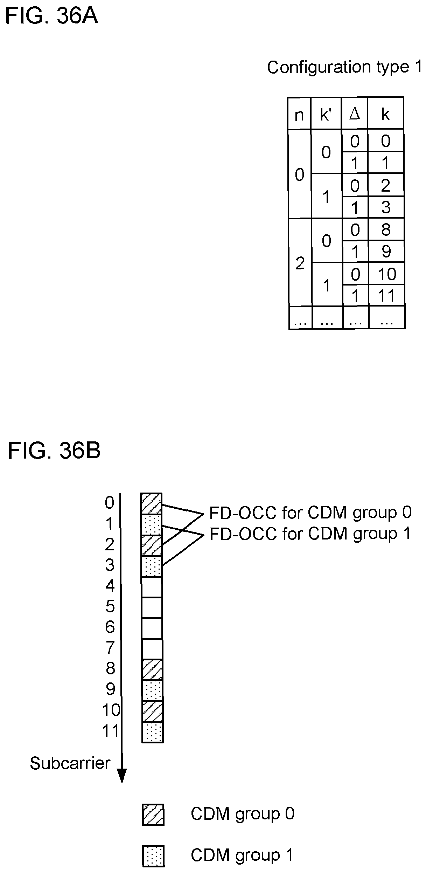

In an example in FIG. 36A, s = 4, and k is determined based on n = 0, 2, ..., k' = 0, 1, and Δ = 0, 1. In this case, as shown in FIG. 36B, CDM group 0 may be arranged in REs with k = 0, 2, 8, 10, ..., and CDM group 1 may be arranged in REs with k = 1, 3, 9, 11, .... The multiplexing group interval is increased from an existing value of 4 to 8.
--- Equation 2: Equation 0 in a case where s is 4 may be changed based on an equation for an enhanced DMRS, and k' = 2, 3 may be deleted. k may be calculated by the following equation. $k = 8 n + 2 k ′ + Δ \left(configuration type 1\right)$ $k ′ = 0 , 1$ $n = 0 , 1 , …$

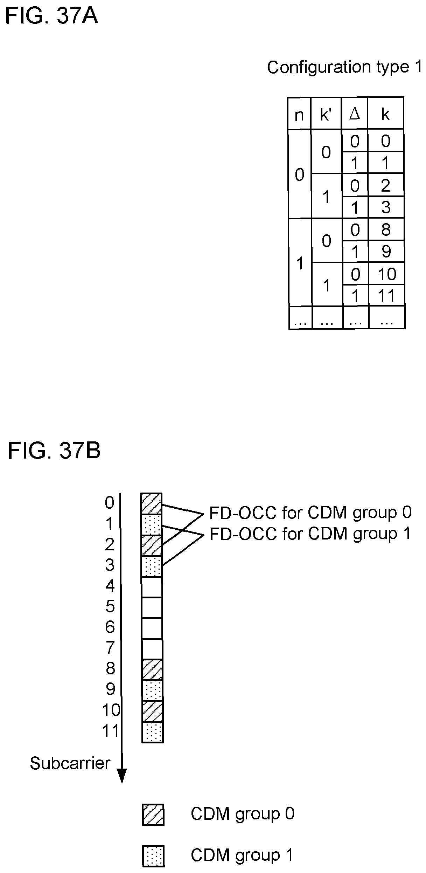

In an example in FIG. 37A, k is determined based on n = 0, 1, ..., k' = 0, 1, and Δ = 0, 1. In this case, as shown in FIG. 37B, CDM group 0 may be arranged in REs with k = 0, 2, 8, 10, ..., and CDM group 1 may be arranged in REs with k = 1, 3, 9, 11, .... The multiplexing group interval is increased from an existing value of 4 to 6.
--- Equation 3: A start point for CDM group 0 may be configured, or may be defined by the specification. k may be calculated by the following equation. $k = \left(4+s\right) n + 2 k ′ + Δ + o \left(configuration type 1\right)$ $k ′ = 0 , 1$ $n = 0 , 1 , …$ $s ∈ \left\{0, 1, …\right\}$ $o ∈ \left\{0, 1, …, s\right\}$

s may be configured by the NW, or may be defined by the specification.
∘ may be configured by the NW, or may be defined by the specification.
∘ may represent an offset of CDM group 0.

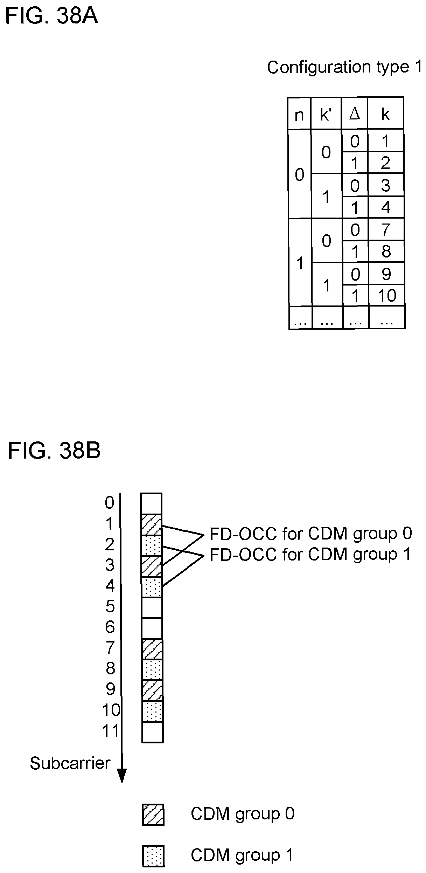

In an example in FIG. 38A, s = 2 and o = 1, and k is determined based on n = 0, 1, ..., k' = 0, 1, and Δ = 0, 1. In this case, as shown in FIG. 38B, CDM group 0 may be arranged in REs with k = 1, 3, 7, 9, ..., and CDM group 1 may be arranged in REs with k = 2, 4, 8, 10, .... The multiplexing group interval is increased from an existing value of 4 to 6.

### -- Case 2: basic DMRS type 2

k may follow at least one of some equations below.
--- Equation 0: k may be calculated by the following equation. $k = \left(6+s\right) n + k ′ + Δ \left(configuration type 2\right)$ $k ′ = 0 , 1$ $n = 0 , 1 , …$ $s ∈ \left\{0, 1, …\right\}$

s may be configured by a NW, or may be defined by a specification.

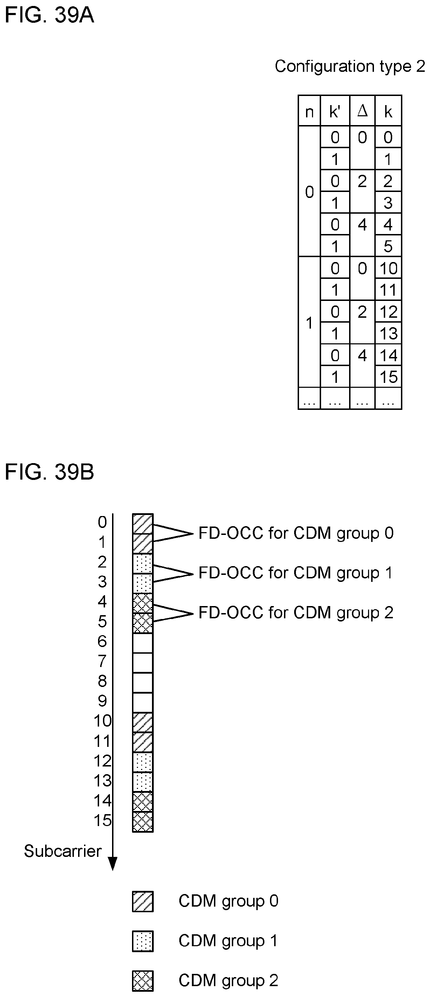

In an example in FIG. 39A, s = 4, and k is determined based on n = 0, 1, ..., k' = 0, 1, and Δ = 0, 2, 4. In this case, as shown in FIG. 39B, CDM group 0 may be arranged in REs with k = 0, 1, 10, 11, ..., CDM group 1 may be arranged in REs with k = 2, 3, 12, 13, ..., and CDM group 2 may be arranged in REs with k = 4, 5, 14, 15, .... The multiplexing group interval is increased from an existing value of 6 to 10.
--- Equation 1: Equation 0 in a case where s is a multiple of 6 may be changed based on an existing equation for a basic DMRS, and n may be set to a multiple of (s/6 + 1). $k = 6 n + k ′ + Δ \left(configuration type 2\right)$ $k ′ = 0 , 1$ $n = 0 , \left(s/6+1\right) , 2 \left(s/6+1\right) , … , if s mod 6 = 0$

s may be configured by the NW. s may be defined by the specification.

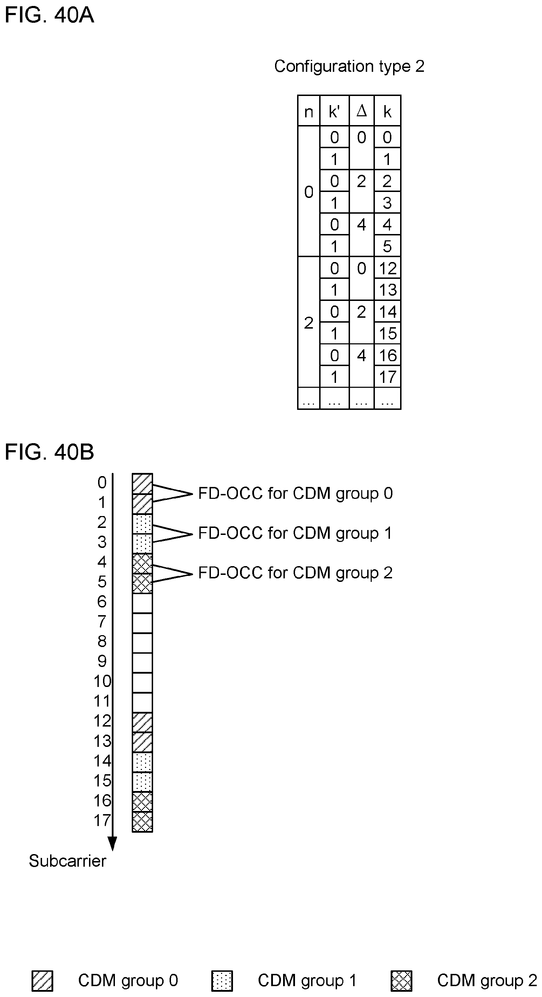

In an example in FIG. 40A, s = 6, and k is determined based on n = 0, 2, ..., k' = 0, 1, and Δ = 0, 2, 4. In this case, as shown in FIG. 40B, CDM group 0 may be arranged in REs with k = 0, 1, 12, 13, ..., CDM group 1 may be arranged in REs with k = 2, 3, 14, 15, ..., and CDM group 2 may be arranged in REs with k = 4, 5, 16, 17, .... The multiplexing group interval is increased from an existing value of 6 to 12.
--- Equation 2: Equation 0 in a case where s is 6 may be changed based on an equation for a DMRS, and k' = 2, 3 may be deleted. k may be calculated by the following equation. $k = 12 n + k ′ + Δ \left(configuration type 2\right)$ $k ′ = 0 , 1$ $n = 0 , 1 , …$

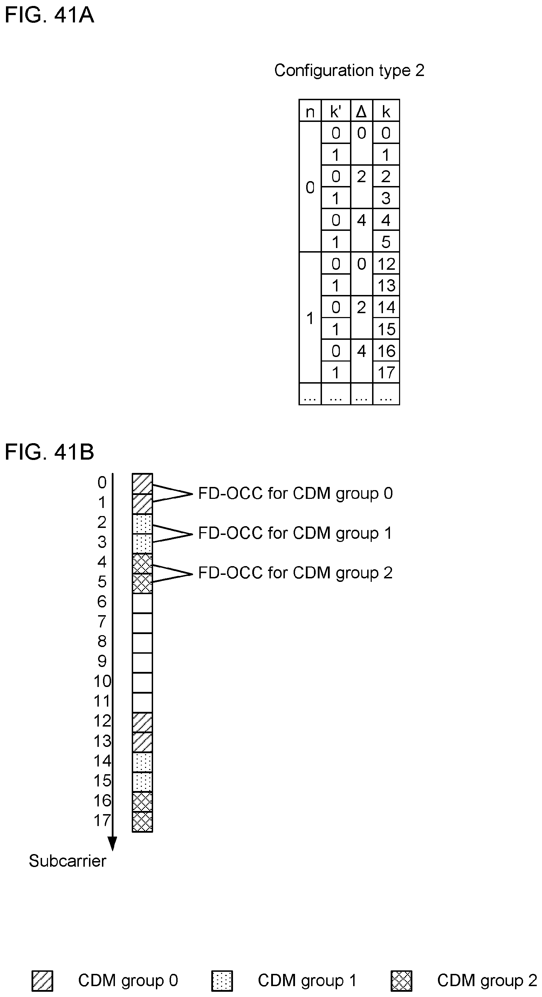

In an example in FIG. 41A, k is determined based on n = 0, 1, ..., k' = 0, 1, and Δ = 0, 2, 4. In this case, as shown in FIG. 41B, CDM group 0 may be arranged in REs with k = 0, 1, 12, 13, ..., CDM group 1 may be arranged in REs with k = 2, 3, 14, 15, ..., and CDM group 2 may be arranged in REs with k = 4, 5, 16, 17, .... The multiplexing group interval is increased from an existing value of 6 to 12.
--- Equation 3: A start point for CDM group 0 may be configured, or may be defined by the specification. k may be calculated by the following equation. $k = \left(6+s\right) n + 2 k ′ + Δ + o \left(configuration type 2\right)$ $k ′ = 0 , 1$ $n = 0 , 1 , …$ $s ∈ \left\{0, 1, …\right\}$ $o ∈ \left\{0, 1, …, s\right\}$

s may be configured by the NW, or may be defined by the specification.

∘ may be configured by the NW, or may be defined by the specification.

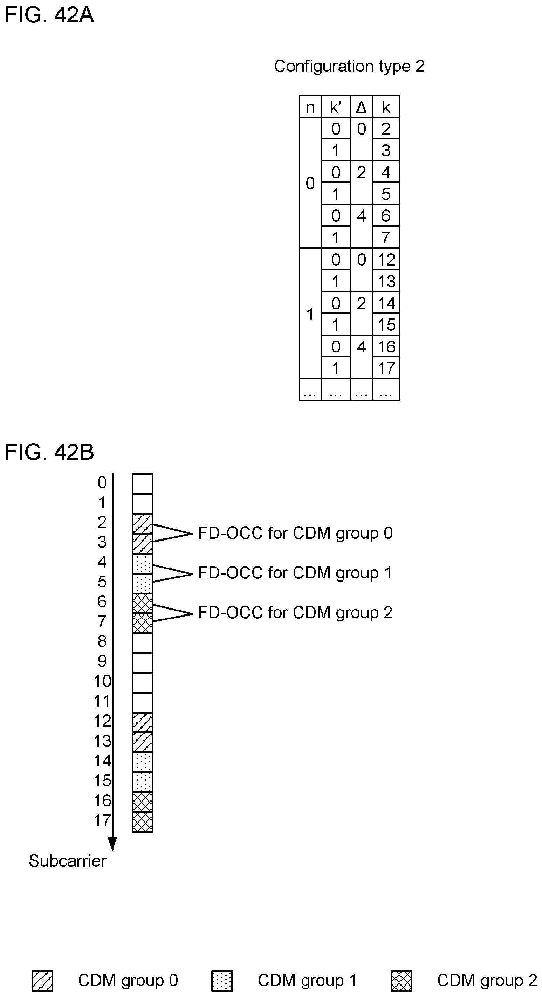

In an example in FIG. 42A, s = 4 and o = 2, and k is determined based on n = 0, 1, ..., k' = 0, 1, and Δ = 0, 2, 4. In this case, as shown in FIG. 42B, CDM group 0 may be arranged in REs with k = 2, 3, 12, 13, ..., CDM group 1 may be arranged in REs with k = 4, 5, 14, 15, ..., and CDM group 2 may be arranged in REs with k = 6, 7, 16, 17, .... The multiplexing group interval is increased from an existing value of 6 to 10.

### -- Case 3: enhanced DMRS type 1

k may follow at least one of some equations below.
--- Equation 0: k may be calculated by the following equation. $k = \left(8+s\right) n + 2 k ′ + Δ \left(configuration type 1\right)$ $k ′ = 0 , 1$ $n = 0 , 1 , …$ $s ∈ \left\{0, 1, …\right\}$

s may be configured by a NW, or may be defined by a specification.

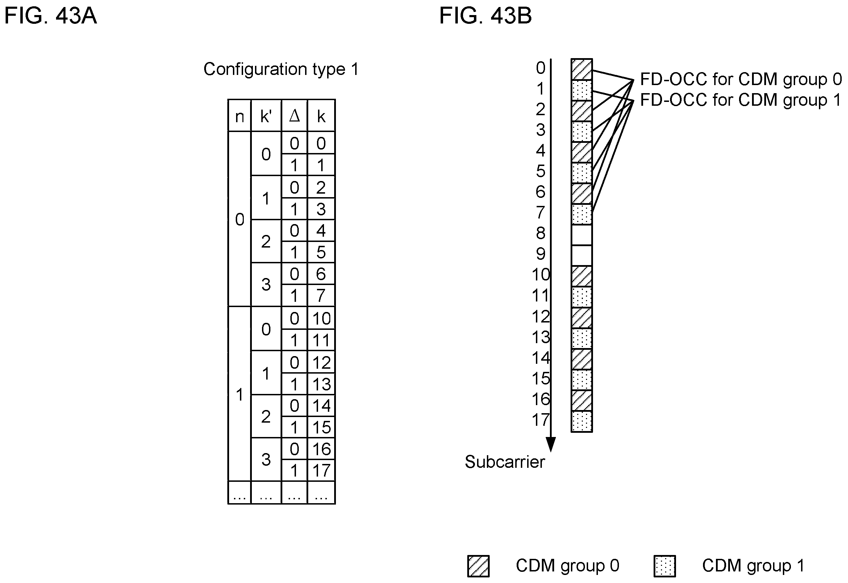

In an example in FIG. 43A, s = 2, and k is determined based on n = 0, 1, ..., k' = 0, 1, 2, 3, and Δ = 0, 1. In this case, as shown in FIG. 43B, CDM group 0 may be arranged in REs with k = 0, 2, 4, 6, 10, 12, 14, 16, ..., and CDM group 1 may be arranged in REs with k = 1, 3, 5, 7, 11, 13, 15, 17, .... The multiplexing group interval is increased from an existing value of 8 to 14.
--- Equation 1: Equation 0 in a case where s is a multiple of 8 may be changed based on an existing equation for an enhanced DMRS, and n may be set to a multiple of (s/8 + 1). k may be calculated by the following equation. $k = 8 n + 2 k ′ + Δ \left(configuration type 1\right)$ $k ′ = 0 , 1$ $n = 0 , \left(s/8+1\right) , 2 \left(s/8+1\right) , … , if s mod 4 = 0$

s may be configured by the NW. s may be defined by the specification.

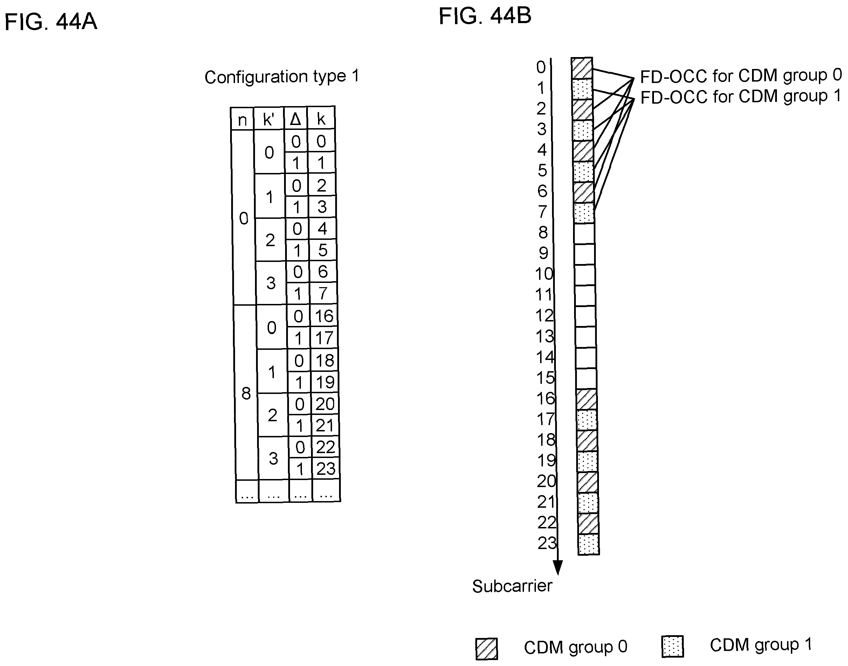

In an example in FIG. 44A, s = 4, and k is determined based on n = 0, 8, ..., k' = 0, 1, 2, 3, and Δ = 0, 1. In this case, as shown in FIG. 44B, CDM group 0 may be arranged in REs with k = 0, 2, 4, 6, 16, 18, 20, 22, ..., and CDM group 1 may be arranged in REs with k = 1, 3, 5, 7, 17, 19, 21, 23, .... The multiplexing group interval is increased from an existing value of 8 to 16.
--- Equation 2: A start point for CDM group 0 may be configured, or may be defined by the specification. k may be calculated by the following equation. $k = \left(8+s\right) n + 2 k ′ + Δ + o \left(configuration type 1\right)$ $k ′ = 0 , 1 , 2 , 3$ $n = 0 , 1 , …$ $s ∈ \left\{0, 1, …\right\}$ $o ∈ \left\{0, 1, …, s\right\}$

s may be configured by the NW, or may be defined by the specification.

∘ may be configured by the NW, or may be defined by the specification.

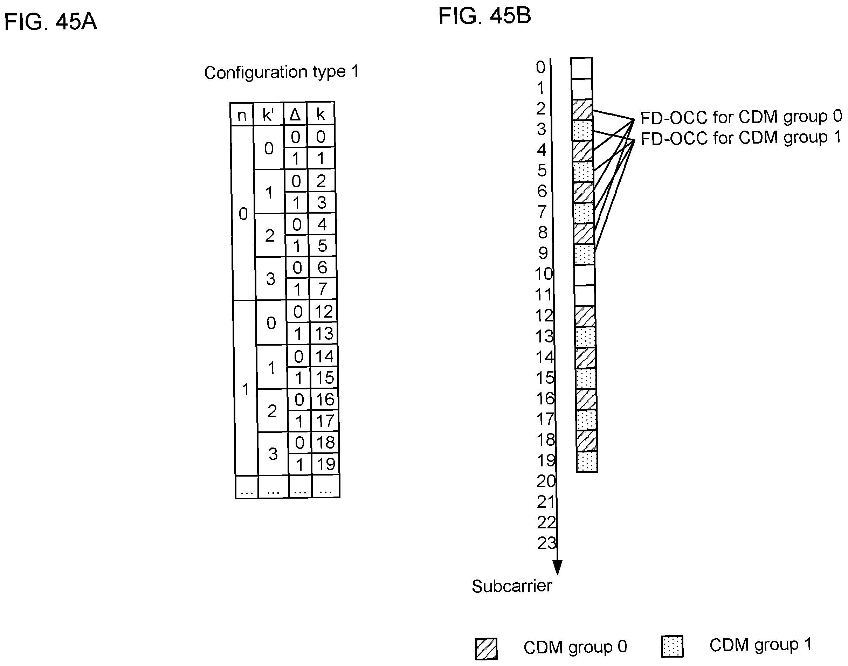

In an example in FIG. 45A, s = 2 and o = 2, and k is determined based on n = 0, 1, ..., k' = 0, 1, 2, 3, and Δ = 0, 1. In this case, as shown in FIG. 45B, CDM group 0 may be arranged in REs with k = 2, 4, 6, 8, 12, 14, 16, 18, ..., and CDM group 1 may be arranged in REs with k = 3, 5, 7, 9, 13, 15, 17, 19, .... The multiplexing group interval is increased from an existing value of 8 to 10.

### -- Case 4: enhanced DMRS type 2

k may follow at least one of some equations below.
--- Equation 0: k may be calculated by the following equations. $\begin{matrix}k = \left(12+s\right) n + k ′ + Δ \left(configuration type 2, k′=0, 1\right) \\ k = \left(12+s\right) n + k ′ + Δ + 4 \left(configuration type 2, k′=2, 3\right)\end{matrix}$ $k ′ = 0 , 1 , 2 , 3$ $n = 0 , 1 , …$ $s ∈ \left\{0, 1, …\right\}$

s may be configured by a NW, or may be defined by a specification.

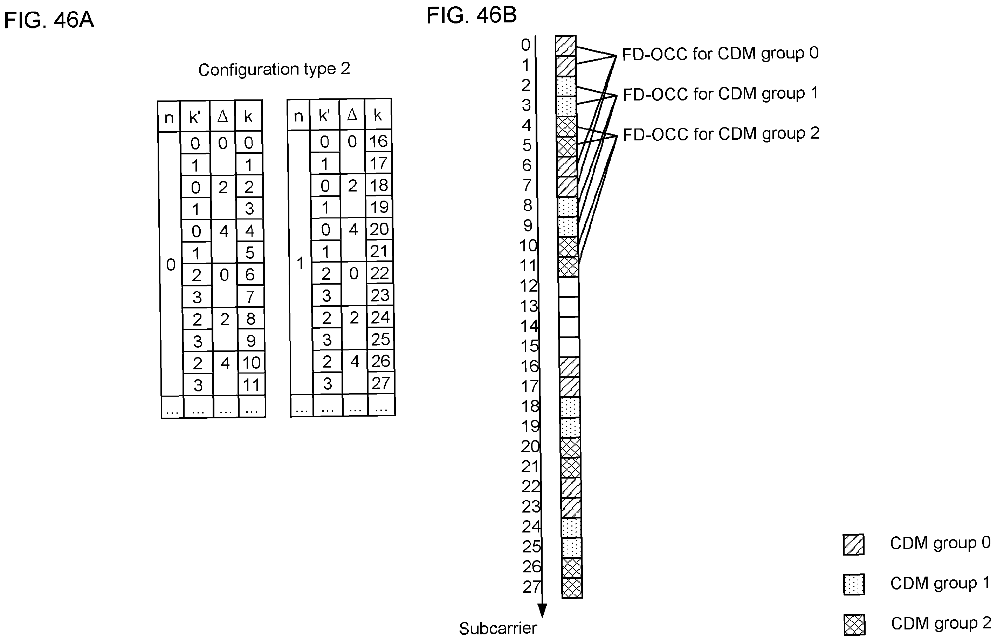

In an example in FIG. 46A, s = 4, and k is determined based on n = 0, 1, ..., k' = 0, 1, 2, 3, and Δ = 0, 2, 4. In this case, as shown in FIG. 46B, CDM group 0 may be arranged in REs with k = 0, 1, 6, 7, 16, 17, 22, 23, ..., CDM group 1 may be arranged in REs with k = 2, 3, 8, 9, 18, 19, 24, 25, ..., and CDM group 2 may be arranged in REs with k = 4, 5, 10, 11, 20, 21, 26, 27, .... The multiplexing group interval is increased from an existing value of 12 to 16.
--- Equation 1: Equation 0 in a case where s is a multiple of 12 may be changed based on an existing equation for an enhanced DMRS, and n may be set to a multiple of (s/12 + 1). $k = 12 n + k ′ + Δ \left(configuration type 2, k′=0, 1\right)$ $k = 12 n + k ′ + Δ + 4 \left(configuration type 2, k′=2, 3\right)$ $k ′ = 0 , 1 , 2 , 3$ $n = 0 , \left(s/12+1\right) , 2 \left(s/12+1\right) , … , if s mod 12 = 0$

s may be configured by the NW. s may be defined by the specification.

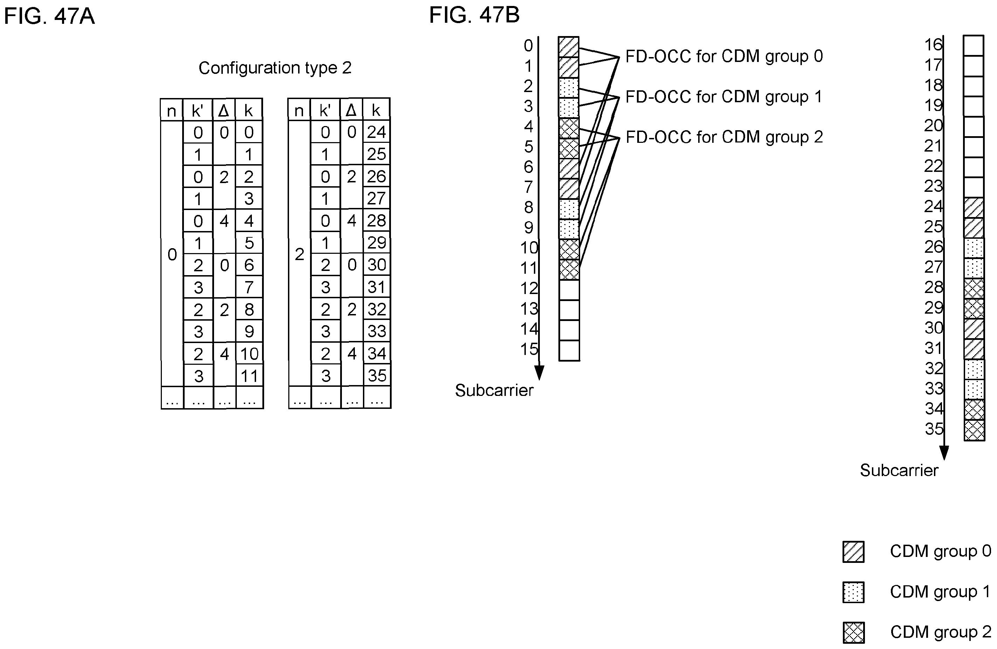

In an example in FIG. 47A, s = 6, and k is determined based on n = 0, 2, ..., k' = 0, 1, 2, 3, and Δ = 0, 2, 4. In this case, as shown in FIG. 47B, CDM group 0 may be arranged in REs with k = 0, 1, 6, 7, 24, 25, 30, 31, ..., CDM group 1 may be arranged in REs with k = 2, 3, 8, 9, 26, 27, 32, 33, ..., and CDM group 2 may be arranged in REs with k = 4, 5, 10, 11, 28, 29, 34, 35, .... The multiplexing group interval is increased from an existing value of 12 to 24.
--- Equation 2: A start point for CDM group 0 may be configured, or may be defined by the specification. k may be calculated by the following equations. $k = \left(12+s\right) n + k ′ + Δ + o \left(configuration type 2, k′=0, 1\right)$ k = (12 + s)n + k' + Δ + ∘ + 4 (configuration type 2, k' = 2, 3) $k ′ = 0 , 1$ $n = 0 , 1 , …$ $s ∈ \left\{0, 1, …\right\}$ $o ∈ \left\{0, 1, …, s\right\}$

s may be configured by the NW, or may be defined by the specification.

∘ may be configured by the NW, or may be defined by the specification.

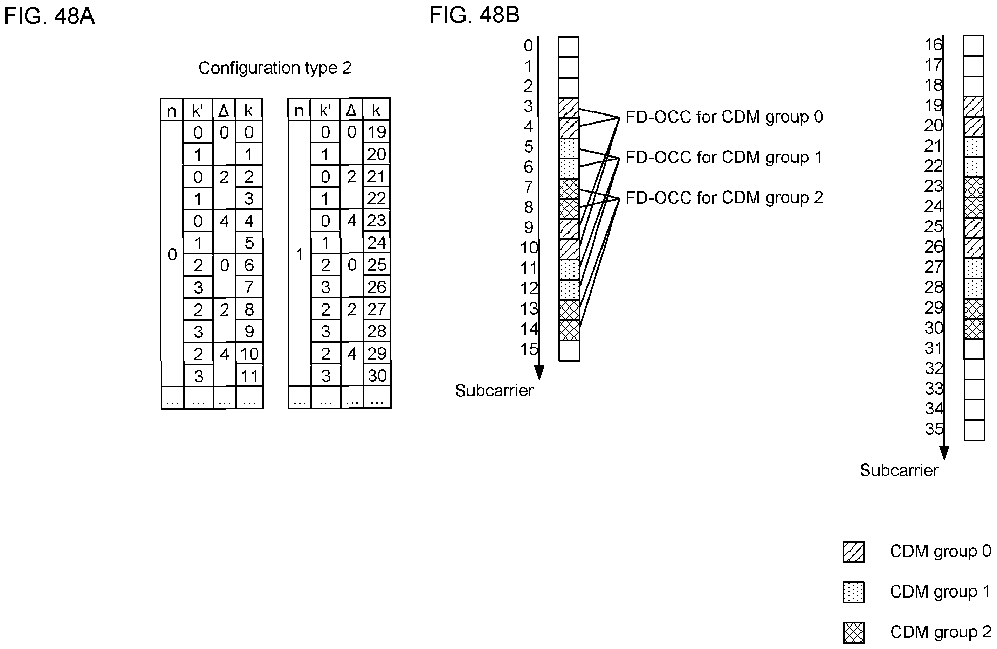

In an example in FIG. 48A, s = 4 and o = 3, and k is determined based on n = 0, 1, ..., k' = 0, 1, 2, 3, and Δ = 0, 2, 4. In this case, as shown in FIG. 48B, CDM group 0 may be arranged in REs with k = 3, 4, 9, 10, 19, 20, 25, 26, ..., CDM group 1 may be arranged in REs with k = 5, 6, 11, 12, 21, 22, 27, 28, ..., and CDM group 2 may be arranged in REs with k = 7, 8, 13, 14, 23, 24, 29, 30, .... The multiplexing group interval is increased from an existing value of 12 to 16.

### - Option 2

A multiplexing group interval is increased, an intra-group interval is increased, and an inter-group interval is maintained. This option may be applied to at least one of some cases below.

### -- Case 1: basic DMRS type 1

k may follow at least one of some equations below.
--- Equation 0: k may be calculated by the following equation. $k = \left(4+s\right) n + \left(2+i\right) k ′ + Δ \left(configuration type 1\right)$ $k ′ = 0 , 1$ $n = 0 , 1 , …$ $s ∈ \left\{0, 1, …\right\}$ $i ∈ \left\{0, 1, …, s\right\}$

s may be configured by a NW, or may be defined by a specification.

i may be configured by the NW, or may be defined by the specification.

s may represent the multiplexing group interval.

2 + i may represent the intra-group interval.

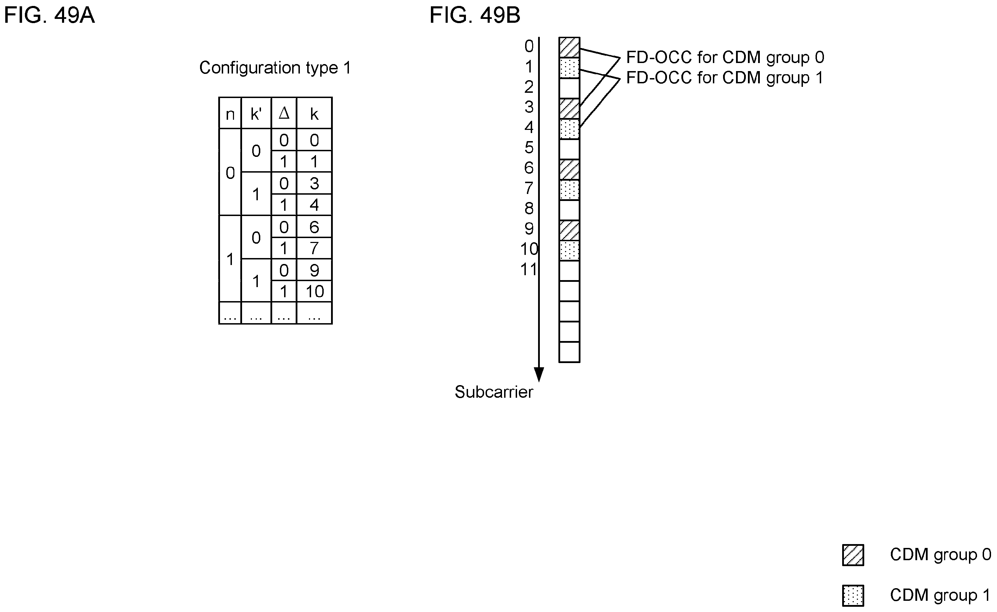

In an example in FIG. 49A, s = 2 and i = 1, and k is determined based on n = 0, 1, ..., k' = 0, 1, and Δ = 0, 1. In this case, as shown in FIG. 49B, CDM group 0 may be arranged in REs with k = 0, 3, 6, 9, ..., and CDM group 1 may be arranged in REs with k = 1, 4, 7, 10, .... The multiplexing group interval is increased from an existing value of 4 to 6. The intra-group interval is increased from an existing value of 2 to 3.
--- Equation 1: A start point for CDM group 0 may be configured, or may be defined by the specification. k may be calculated by the following equation. $k = \left(4+s\right) n + \left(2+i\right) k ′ + Δ + o \left(configuration type 1\right)$ $k ′ = 0 , 1$ $n = 0 , 1 , …$ $s ∈ \left\{0, 1, …\right\}$ $i ∈ \left\{0, 1, …, s\right\}$ $o ∈ \left\{0, 1, …, s-i\right\}$

s may be configured by the NW, or may be defined by the specification.

i may be configured by the NW, or may be defined by the specification.

∘ may be configured by the NW, or may be defined by the specification.

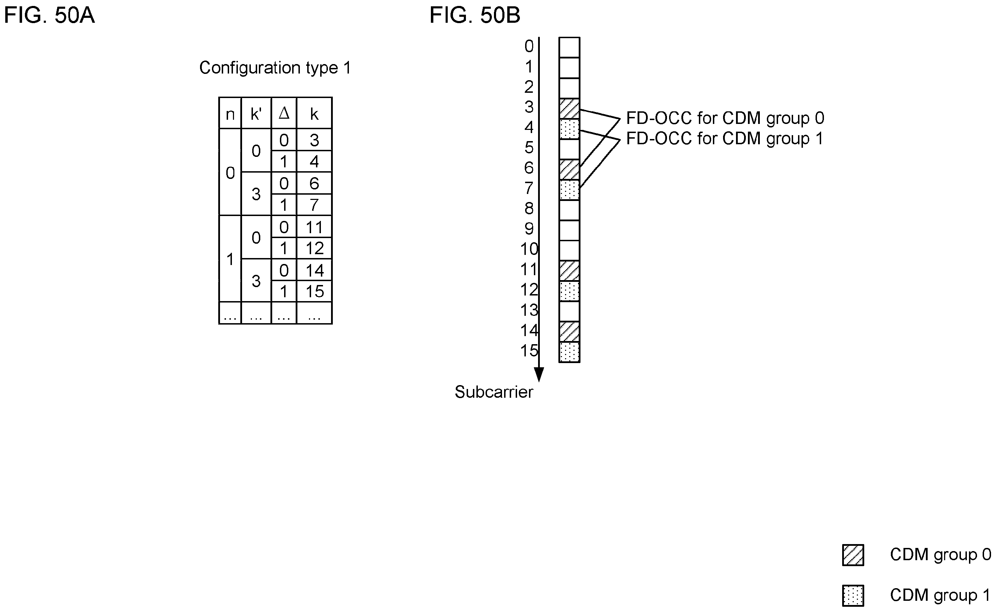

In an example in FIG. 50A, s = 4, i = 1, and o = 3, and k is determined based on n = 0, 1, ..., k' = 0, 1, and Δ = 0, 1. In this case, as shown in FIG. 50B, CDM group 0 may be arranged in REs with k = 3, 6, 11, 14, ..., and CDM group 1 may be arranged in REs with k = 4, 7, 12, 15, .... The multiplexing group interval is increased from an existing value of 4 to 8. The intra-group interval is increased from an existing value of 2 to 3.

### -- Case 2: basic DMRS type 2

k may follow at least one of some equations below.
--- Equation 0: k may be calculated by the following equation. $k = \left(6+s\right) n + \left(1+i\right) k ′ + \left(1+i/2\right) Δ \left(configuration type 2\right)$ $k ′ = 0 , 1$ $n = 0 , 1 , …$ $s ∈ \left\{0, 1, …\right\}$ $i ∈ \left\{0, 1, …, s//3\right\}$

s may be configured by a NW, or may be defined by a specification.

i may be configured by the NW, or may be defined by the specification.

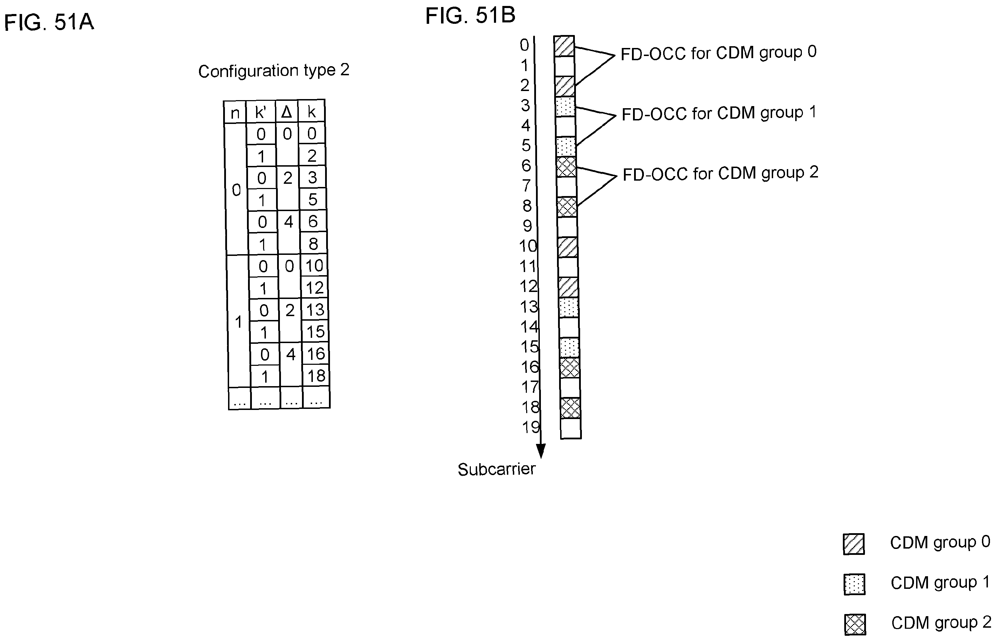

In an example in FIG. 51A, s = 4 and i = 1, and k is determined based on n = 0, 1, ..., k' = 0, 1, and Δ = 0, 2, 4. In this case, as shown in FIG. 51B, CDM group 0 may be arranged in REs with k = 0, 2, 10, 12, ..., CDM group 1 may be arranged in REs with k = 3, 5, 13, 15, ..., and CDM group 2 may be arranged in REs with k = 6, 8, 16, 18, .... The multiplexing group interval is increased from an existing value of 6 to 10. The intra-group interval is increased from an existing value of 1 to 2.
--- Equation 1: A start point for CDM group 0 may be configured, or may be defined by the specification. k may be calculated by the following equation. 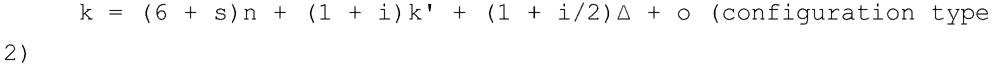
k = (6 + s)n + (1 + i)k' + (1 + i/2)Δ + o (configuration type 2) $k ′ = 0 , 1$ $n = 0 , 1 , …$ $s ∈ \left\{0, 1, …\right\}$ $i ∈ \left\{0, 1, …, s//3\right\}$ $o ∈ \left\{0, 1, …, s-3i\right\}$

s may be configured by the NW, or may be defined by the specification.

i may be configured by the NW, or may be defined by the specification.

∘ may be configured by the NW, or may be defined by the specification.

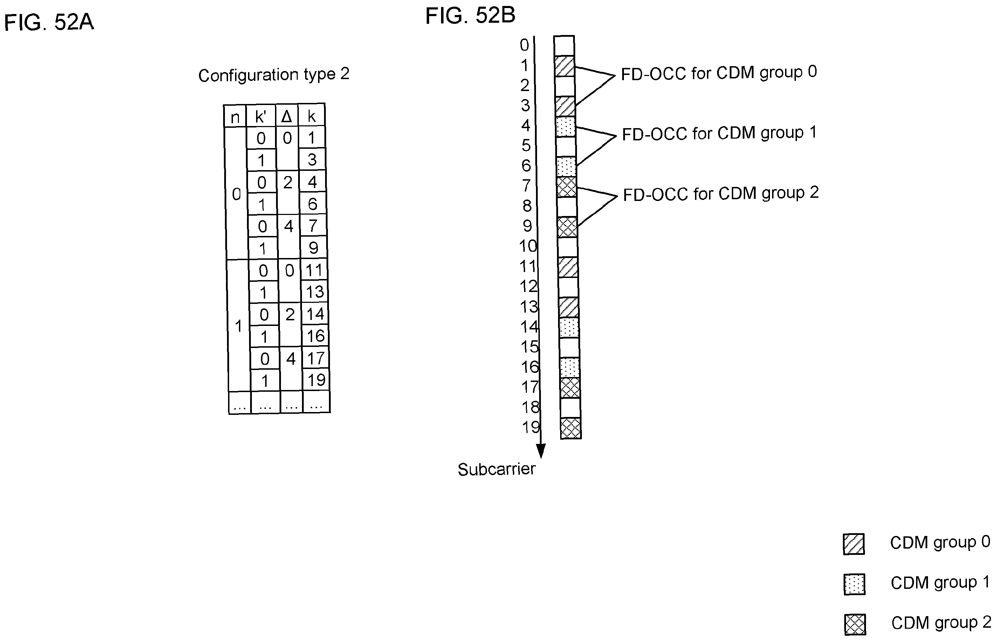

In an example in FIG. 52A, s = 4, i = 1, and o = 1, and k is determined based on n = 0, 1, ..., k' = 0, 1, and Δ = 0, 2, 4. In this case, as shown in FIG. 52B, CDM group 0 may be arranged in REs with k = 1, 3, 11, 13, ..., CDM group 1 may be arranged in REs with k = 4, 6, 14, 16, ..., and CDM group 2 may be arranged in REs with k = 7, 9, 17, 19, .... The multiplexing group interval is increased from an existing value of 6 to 10. The intra-group interval is increased from an existing value of 1 to 2.

### -- Case 3: enhanced DMRS type 1

k may follow at least one of some equations below.
--- Equation 0: k may be calculated by the following equation. $k = \left(8+s\right) n + \left(2+i\right) k ′ + Δ \left(configuration type 1\right)$ $k ′ = 0 , 1 , 2 , 3$ $n = 0 , 1 , …$ $s ∈ \left\{0, 1, …\right\}$ $i ∈ \left\{0, 1, …, s//3\right\}$

s may be configured by a NW, or may be defined by a specification.

i may be configured by the NW, or may be defined by the specification.

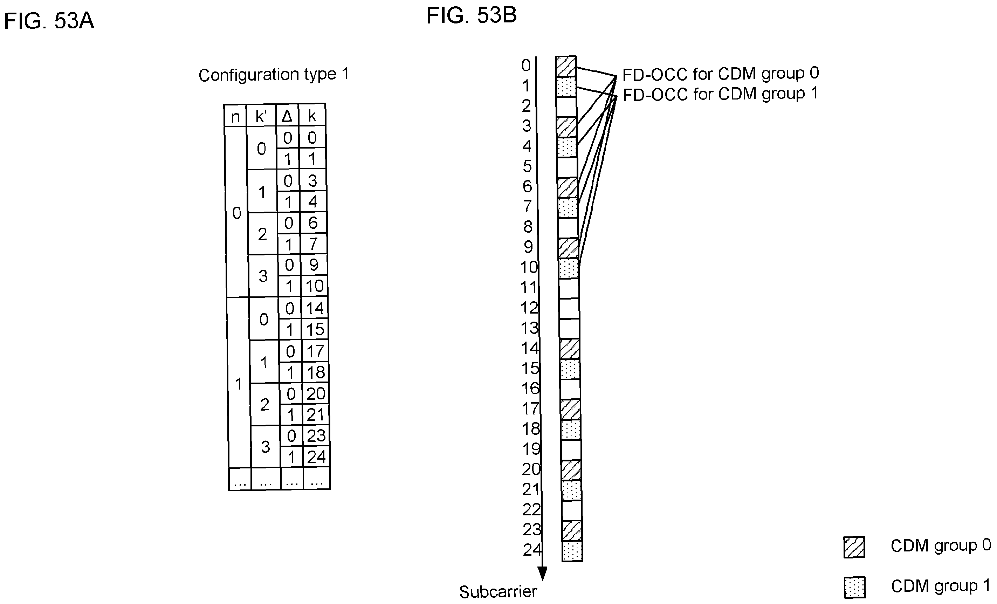

In an example in FIG. 53A, s = 6 and i = 1, and k is determined based on n = 0, 1, ..., k' = 0, 1, 2, 3, and Δ = 0, 1. In this case, as shown in FIG. 53B, CDM group 0 may be arranged in REs with k = 0, 3, 6, 9, 14, 17, 20, 23, ..., and CDM group 1 may be arranged in REs with k = 1, 4, 7, 10, 15, 18, 21, 24, .... The multiplexing group interval is increased from an existing value of 8 to 14. The intra-group interval is increased from an existing value of 2 to 3.
--- Equation 1: A start point for CDM group 0 may be configured, or may be defined by the specification. k may be calculated by the following equation. $k = \left(8+s\right) n + \left(2+i\right) k ′ + Δ + o \left(configuration type 1\right)$ $k ′ = 0 , 1 , 2 , 3$ $n = 0 , 1 , …$ $s ∈ \left\{0, 1, …\right\}$ $i ∈ \left\{0, 1, …, s//3\right\}$ $o ∈ \left\{0, 1, …, s-3i\right\}$

s may be configured by the NW, or may be defined by the specification.

i may be configured by the NW, or may be defined by the specification.

∘ may be configured by the NW, or may be defined by the specification.

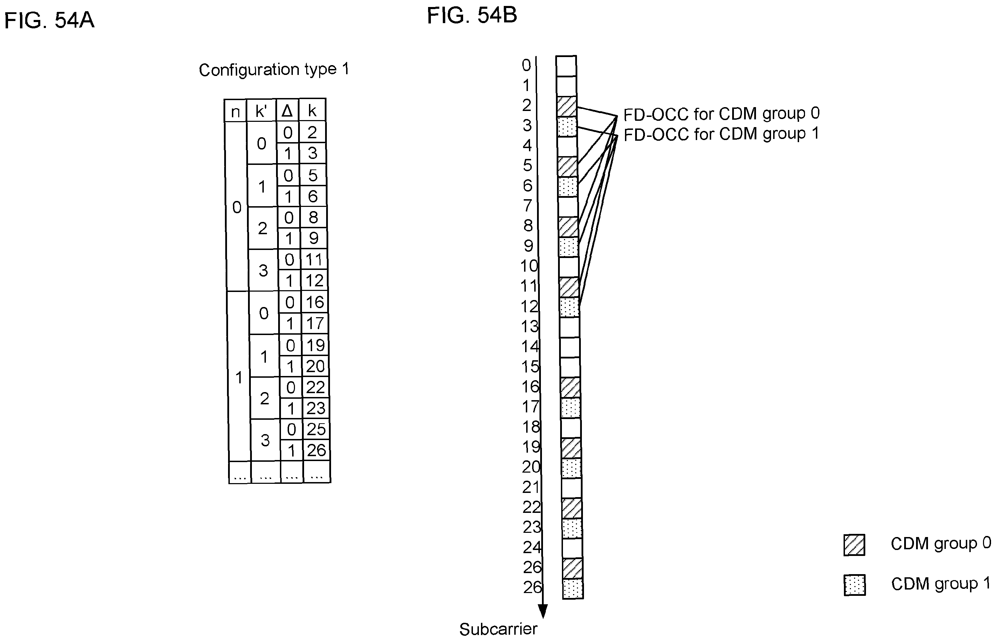

In an example in FIG. 54A, s = 6, i = 1, and o = 2, and k is determined based on n = 0, 1, ..., k' = 0, 1, 2, 3, and Δ = 0, 1. In this case, as shown in FIG. 54B, CDM group 0 may be arranged in REs with k = 2, 5, 8, 11, 16, 19, 22, 25, ..., and CDM group 1 may be arranged in REs with k = 3, 6, 9, 12, 17, 20, 23, 26, .... The multiplexing group interval is increased from an existing value of 8 to 14. The intra-group interval is increased from an existing value of 2 to 3.

### -- Case 4: enhanced DMRS type 2

k may follow at least one of some equations below.
--- Equation 0: k may be calculated by the following equations. 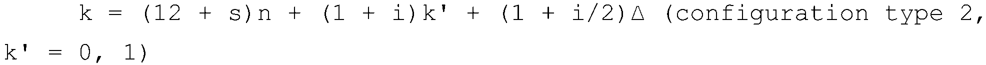 k = (12 + s)n + (1 + i)k' + (1 + i/2)Δ (configuration type 2, k' = 0, 1) 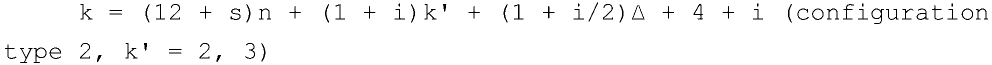 k = (12 + s)n + (1 + i)k' + (1 + i/2)Δ + 4 + i (configuration type 2, k' = 2, 3) $k ′ = 0 , 1 , 2 , 3$ $n = 0 , 1 , …$ $s ∈ \left\{0, 1, …\right\}$ $i ∈ \left\{0, 1, …, s//6\right\}$

s may be configured by a NW, or may be defined by a specification.

i may be configured by the NW, or may be defined by the specification.

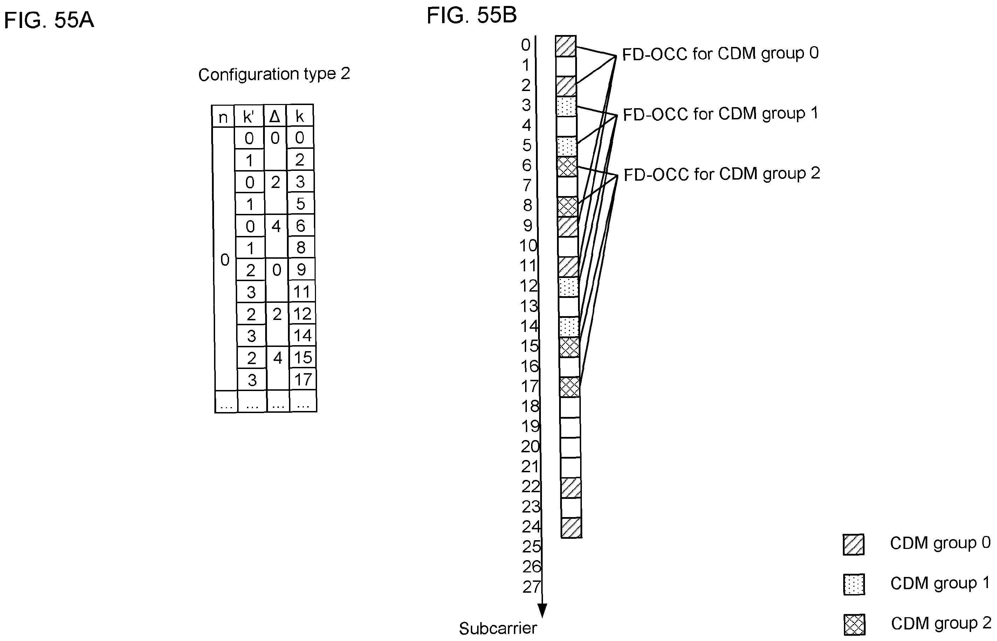

In an example in FIG. 55A, s = 10 and i = 1, and k is determined based on n = 0, 1, ..., k' = 0, 1, 2, 3, and Δ = 0, 2, 4. In this case, as shown in FIG. 55B, CDM group 0 may be arranged in REs with k = 0, 2, 9, 11, 22, 24, 31, 33, ..., CDM group 1 may be arranged in REs with k = 3, 5, 12, 14, 25, 27, 34, 36, ..., and CDM group 2 may be arranged in REs with k = 6, 8, 15, 17, 28, 30, 37, 39, .... The multiplexing group interval is increased from an existing value of 12 to 22. The intra-group interval is increased from an existing value of 1 to 2.
--- Equation 1: A start point for CDM group 0 may be configured, or may be defined by the specification. k may be calculated by the following equations. 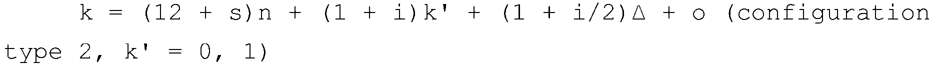 k = (12 + s)n + (1 + i)k' + (1 + i/2)Δ + o (configuration type 2, k' = 0, 1) 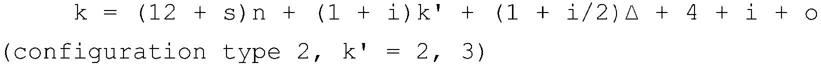 k = (12 + s)n + (1 + i)k' + (1 + i/2)Δ + 4 + i + o (configuration type 2, k' = 2, 3) $k ′ = 0 , 1 , 2 , 3$ $n = 0 , 1 , …$ $s ∈ \left\{0, 1, …\right\}$ $i ∈ \left\{0, 1, …, s//6\right\}$ $o ∈ \left\{0, 1, …, s-6i\right\}$

s may be configured by the NW, or may be defined by the specification.

i may be configured by the NW, or may be defined by the specification.

∘ may be configured by the NW, or may be defined by the specification.

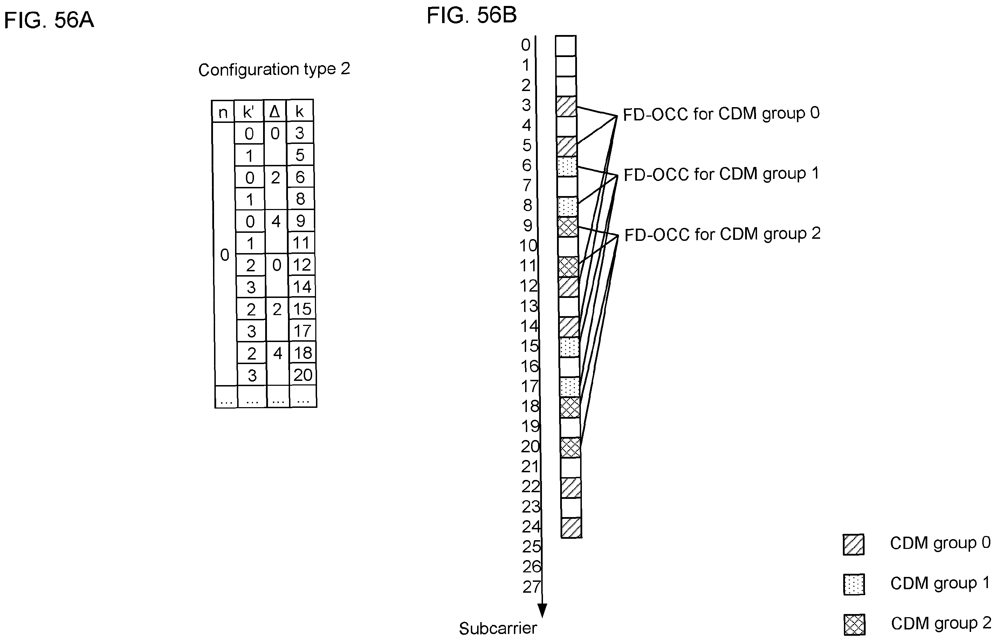

In an example in FIG. 56A, s = 10, i = 1, and o = 3, and k is determined based on n = 0, 1, ..., k' = 0, 1, 2, 3, and Δ = 0, 2, 4. In this case, as shown in FIG. 56B, CDM group 0 may be arranged in REs with k = 3, 5, 12, 14, 22, 24, 31, 33, ..., CDM group 1 may be arranged in REs with k = 6, 8, 15, 17, 25, 27, 34, 36, ..., and CDM group 2 may be arranged in REs with k = 9, 11, 18, 20, 28, 30, 37, 39, .... The multiplexing group interval is increased from an existing value of 12 to 19. The intra-group interval is increased from an existing value of 1 to 2.

### - Option 3

A multiplexing group interval is increased, an inter-group interval is increased, and an intra-group interval is maintained. This option may be applied to only basic/enhanced type 2. This option may be applied to at least one of some cases below.

### -- Case 1: basic DMRS type 2

k may follow at least one of some equations below.
--- Equation 0: k may be calculated by the following equation. $k = \left(6+s\right) n + k ′ + \left(1+j/2\right) Δ \left(configuration type 2\right)$ $k ′ = 0 , 1$ $n = 0 , 1 , …$ $s ∈ \left\{0, 1, …\right\}$ $j ∈ \left\{0, 1, …, s//2\right\}$

s may be configured by a NW, or may be defined by a specification.

j may be configured by the NW, or may be defined by the specification.

s may represent the multiplexing group interval.

(1 + j/2)2 may represent the inter-group interval.

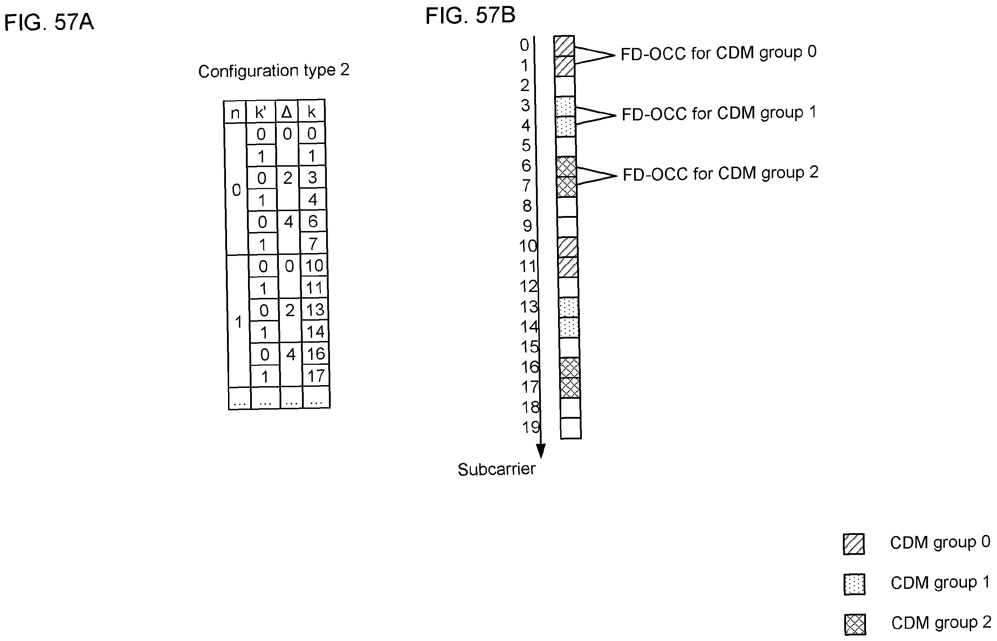

In an example in FIG. 57A, s = 4 and j = 1, and k is determined based on n = 0, 1, ..., k' = 0, 1, and Δ = 0, 2, 4. In this case, as shown in FIG. 57B, CDM group 0 may be arranged in REs with k = 0, 1, 10, 11, ..., CDM group 1 may be arranged in REs with k = 3, 4, 13, 14, ..., and CDM group 2 may be arranged in REs with k = 6, 7, 16, 17, .... The multiplexing group interval is increased from an existing value of 6 to 10. The inter-group interval is increased from an existing value of 2 to 3.
--- Equation 1: A start point for CDM group 0 may be configured, or may be defined by the specification. k may be calculated by the following equation. $k = \left(6+s\right) n + k ′ + \left(1+j/2\right) Δ + o \left(configuration type 2\right)$ $k ′ = 0 , 1$ $n = 0 , 1 , …$ $\begin{matrix}s ∈ \left\{0, 1, …\right\} \\ j ∈ \left\{0, 1, …, s//2\right\}\end{matrix}$ $o ∈ \left\{0, 1, …, s-2j\right\}$

s may be configured by the NW, or may be defined by the specification.

j may be configured by the NW, or may be defined by the specification.

∘ may be configured by the NW, or may be defined by the specification.

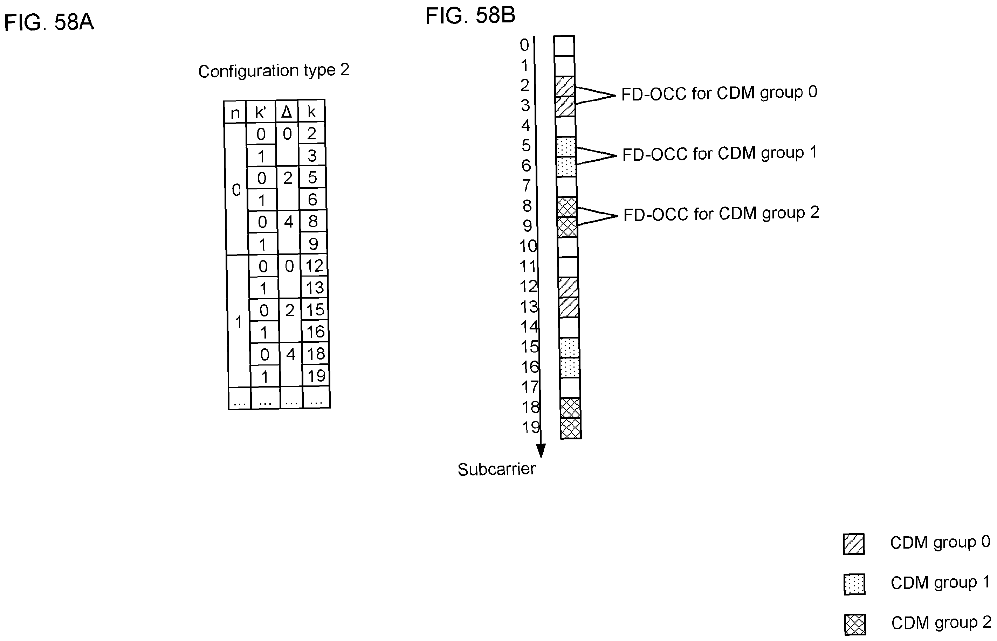

In an example in FIG. 58A, s = 4, j = 1, and o = 2, and k is determined based on n = 0, 1, ..., k' = 0, 1, and Δ = 0, 2, 4. In this case, as shown in FIG. 58B, CDM group 0 may be arranged in REs with k = 2, 3, 12, 13, ..., CDM group 1 may be arranged in REs with k = 5, 6, 15, 16, ..., and CDM group 2 may be arranged in REs with k = 8, 9, 18, 19, .... The multiplexing group interval is increased from an existing value of 6 to 10. The inter-group interval is increased from an existing value of 2 to 3.

### -- Case 2: enhanced DMRS type 2

k may follow at least one of some equations below.
--- Equation 0: k may be calculated by the following equations. 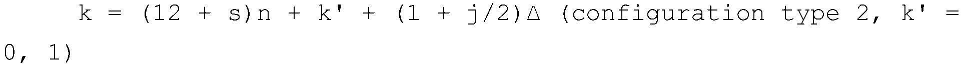 k = (12 + s)n + k' + (1 + j/2)Δ (configuration type 2, k' = 0, 1) 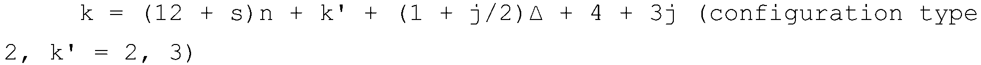 k = (12 + s)n + k' + (1 + j/2)Δ + 4 + 3j (configuration type 2, k' = 2, 3) $k ′ = 0 , 1 , 2 , 3$ $n = 0 , 1 , …$ $s ∈ \left\{0, 1, …\right\}$ $j ∈ \left\{0, 1, …, s//5\right\}$

s may be configured by a NW, or may be defined by a specification.

j may be configured by the NW, or may be defined by the specification.

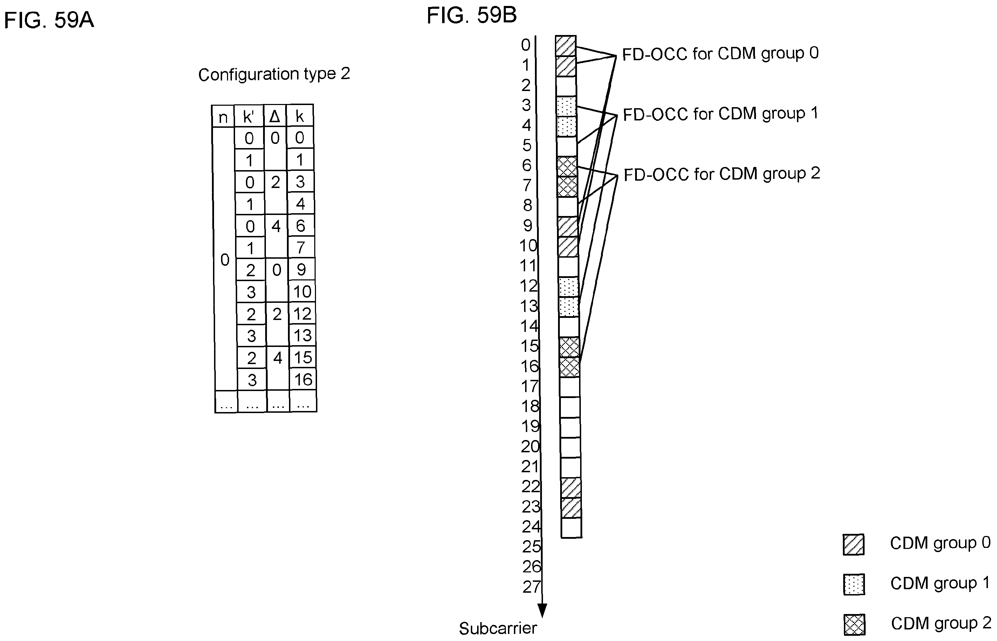

In an example in FIG. 59A, s = 10 and j = 1, and k is determined based on n = 0, 1, ..., k' = 0, 1, 2, 3, and Δ = 0, 2, 4. In this case, as shown in FIG. 59B, CDM group 0 may be arranged in REs with k = 0, 1, 9, 10, 22, 23, 31, 32, ..., CDM group 1 may be arranged in REs with k = 3, 4, 12, 13, 25, 26, 34, 35, ..., and CDM group 2 may be arranged in REs with k = 6, 7, 15, 16, 28, 29, 37, 38, .... The multiplexing group interval is increased from an existing value of 12 to 22. The inter-group interval is increased from an existing value of 2 to 3.
--- Equation 1: A start point for CDM group 0 may be configured, or may be defined by the specification. k may be calculated by the following equations. 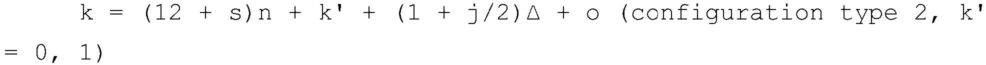 k = (12 + s)n + k' + (1 + j/2)Δ + o (configuration type 2, k' = 0, 1) 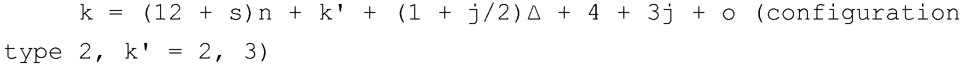 k = (12 + s)n + k' + (1 + j/2)Δ + 4 + 3j + o (configuration type 2, k' = 2, 3) $k ′ = 0 , 1 , 2 , 3$ $n = 0 , 1 , …$ $s ∈ \left\{0, 1, …\right\}$ $j ∈ \left\{0, 1, …, s//5\right\}$ $o ∈ \left\{0, 1, …, s-5i\right\}$

s may be configured by the NW, or may be defined by the specification.

j may be configured by the NW, or may be defined by the specification.

∘ may be configured by the NW, or may be defined by the specification.

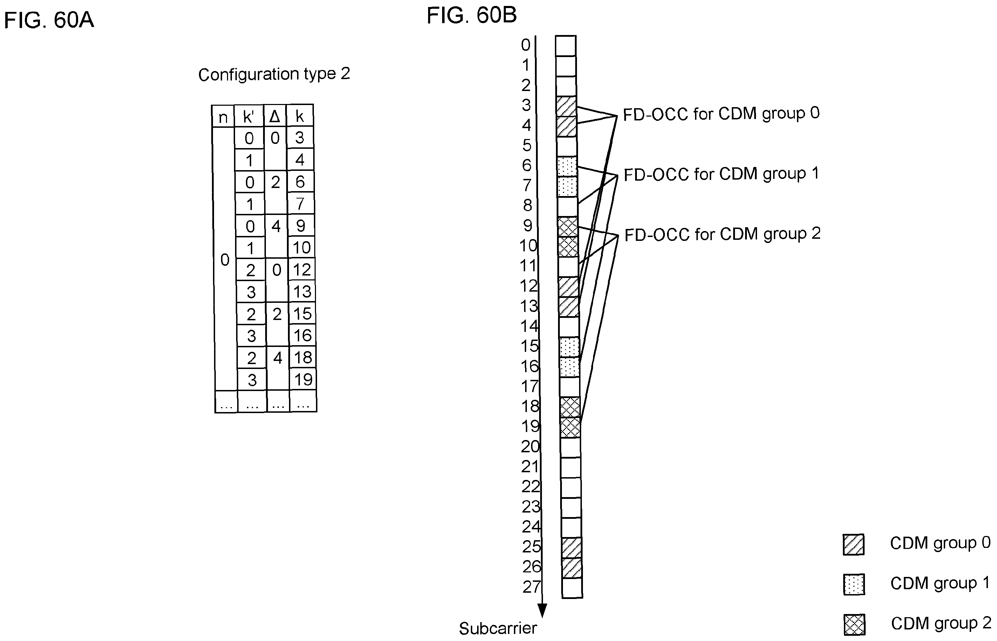

In an example in FIG. 60A, s = 10, j = 1, and o = 3, and k is determined based on n = 0, 1, ..., k' = 0, 1, 2, 3, and Δ = 0, 2, 4. In this case, as shown in FIG. 60B, CDM group 0 may be arranged in REs with k = 3, 4, 12, 13, 25, 26, 34, 35, ..., CDM group 1 may be arranged in REs with k = 6, 7, 15, 16, 28, 29, 37, 38, ..., and CDM group 2 may be arranged in REs with k = 9, 10, 18, 19, 31, 32, 40, 41, .... The multiplexing group interval is increased from an existing value of 12 to 19. The inter-group interval is increased from an existing value of 2 to 3.

### - Option 4

A multiplexing group interval is increased, an inter-group interval is increased, and an intra-group interval is increased. This option may be applied to at least one of some cases below.

### -- Case 1: basic DMRS type 1

k may follow at least one of some equations below.
--- Equation 0: k may be calculated by the following equation. $k = \left(4+s\right) n + \left(2+i\right) k ′ + \left(1+j\right) Δ \left(configuration type 1\right)$ $k ′ = 0 , 1$ $n = 0 , 1 , …$ $s ∈ \left\{0, 1, …\right\}$ $i ∈ \left\{0, 1, …, s\right\}$ $j ∈ \left\{0, 1, …, s-i\right\}$

s may be configured by a NW, or may be defined by a specification.

i may be configured by the NW, or may be defined by the specification.

j may be configured by the NW, or may be defined by the specification.

s may represent the multiplexing group interval.

2 + i may represent the intra-group interval.

1 + j may represent the inter-group interval.

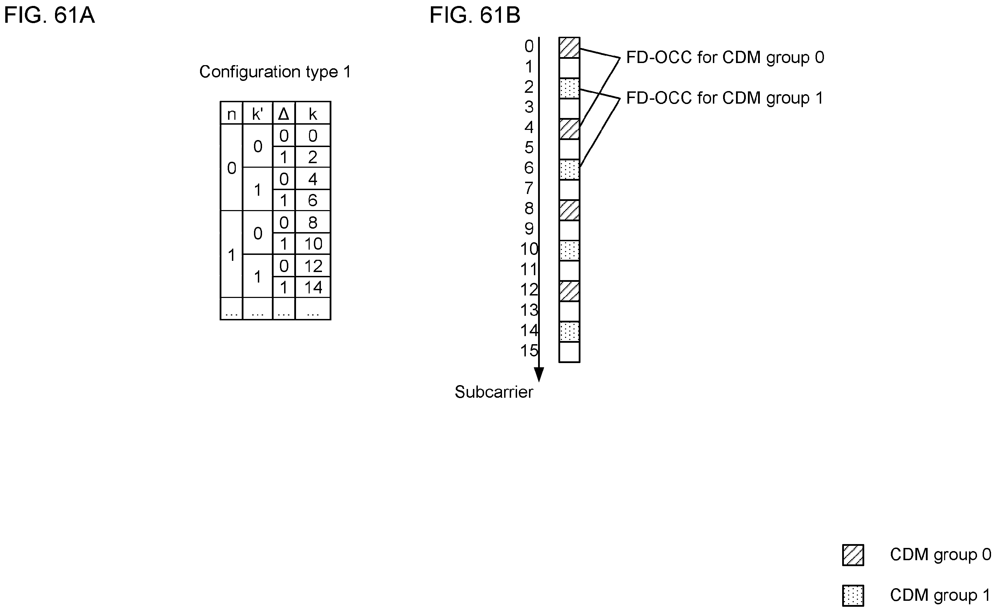

In an example in FIG. 61A, s = 4, i = 2, and j = 1, and k is determined based on n = 0, 1, ..., k' = 0, 1, and Δ = 0, 1. In this case, as shown in FIG. 61B, CDM group 0 may be arranged in REs with k = 0, 4, 8, 12, ..., and CDM group 1 may be arranged in REs with k = 2, 6, 10, 14, .... The multiplexing group interval is increased from an existing value of 4 to 8. The intra-group interval is increased from an existing value of 2 to 4. The inter-group interval is increased from an existing value of 1 to 2.
--- Equation 1: A start point for CDM group 0 may be configured, or may be defined by the specification. k may be calculated by the following equation. 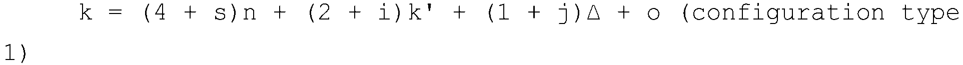 k = (4 + s)n + (2 + i)k' + (1 + j)Δ + o (configuration type 1) $k ′ = 0 , 1$ $n = 0 , 1 , …$ $s ∈ \left\{0, 1, …\right\}$ $i ∈ \left\{0, 1, …, s\right\}$ $j ∈ \left\{0, 1, …, s-i\right\}$ $o ∈ \left\{0, 1, …, s-i\right\}$

s may be configured by the NW, or may be defined by the specification.

i may be configured by the NW, or may be defined by the specification.

j may be configured by the NW, or may be defined by the specification.

o may be configured by the NW, or may be defined by the specification.

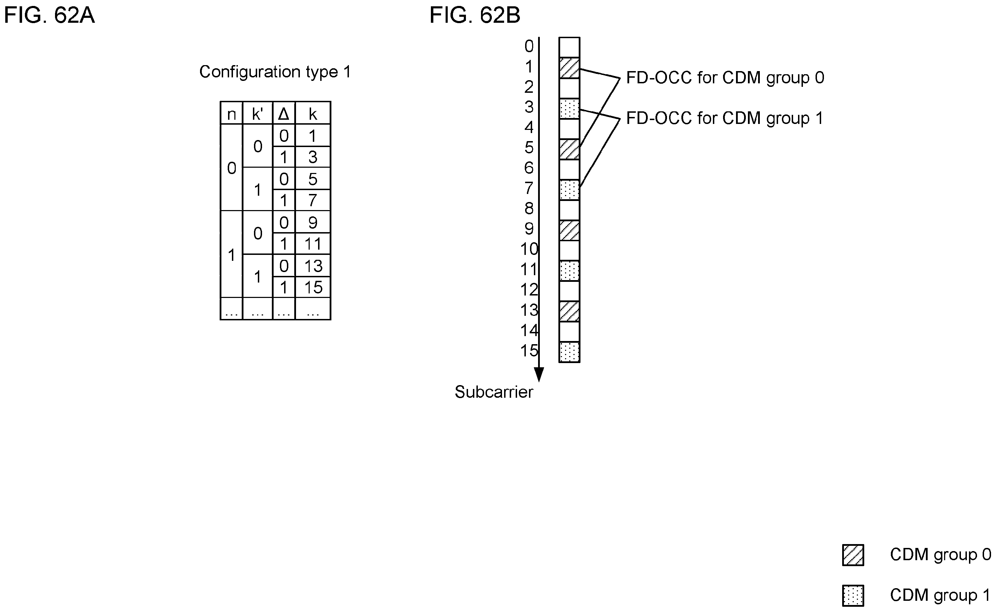

In an example in FIG. 62A, s = 4, i = 2, j = 1, and o = 1, and k is determined based on n = 0, 1, ..., k' = 0, 1, and Δ = 0, 1. In this case, as shown in FIG. 62B, CDM group 0 may be arranged in REs with k = 1, 5, 9, 13, ..., and CDM group 1 may be arranged in REs with k = 3, 7, 11, 15, .... The multiplexing group interval is increased from an existing value of 4 to 8. The intra-group interval is increased from an existing value of 2 to 4. The inter-group interval is increased from an existing value of 1 to 2.

### -- Case 2: basic DMRS type 2

k may follow at least one of some equations below.
--- Equation 0: k may be calculated by the following equation. 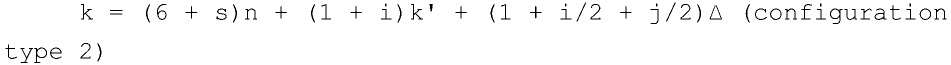 k = (6 + s)n + (1 + i)k' + (1 + i/2 + j/2)Δ (configuration type 2) $k ′ = 0 , 1$ $n = 0 , 1 , …$ $s ∈ \left\{0, 1, …\right\}$ $i ∈ \left\{0, 1, …, s//3\right\}$ $j ∈ \left\{0, 1, …, \left(s-3i\right)//2\right\}$

s may be configured by a NW, or may be defined by a specification.

i may be configured by the NW, or may be defined by the specification.

j may be configured by the NW, or may be defined by the specification.

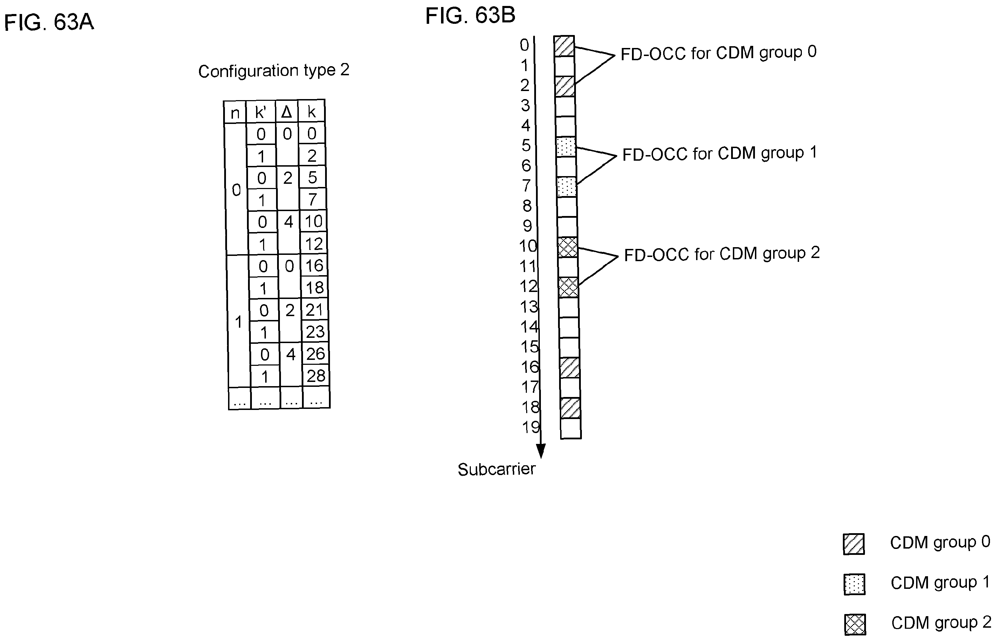

In an example in FIG. 63A, s = 10, i = 1, and j = 2, and k is determined based on n = 0, 1, ..., k' = 0, 1, and Δ = 0, 2, 4. In this case, as shown in FIG. 63B, CDM group 0 may be arranged in REs with k = 0, 2, 16, 18, ..., CDM group 1 may be arranged in REs with k = 5, 7, 21, 23, ..., and CDM group 2 may be arranged in REs with k = 10, 12, 26, 28, .... The multiplexing group interval is increased from an existing value of 6 to 16. The intra-group interval is increased from an existing value of 1 to 2. The inter-group interval is increased from an existing value of 2 to 5.
--- Equation 1: A start point for CDM group 0 may be configured, or may be defined by the specification. k may be calculated by the following equation. 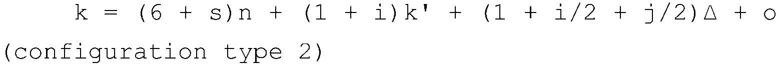 k = (6 + s)n + (1 + i)k' + (1 + i/2 + j/2)Δ + o (configuration type 2) $k ′ = 0 , 1$ $n = 0 , 1 , …$ $s ∈ \left\{0, 1, …\right\}$ $i ∈ \left\{0, 1, …, s//3\right\}$ $j ∈ \left\{0, 1, …, \left(s-3i\right)//2\right\}$ $o ∈ \left\{0, 1, …, s-3i-2j\right\}$

s may be configured by the NW, or may be defined by the specification.

i may be configured by the NW, or may be defined by the specification.

j may be configured by the NW, or may be defined by the specification.

∘ may be configured by the NW, or may be defined by the specification.

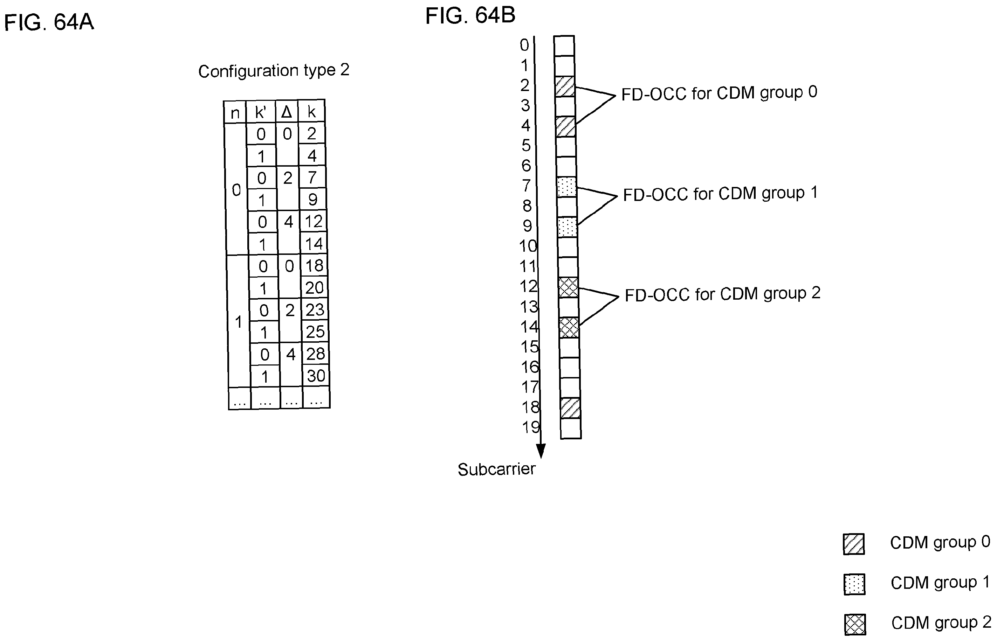

In an example in FIG. 64A, s = 10, i = 1, j = 2, and o = 2, and k is determined based on n = 0, 1, ..., k' = 0, 1, and Δ = 0, 2, 4. In this case, as shown in FIG. 64B, CDM group 0 may be arranged in REs with k = 2, 4, 18, 20, ..., CDM group 1 may be arranged in REs with k = 7, 9, 23, 25, ..., and CDM group 2 may be arranged in REs with k = 12, 14, 28, 30, .... The multiplexing group interval is increased from an existing value of 6 to 16. The intra-group interval is increased from an existing value of 1 to 2. The inter-group interval is increased from an existing value of 2 to 5.

### -- Case 3: enhanced DMRS type 1

k may follow at least one of some equations below.
--- Equation 0: k may be calculated by the following equation. $k = \left(8+s\right) n + \left(2+i\right) k ′ + \left(1+j\right) Δ \left(configuration type 1\right)$ $k ′ = 0 , 1 , 2 , 3$ $n = 0 , 1 , …$ $s ∈ \left\{0, 1, …\right\}$ $i ∈ \left\{0, 1, …, s//3\right\}$ $j ∈ \left\{0, 1, …, s-3i\right\}$

s may be configured by a NW, or may be defined by a specification.

i may be configured by the NW, or may be defined by the specification.

j may be configured by the NW, or may be defined by the specification.

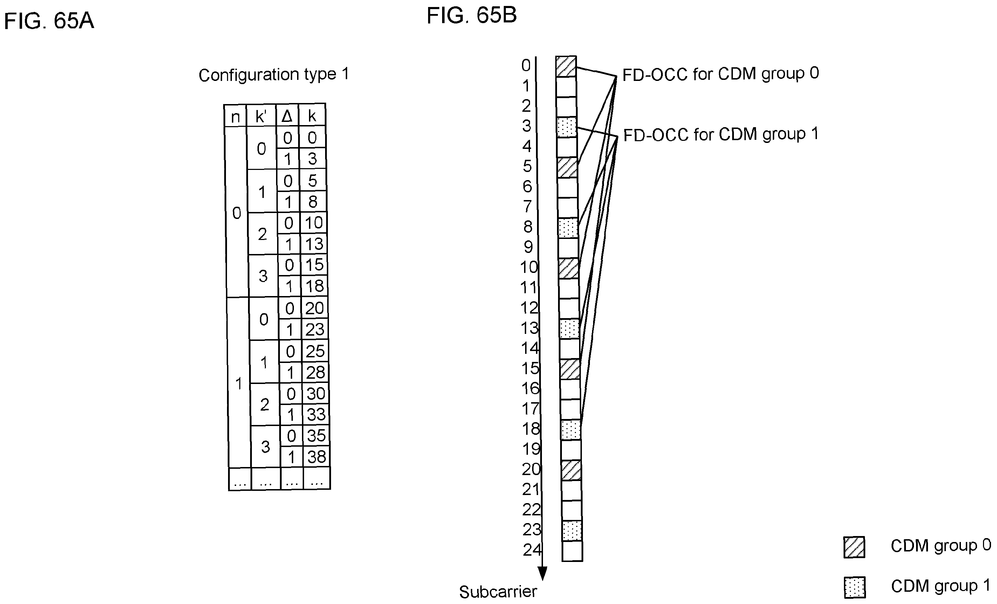

In an example in FIG. 65A, s = 12, i = 3, and j = 2, and k is determined based on n = 0, 1, ..., k' = 0, 1, 2, 3, and Δ = 0, 1. In this case, as shown in FIG. 65B, CDM group 0 may be arranged in REs with k = 0, 5, 10, 15, 20, 25, 30, 35, ..., and CDM group 1 may be arranged in REs with k = 3, 8, 13, 18, 23, 28, 33, 38, .... The multiplexing group interval is increased from an existing value of 8 to 20. The intra-group interval is increased from an existing value of 2 to 5. The inter-group interval is increased from an existing value of 1 to 3.
--- Equation 1: A start point for CDM group 0 may be configured, or may be defined by the specification. k may be calculated by the following equation. 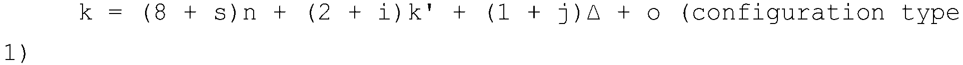 k = (8 + s)n + (2 + i)k' + (1 + j)Δ + o (configuration type 1) $k ′ = 0 , 1 , 2 , 3$ $n = 0 , 1 , …$ $s ∈ \left\{0, 1, …\right\}$ $i ∈ \left\{0, 1, …, s//3\right\}$ $j ∈ \left\{0, 1, …, s-3i\right\}$ $o ∈ \left\{0, 1, …, s-3i-j\right\}$

s may be configured by the NW, or may be defined by the specification.

i may be configured by the NW, or may be defined by the specification.

j may be configured by the NW, or may be defined by the specification.

∘ may be configured by the NW, or may be defined by the specification.

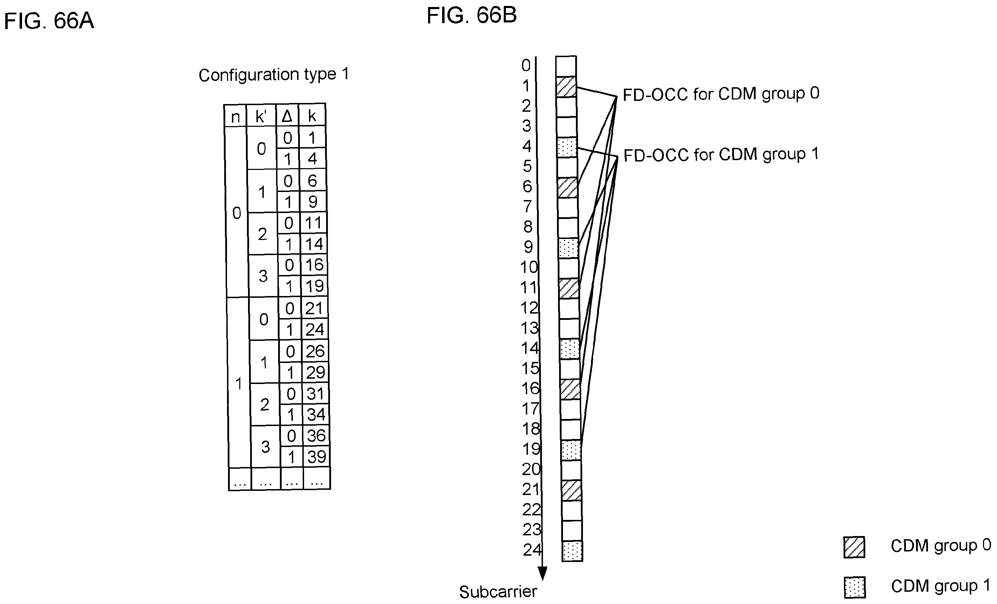

In an example in FIG. 66A, s = 12, i = 3, j = 2, and o = 1, and k is determined based on n = 0, 1, ..., k' = 0, 1, 2, 3, and Δ = 0, 1. In this case, as shown in FIG. 66B, CDM group 0 may be arranged in REs with k = 1, 6, 11, 16, 21, 26, 31, 36, ..., and CDM group 1 may be arranged in REs with k = 4, 9, 14, 19, 24, 29, 34, 39, .... The multiplexing group interval is increased from an existing value of 8 to 20. The intra-group interval is increased from an existing value of 2 to 5. The inter-group interval is increased from an existing value of 1 to 3.

### -- Case 4: enhanced DMRS type 2

k may follow at least one of some equations below.
--- Equation 0: k may be calculated by the following equations. 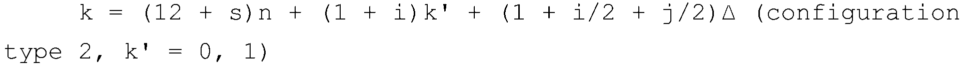 k = (12 + s)n + (1 + i)k' + (1 + i/2 + j/2)Δ (configuration type 2, k' = 0, 1) 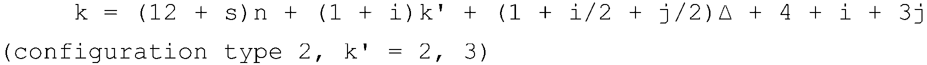 k = (12 + s)n + (1 + i)k' + (1 + i/2 + j/2)Δ + 4 + i + 3j (configuration type 2, k' = 2, 3) $k ′ = 0 , 1 , 2 , 3$ $n = 0 , 1 , …$ $s ∈ \left\{0, 1, …\right\}$ $i ∈ \left\{0, 1, …, s//6\right\}$ $j ∈ \left\{0, 1, …, \left(s-6i\right)//5\right\}$

s may be configured by a NW, or may be defined by a specification.

i may be configured by the NW, or may be defined by the specification.

j may be configured by the NW, or may be defined by the specification.

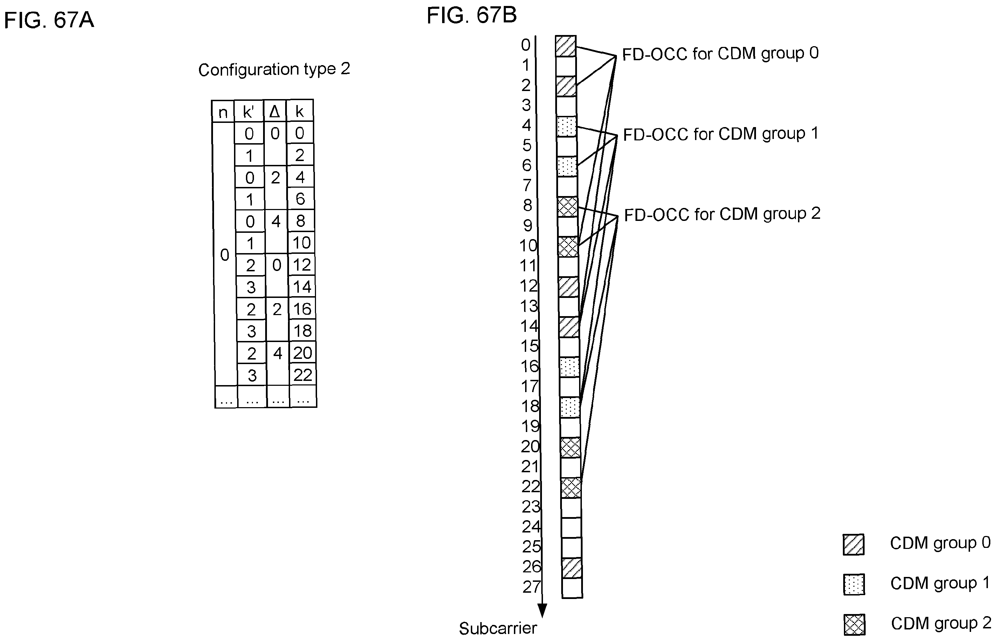

In an example in FIG. 67A, s = 14, i = 1, and j = 1, and k is determined based on n = 0, 1, ..., k' = 0, 1, 2, 3, and Δ = 0, 2, 4. In this case, as shown in FIG. 67B, CDM group 0 may be arranged in REs with k = 0, 2, 12, 14, 26, 28, 38, 40, ..., CDM group 1 may be arranged in REs with k = 4, 6, 16, 18, 30, 32, 42, 44, ..., and CDM group 2 may be arranged in REs with k = 8, 10, 20, 22, 34, 36, 46, 48, .... The multiplexing group interval is increased from an existing value of 12 to 26. The intra-group interval is increased from an existing value of 1 to 2. The inter-group interval is increased from an existing value of 2 to 4.
--- Equation 1: A start point for CDM group 0 may be configured, or may be defined by the specification. k may be calculated by the following equations. 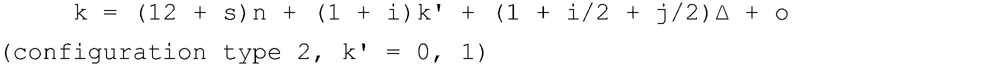 k = (12 + s)n + (1 + i)k' + (1 + i/2 + j/2)Δ + o (configuration type 2, k' = 0, 1) 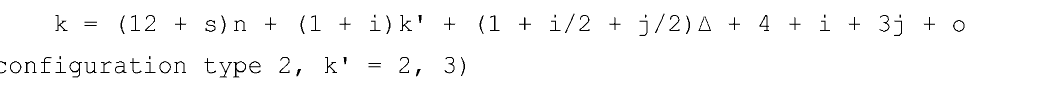 k = (12 + s)n + (1 + i)k' + (1 + i/2 + j/2)Δ + 4 + i + 3j + o (configuration type 2, k' = 2, 3) $k ′ = 0 , 1 , 2 , 3$ $n = 0 , 1 , …$ $s ∈ \left\{0, 1, …\right\}$ $i ∈ \left\{0, 1, …, s//6\right\}$ $j ∈ \left\{0, 1, …, \left(s-6i\right)//5\right\}$ $o ∈ \left\{0, 1, …, s-6i\right\}$

s may be configured by the NW, or may be defined by the specification.

i may be configured by the NW, or may be defined by the specification.

j may be configured by the NW, or may be defined by the specification.

∘ may be configured by the NW, or may be defined by the specification.

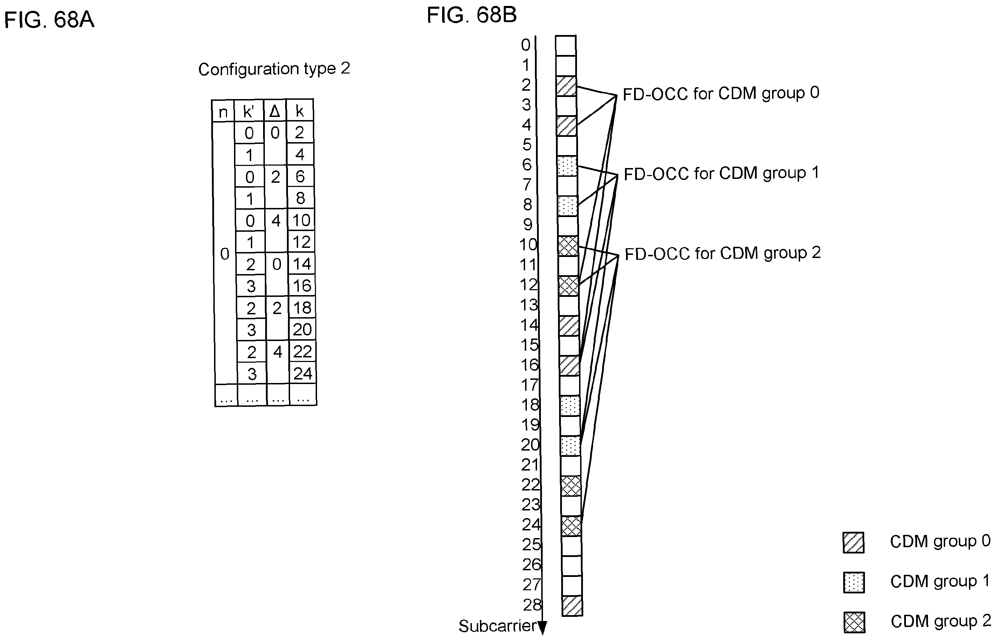

In an example in FIG. 68A, s = 14, i = 1, j = 1, and o = 2, and k is determined based on n = 0, 1, ..., k' = 0, 1, 2, 3, and Δ = 0, 2, 4. In this case, as shown in FIG. 68B, CDM group 0 may be arranged in REs with k = 2, 4, 14, 16, 24, 26, 34, 36, ..., CDM group 1 may be arranged in REs with k = 6, 8, 18, 20, 28, 30, 38, 40, ..., and CDM group 2 may be arranged in REs with k = 10, 12, 22, 24, 32, 34, 42, 44, .... The multiplexing group interval is increased from an existing value of 12 to 22. The intra-group interval is increased from an existing value of 1 to 2. The inter-group interval is increased from an existing value of 2 to 4.

### <<Embodiment 1-2>>

The present embodiment reduces DMRS resources configured for respective DMRS ports, by using a plurality of different DMRS densities (for a plurality of CDM groups). The present embodiment may follow at least one of some options below.

### - Option 1

A multiplexing group interval in at least one CDM group is increased, an intra-group interval is maintained, and an inter-group interval is maintained. Different multiplexing group intervals may be used for a plurality of CDM groups. This option may be applied to at least one of some cases below.

### -- Case 1: basic DMRS type 1

k may follow at least one of some equations below.
--- Equation 0: k may be calculated by the following equations. $k = \left(4+s_0\right) n + 2 k ′ + Δ \left(configuration type 1, CDM group 0\right)$ $k = \left(4+s_1\right) n + 2 k ′ + Δ \left(configuration type 1, CDM group 1\right)$ $k ′ = 0 , 1$ $n = 0 , 1 , …$ $s_ 0 ∈ \left\{0, 2, 4 …\right\}$ $s_ 1 ∈ \left\{0, 2, 4 …\right\}$

s_0 may be configured by a NW, or may be defined by a specification.

s_1 may be configured by the NW, or may be defined by the specification.

4 + s_0 may represent a multiplexing group interval in CDM group 0.

4 + s_1 may represent a multiplexing group interval in CDM group 1.

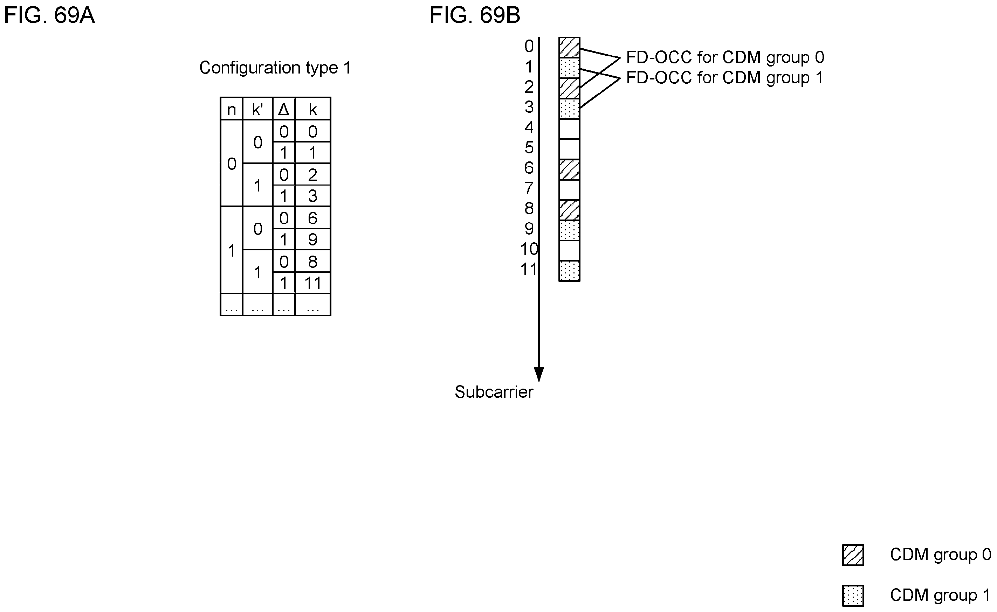

In an example in FIG. 69A, s_0 = 2 and s_1 = 4, and k is determined based on n = 0, 1, ..., k' = 0, 1, and Δ = 0, 1. In this case, as shown in FIG. 69B, CDM group 0 may be arranged in REs with k = 0, 2, 6, 8, ..., and CDM group 1 may be arranged in REs with k = 1, 3, 9, 11, .... The multiplexing group interval in CDM group 0 is increased from an existing value of 4 to 6. The multiplexing group interval in CDM group 1 is increased from an existing value of 4 to 8.
--- Equation 1: Similarly to embodiment 1-1, start point (offset) ∘ for CDM group 0 may be applied to equation 0.

### -- Case 2: basic DMRS type 2

k may follow at least one of some equations below.
--- Equation 0: k may be calculated by the following equations. $k = \left(6+s_0\right) n + k ′ + Δ \left(configuration type 2, CDM group 0\right)$ $k = \left(6+s_1\right) n + k ′ + Δ \left(configuration type 2, CDM group 1\right)$ $k = \left(6+s_2\right) n + k ′ + Δ \left(configuration type 2, CDM group 2\right)$ $k ′ = 0 , 1$ $n = 0 , 1 , …$ $s_ 0 ∈ \left\{0, 6, 12 …\right\}$ $s_ 1 ∈ \left\{0, 6, 12 …\right\}$ $s_ 2 ∈ \left\{0, 6, 12 …\right\}$

s_0 may be configured by a NW, or may be defined by a specification.

s_1 may be configured by the NW, or may be defined by the specification.

s_2 may be configured by the NW, or may be defined by the specification.

6 + s_0 may represent a multiplexing group interval in CDM group 0.

6 + s_1 may represent a multiplexing group interval in CDM group 1.

6 + s_2 may represent a multiplexing group interval in CDM group 2.

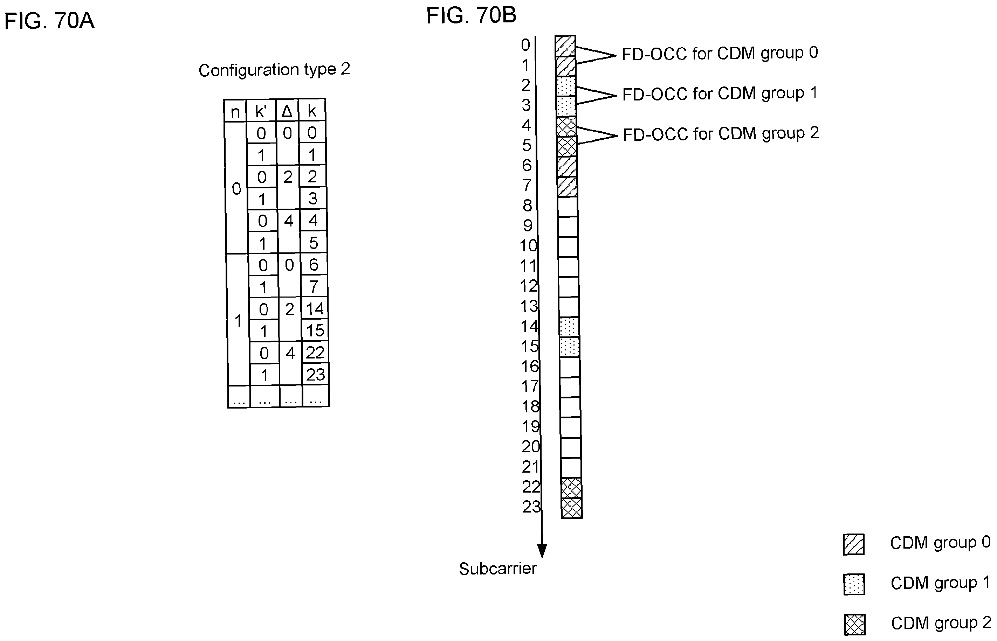

In an example in FIG. 70A, s_0 = 0, s_1 = 6, and s_2 = 12, and k is determined based on n = 0, 1, ..., k' = 0, 1, and Δ = 0, 2, 4. In this case, as shown in FIG. 70B, CDM group 0 may be arranged in REs with k = 0, 1, 6, 7, ..., CDM group 1 may be arranged in REs with k = 2, 3, 14, 15, ..., and CDM group 2 may be arranged in REs with k = 4, 5, 22, 23, .... The multiplexing group interval in CDM group 0 is maintained to an existing value of 6. The multiplexing group interval in CDM group 1 is increased from an existing value of 6 to 12. The multiplexing group interval in CDM group 2 is increased from an existing value of 6 to 18.
--- Equation 1: Similarly to embodiment 1-1, start point (offset) ∘ for CDM group 0 may be applied to equation 0.

### -- Case 3: enhanced DMRS type 1

k may follow at least one of some equations below.
--- Equation 0: k may be calculated by the following equations. $k = \left(8+s_0\right) n + 2 k ′ + Δ \left(configuration type 1, CDM group 0\right)$ $k = \left(8+s_1\right) n + 2 k ′ + Δ \left(configuration type 1, CDM group 1\right)$ $k ′ = 0 , 1$ $n = 0 , 1 , …$ $s_ 0 ∈ \left\{0, 2, 4 …\right\}$ $s_ 1 ∈ \left\{0, 2, 4 …\right\}$

s_0 may be configured by a NW, or may be defined by a specification.

s_1 may be configured by the NW, or may be defined by the specification.

8 + s_0 may represent a multiplexing group interval in CDM group 0.

8 + s_1 may represent a multiplexing group interval in CDM group 1.

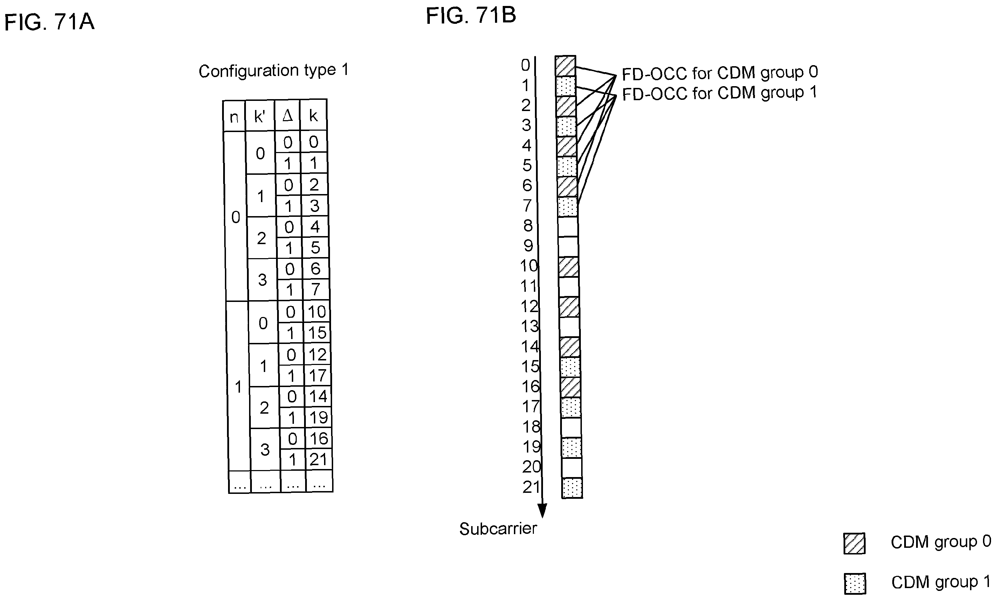

In an example in FIG. 71A, s_0 = 2 and s_1 = 6, and k is determined based on n = 0, 1, ..., k' = 0, 1, 2, 3, and Δ = 0, 1. In this case, as shown in FIG. 71B, CDM group 0 may be arranged in REs with k = 0, 2, 4, 6, 10, 12, 14, 16, ..., and CDM group 1 may be arranged in REs with k = 1, 3, 5, 7, 15, 17, 19, 21, .... The multiplexing group interval in CDM group 0 is increased from an existing value of 8 to 10. The multiplexing group interval in CDM group 1 is increased from an existing value of 8 to 14.
--- Equation 1: Similarly to embodiment 1-1, start point (offset) ∘ for CDM group 0 may be applied to equation 0.

### -- Case 4: enhanced DMRS type 2

k may follow at least one of some equations below.
--- Equation 0: k may be calculated by the following equations. 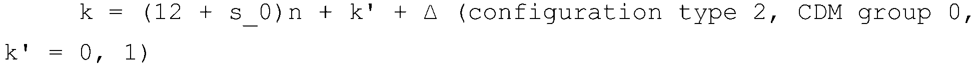 k = (12 + s_0)n + k' + Δ (configuration type 2, CDM group 0, k' = 0, 1) 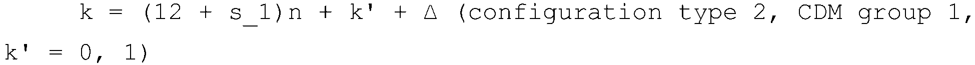 k = (12 + s_1)n + k' + Δ (configuration type 2, CDM group 1, k' = 0, 1) 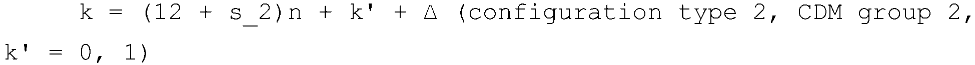 k = (12 + s_2)n + k' + Δ (configuration type 2, CDM group 2, k' = 0, 1) 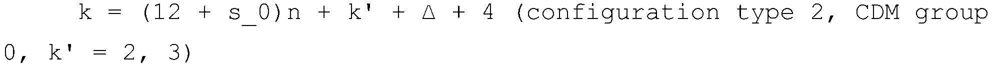 k = (12 + s_0)n + k' + Δ + 4 (configuration type 2, CDM group 0, k' = 2, 3) 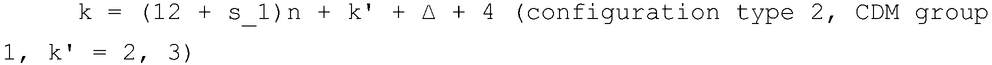 k = (12 + s_1)n + k' + Δ + 4 (configuration type 2, CDM group 1, k' = 2, 3) 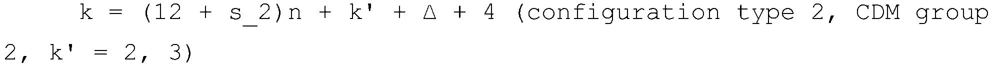 k = (12 + s_2)n + k' + Δ + 4 (configuration type 2, CDM group 2, k' = 2, 3) $k ′ = 0 , 1 , 2 , 3$ $n = 0 , 1 , …$ $s_ 0 ∈ \left\{0, 6, 12 …\right\}$ $s_ 1 ∈ \left\{0, 6, 12 …\right\}$ $s_ 2 ∈ \left\{0, 6, 12 …\right\}$

s_0 may be configured by a NW, or may be defined by a specification.

s_1 may be configured by the NW, or may be defined by the specification.

s_2 may be configured by the NW, or may be defined by the specification.

12 + s_0 may represent a multiplexing group interval in CDM group 0.

12 + s_1 may represent a multiplexing group interval in CDM group 1.

12 + s_2 may represent a multiplexing group interval in CDM group 2.

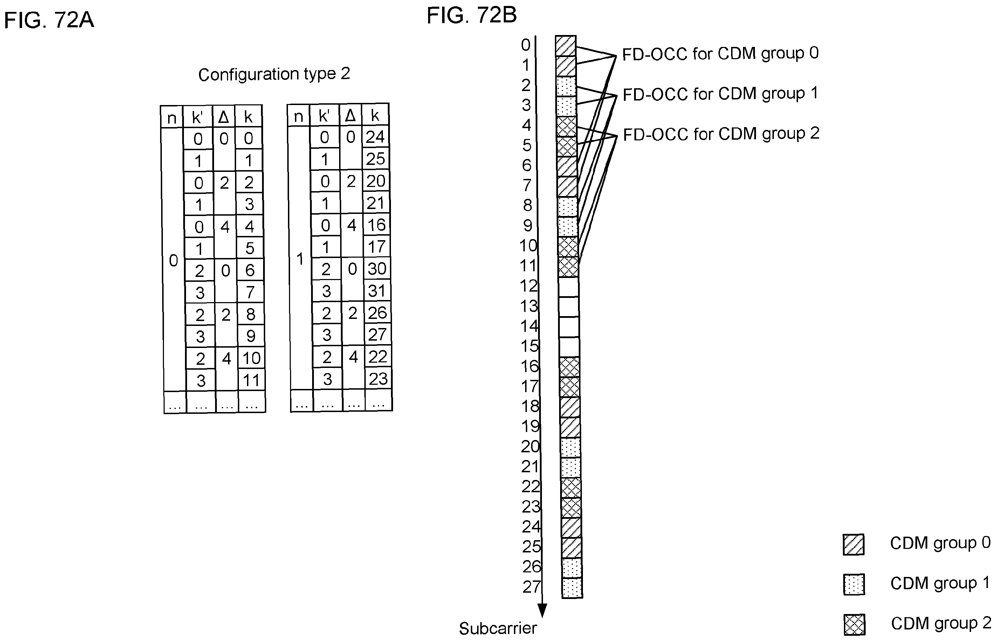

In an example in FIG. 72A, s_0 = 12, s_1 = 6, and s_2 = 0, and k is determined based on n = 0, 1, ..., k' = 0, 1, 2, 3, and Δ = 0, 2, 4. In this case, as shown in FIG. 72B, CDM group 0 may be arranged in REs with k = 0, 1, 6, 7, 24, 25, 30, 31, ..., CDM group 1 may be arranged in REs with k = 2, 3, 8, 9, 20, 21, 26, 27, ..., and CDM group 2 may be arranged in REs with k = 4, 5, 10, 11, 16, 17, 22, 23, .... The multiplexing group interval in CDM group 0 is increased from an existing value of 12 to 24. The multiplexing group interval in CDM group 1 is increased from an existing value of 12 to 18. The multiplexing group interval in CDM group 2 is maintained to an existing value of 12.
--- Equation 1: Similarly to embodiment 1-1, start point (offset) ∘ for CDM group 0 may be applied to equation 0.

### - Option 2

A multiplexing group interval in at least one CDM group is increased, an intra-group interval is increased, and an inter-group interval is maintained. Different sparse factors may be used for a plurality of CDM groups. This option may be applied to at least one of some cases below.

### -- Case 1: basic DMRS type 1

k may follow at least one of some equations below.
--- Equation 0: k may be calculated by the following equations. 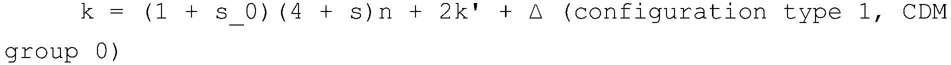 k = (1 + s_0)(4 + s)n + 2k' + Δ (configuration type 1, CDM group 0) 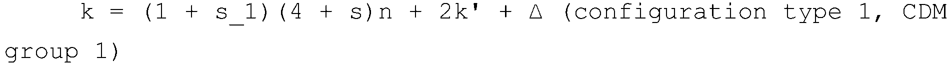 k = (1 + s_1)(4 + s)n + 2k' + Δ (configuration type 1, CDM group 1) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$

s may be configured by a NW, or may be defined by a specification.

s_0 may be configured by the NW, or may be defined by the specification.

s_1 may be configured by the NW, or may be defined by the specification.

(1 + s_0)(4 + s) may represent a multiplexing group interval in CDM group 0.

(1 + s_1)(4 + s) may represent a multiplexing group interval in CDM group 1.

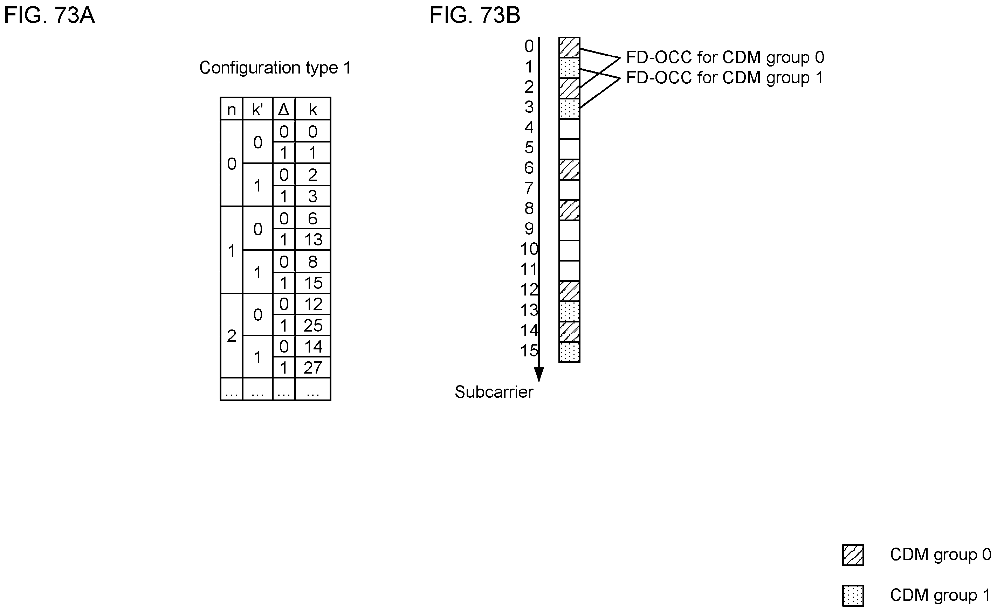

In an example in FIG. 73A, s = 2, s_0 = 0, and s_1 = 1, and k is determined based on n = 0, 1, ..., k' = 0, 1, and Δ = 0, 1. In this case, as shown in FIG. 73B, CDM group 0 may be arranged in REs with k = 0, 2, 6, 8, 12, 14, ..., and CDM group 1 may be arranged in REs with k = 1, 3, 13, 15, 25, 27, .... The multiplexing group interval in CDM group 0 is increased from an existing value of 4 to 6. The multiplexing group interval in CDM group 1 is increased from an existing value of 4 to 12.
--- Equation 1: Similarly to embodiment 1-1, start point (offset) ∘ for CDM group 0 may be applied to equation 0.

### -- Case 2: basic DMRS type 2

k may follow at least one of some equations below.
--- Equation 0: k may be calculated by the following equations. 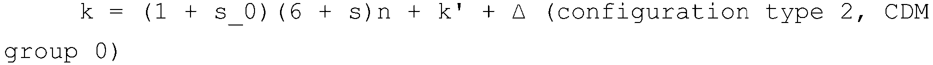 k = (1 + s_0)(6 + s)n + k' + Δ (configuration type 2, CDM group 0) 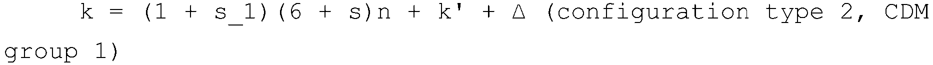 k = (1 + s_1)(6 + s)n + k' + Δ (configuration type 2, CDM group 1) 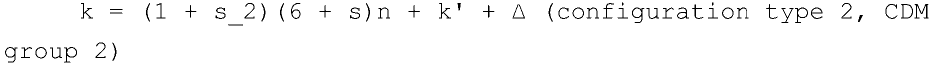 k = (1 + s_2)(6 + s)n + k' + Δ (configuration type 2, CDM group 2) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $s _ 2 ∈ \left\{0, 1, …\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

(1 + s_0)(6 + s) may represent a multiplexing group interval in CDM group 0.

(1 + s_1)(6 + s) may represent a multiplexing group interval in CDM group 1.

(1 + s_2)(6 + s) may represent a multiplexing group interval in CDM group 2.

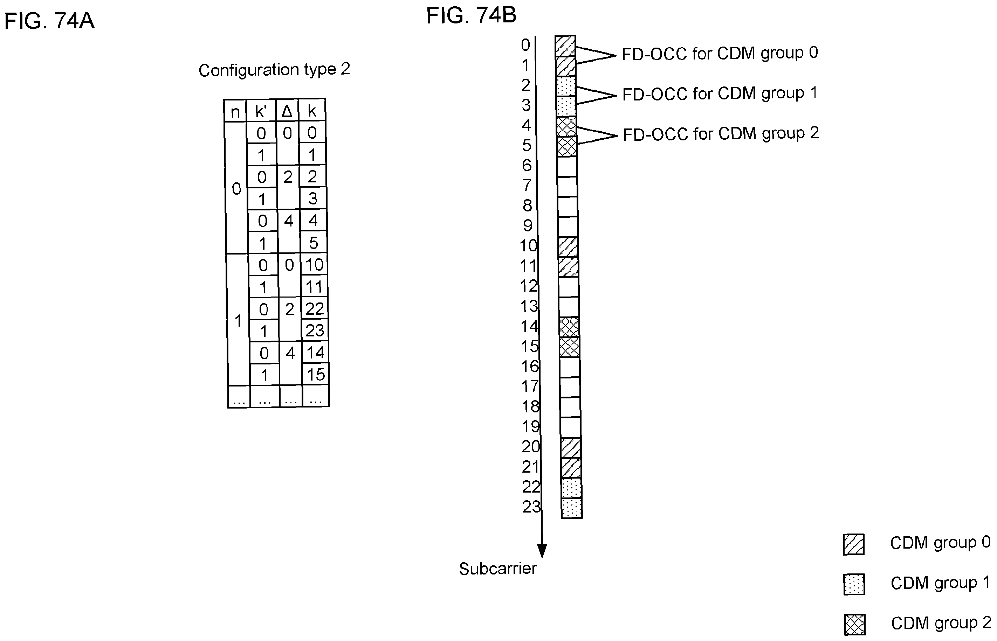

In an example in FIG. 74A, s = 4, s_0 = 0, s_1 = 1, and s_2 = 0, and k is determined based on n = 0, 1, ..., k' = 0, 1, and Δ = 0, 2, 4. In this case, as shown in FIG. 74B, CDM group 0 may be arranged in REs with k = 0, 1, 10, 11, ..., CDM group 1 may be arranged in REs with k = 2, 3, 22, 23, ..., and CDM group 2 may be arranged in REs with k = 4, 5, 14, 15, .... The multiplexing group interval in CDM group 0 is increased from an existing value of 6 to 10. The multiplexing group interval in CDM group 1 is increased from an existing value of 6 to 20. The multiplexing group interval in CDM group 2 is increased from an existing value of 6 to 10.
--- Equation 1: Similarly to embodiment 1-1, start point (offset) ∘ for CDM group 0 may be applied to equation 0.

### -- Case 3: enhanced DMRS type 1

k may follow at least one of some equations below.
--- Equation 0: k may be calculated by the following equations. 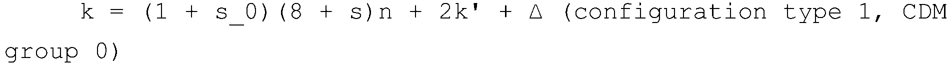 k = (1 + s_0)(8 + s)n + 2k' + Δ (configuration type 1, CDM group 0) 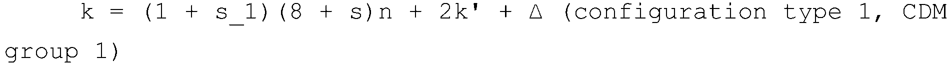 k = (1 + s_1)(8 + s)n + 2k' + Δ (configuration type 1, CDM group 1) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$

s may be configured by a NW, or may be defined by a specification.

s_0 may be configured by the NW, or may be defined by the specification.

s_1 may be configured by the NW, or may be defined by the specification.

(1 + s_0)(8 + s) may represent a multiplexing group interval in CDM group 0.

(1 + s_1)(8 + s) may represent a multiplexing group interval in CDM group 1.

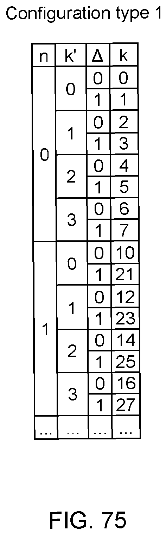

In an example in FIG. 75, s = 2, s_0 = 0, and s_1 = 1, and k is determined based on n = 0, 1, ..., k' = 0, 1, 2, 3, and Δ = 0, 1. In this case, CDM group 0 may be arranged in REs with k = 0, 2, 4, 6, 10, 12, 14, 16, ..., and CDM group 1 may be arranged in REs with k = 1, 3, 5, 7, 21, 23, 25, 27, .... The multiplexing group interval in CDM group 0 is increased from an existing value of 8 to 10. The multiplexing group interval in CDM group 1 is increased from an existing value of 8 to 20.
--- Equation 1: Similarly to embodiment 1-1, start point (offset) ∘ for CDM group 0 may be applied to equation 0.

### -- Case 4: enhanced DMRS type 2

k may follow at least one of some equations below.
--- Equation 0: k may be calculated by the following equations. 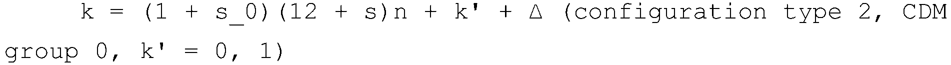 k = (1 + s_0)(12 + s)n + k' + Δ (configuration type 2, CDM group 0, k' = 0, 1) 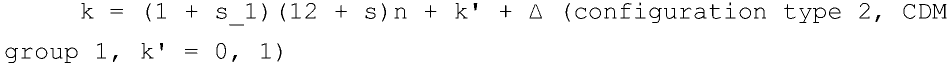 k = (1 + s_1)(12 + s)n + k' + Δ (configuration type 2, CDM group 1, k' = 0, 1) 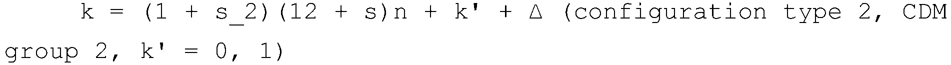 k = (1 + s_2)(12 + s)n + k' + Δ (configuration type 2, CDM group 2, k' = 0, 1) 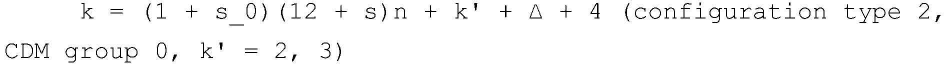 k = (1 + s_0)(12 + s)n + k' + Δ + 4 (configuration type 2, CDM group 0, k' = 2, 3) 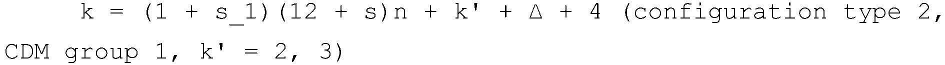 k = (1 + s_1)(12 + s)n + k' + Δ + 4 (configuration type 2, CDM group 1, k' = 2, 3) 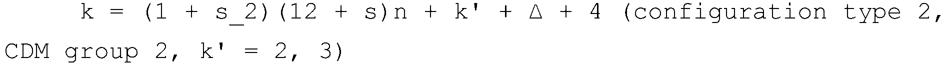 k = (1 + s_2)(12 + s)n + k' + Δ + 4 (configuration type 2, CDM group 2, k' = 2, 3) $k ′ = 0 , 1 , 2 , 3$ $n = 0 , 1 , …$ $s ∈ \left\{0, 1, …\right\}$ $s_ 0 ∈ \left\{0, 1, …\right\}$ $s_ 1 ∈ \left\{0, 1, …\right\}$ $s _ 2 ∈ \left\{0, 1, …\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

(1 + s_0)(12 + s) may represent a multiplexing group interval in CDM group 0.

(1 + s_1)(12 + s) may represent a multiplexing group interval in CDM group 1.

(1 + s_2)(12 + s) may represent a multiplexing group interval in CDM group 2.

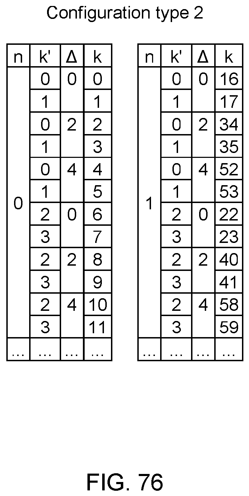

In an example in FIG. 76, s = 4, s_0 = 0, s_1 = 1, and s_2 = 2, and k is determined based on n = 0, 1, ..., k' = 0, 1, 2, 3, and Δ = 0, 2, 4. In this case, CDM group 0 may be arranged in REs with k = 0, 1, 6, 7, 16, 17, 22, 23, ..., CDM group 1 may be arranged in REs with k = 2, 3, 8, 9, 34, 35, 40, 41, ..., and CDM group 2 may be arranged in REs with k = 4, 5, 10, 11, 52, 53, 58, 59, .... The multiplexing group interval in CDM group 0 is increased from an existing value of 12 to 16. The multiplexing group interval in CDM group 1 is increased from an existing value of 12 to 32. The multiplexing group interval in CDM group 2 is increased from an existing value of 12 to 48.
--- Equation 1: Similarly to embodiment 1-1, start point (offset) ∘ for CDM group 0 may be applied to equation 0.

### - Option 3

A multiplexing group interval in at least one CDM group is increased, an intra-group interval is increased, and an inter-group interval is maintained. Different sparse factors may be used for a plurality of CDM groups. This option may be applied to at least one of some cases below.

### -- Case 1: basic DMRS type 1

k may follow at least one of some equations below.
--- Equation 0: k may be calculated by the following equations. 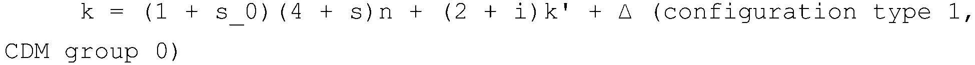 k = (1 + s_0)(4 + s)n + (2 + i)k' + Δ (configuration type 1, CDM group 0) 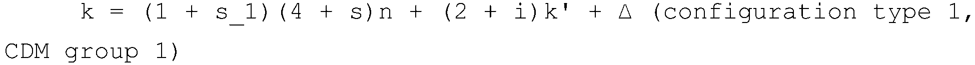 k = (1 + s_1)(4 + s)n + (2 + i)k' + Δ (configuration type 1, CDM group 1) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $i ∈ \left\{0, 1, …, s\right\}$

s may be configured by a NW, or may be defined by a specification.

s_0 may be configured by the NW, or may be defined by the specification.

s_1 may be configured by the NW, or may be defined by the specification.

i may be configured by the NW, or may be defined by the specification.

(1 + s_0)(4 + s) may represent a multiplexing group interval in CDM group 0.

(1 + s_1)(4 + s) may represent a multiplexing group interval in CDM group 1.

2 + i may represent the intra-group interval.

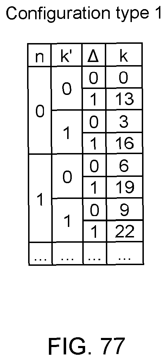

In an example in FIG. 77, s = 2, i = 1, s_0 = 0, and s_1 = 1, and k is determined based on n = 0, 1, ..., k' = 0, 1, and Δ = 0, 1. In this case, CDM group 0 may be arranged in REs with k = 0, 3, 6, 9, ..., and CDM group 1 may be arranged in REs with k = 13, 16, 19, 22, .... The multiplexing group interval in CDM group 0 is increased from an existing value of 4 to 6. The multiplexing group interval in CDM group 1 is increased from an existing value of 4 to 6. The intra-group interval is increased from 2 to 3.
--- Equation 1: Similarly to embodiment 1-1, start point (offset) ∘ for CDM group 0 may be applied to equation 0.

### -- Case 2: basic DMRS type 2

k may follow at least one of some equations below.
--- Equation 0: k may be calculated by the following equations. 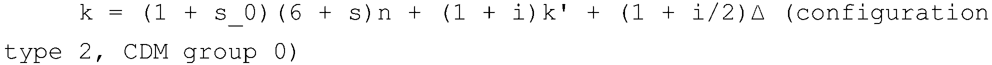 k = (1 + s_0)(6 + s)n + (1 + i)k' + (1 + i/2)Δ (configuration type 2, CDM group 0) 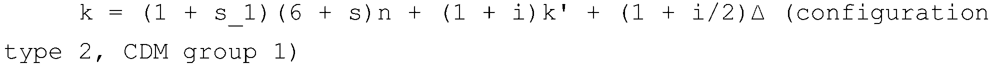 k = (1 + s_1)(6 + s)n + (1 + i)k' + (1 + i/2)Δ (configuration type 2, CDM group 1) 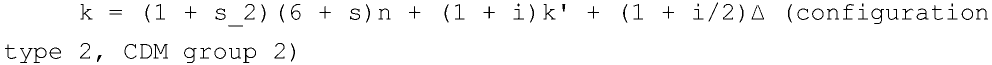 k = (1 + s_2)(6 + s)n + (1 + i)k' + (1 + i/2)Δ (configuration type 2, CDM group 2) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $s _ 2 ∈ \left\{0, 1, …\right\}$ $i ∈ \left\{0, 1, …, s//3\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

i may be configured by the NW, or may be defined by the specification.

(1 + s_0)(6 + s) may represent a multiplexing group interval in CDM group 0.

(1 + s_1)(6 + s) may represent a multiplexing group interval in CDM group 1.

(1 + s_2)(6 + s) may represent a multiplexing group interval in CDM group 2.

1 + i may represent the intra-group interval.

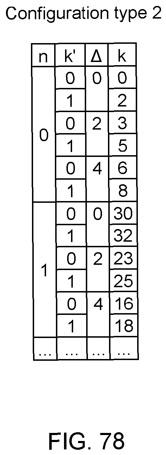

In an example in FIG. 78, s = 4, i = 1, s_0 = 2, s_1 = 1, and s_2 = 0, and k is determined based on n = 0, 1, ..., k' = 0, 1, and Δ = 0, 2, 4. In this case, CDM group 0 may be arranged in REs with k = 0, 2, 30, 32, ..., CDM group 1 may be arranged in REs with k = 3, 5, 23, 25, ..., and CDM group 2 may be arranged in REs with k = 6, 8, 16, 18, .... The multiplexing group interval in CDM group 0 is increased from an existing value of 6 to 30. The multiplexing group interval in CDM group 1 is increased from an existing value of 6 to 20. The multiplexing group interval in CDM group 2 is increased from an existing value of 6 to 10. The intra-group interval is increased from 1 to 2.
--- Equation 1: Similarly to embodiment 1-1, start point (offset) ∘ for CDM group 0 may be applied to equation 0.

### -- Case 3: enhanced DMRS type 1

k may follow at least one of some equations below.
--- Equation 0: k may be calculated by the following equations. 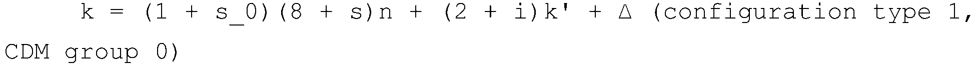 k = (1 + s_0)(8 + s)n + (2 + i)k' + Δ (configuration type 1, CDM group 0) 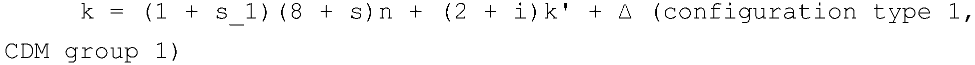 k = (1 + s_1)(8 + s)n + (2 + i)k' + Δ (configuration type 1, CDM group 1) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $i ∈ \left\{0, 1, …, s//3\right\}$

s may be configured by a NW, or may be defined by a specification.

s_0 may be configured by the NW, or may be defined by the specification.

s_1 may be configured by the NW, or may be defined by the specification.

i may be configured by the NW, or may be defined by the specification.

(1 + s_0)(8 + s) may represent a multiplexing group interval in CDM group 0.

(1 + s_1)(8 + s) may represent a multiplexing group interval in CDM group 1.

2 + i may represent the intra-group interval.

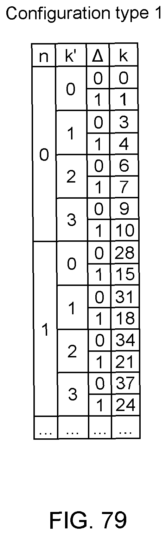

In an example in FIG. 79, s = 6, i = 1, s_0 = 0, and s_1 = 0, and k is determined based on n = 0, 1, ..., k' = 0, 1, 2, 3, and Δ = 0, 1. In this case, CDM group 0 may be arranged in REs with k = 0, 3, 6, 9, 28, 31, 34, 37, ..., and CDM group 1 may be arranged in REs with k = 1, 4, 7, 10, 15, 18, 21, 24, .... The multiplexing group interval in CDM group 0 is increased from an existing value of 8 to 28. The multiplexing group interval in CDM group 1 is increased from an existing value of 8 to 14. The intra-group interval is increased from 2 to 3.
--- Equation 1: Similarly to embodiment 1-1, start point (offset) ∘ for CDM group 0 may be applied to equation 0.

### -- Case 4: enhanced DMRS type 2

k may follow at least one of some equations below.
--- Equation 0: k may be calculated by the following equations. 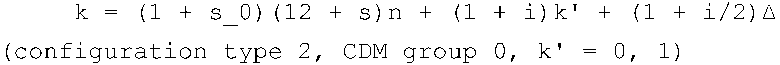 k = (1 + s_0)(12 + s)n + (1 + i)k' + (1 + i/2)Δ (configuration type 2, CDM group 0, k' = 0, 1) 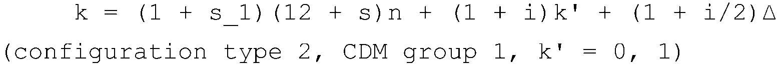 k = (1 + s_1)(12 + s)n + (1 + i)k' + (1 + i/2)Δ (configuration type 2, CDM group 1, k' = 0, 1) 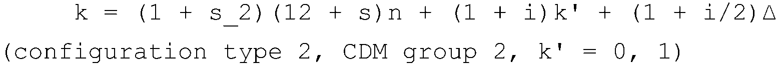 k = (1 + s_2)(12 + s)n + (1 + i)k' + (1 + i/2)Δ (configuration type 2, CDM group 2, k' = 0, 1) 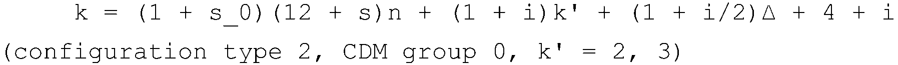 k = (1 + s_0)(12 + s)n + (1 + i)k' + (1 + i/2)Δ + 4 + i (configuration type 2, CDM group 0, k' = 2, 3) 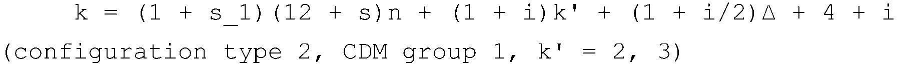 k = (1 + s_1)(12 + s)n + (1 + i)k' + (1 + i/2)Δ + 4 + i (configuration type 2, CDM group 1, k' = 2, 3) 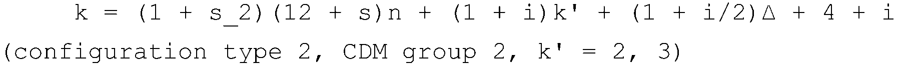 k = (1 + s_2)(12 + s)n + (1 + i)k' + (1 + i/2)Δ + 4 + i (configuration type 2, CDM group 2, k' = 2, 3) $k ′ = 0 , 1 , 2 , 3$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $s _ 2 ∈ \left\{0, 1, …\right\}$ $i ∈ \left\{0, 1, …, s//6\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

i may be configured by the NW, or may be defined by the specification.

(1 + s_0)(12 + s) may represent a multiplexing group interval in CDM group 0.

(1 + s_1)(12 + s) may represent a multiplexing group interval in CDM group 1.

(1 + s_2)(12 + s) may represent a multiplexing group interval in CDM group 2.

1 + i may represent the intra-group interval.

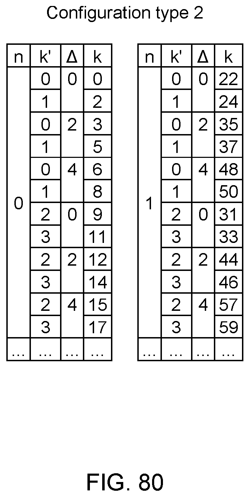

In an example in FIG. 80, s = 10, i = 1, s_0 = 0, s_1 = 1, and s_2 = 2, and k is determined based on n = 0, 1, ..., k' = 0, 1, 2, 3, and Δ = 0, 2, 4. In this case, CDM group 0 may be arranged in REs with k = 0, 2, 9, 11, 22, 24, 31, 33, ..., CDM group 1 may be arranged in REs with k = 3, 5, 12, 14, 35, 37, 44, 46, ..., and CDM group 2 may be arranged in REs with k = 6, 8, 15, 17, 48, 50, 57, 59, .... The multiplexing group interval in CDM group 0 is increased from an existing value of 12 to 22. The multiplexing group interval in CDM group 1 is increased from an existing value of 12 to 32. The multiplexing group interval in CDM group 2 is increased from an existing value of 12 to 42. The intra-group interval is increased from 1 to 2.
--- Equation 1: Similarly to embodiment 1-1, start point (offset) ∘ for CDM group 0 may be applied to equation 0.

### - Option 4

A multiplexing group interval in at least one CDM group is increased, an inter-group interval is increased, and an intra-group interval is maintained. Different sparse factors may be used for a plurality of CDM groups. This option may be applied to only basic/enhanced type 2. This option may be applied to at least one of some cases below.

### -- Case 1: basic DMRS type 2

k may follow at least one of some equations below.
--- Equation 0: k may be calculated by the following equations. 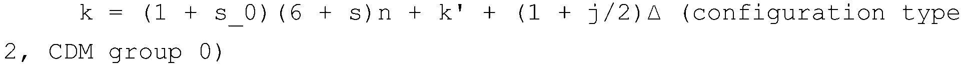 k = (1 + s_0)(6 + s)n + k' + (1 + j/2)Δ (configuration type 2, CDM group 0) 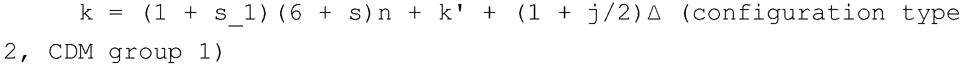 k = (1 + s_1)(6 + s)n + k' + (1 + j/2)Δ (configuration type 2, CDM group 1) 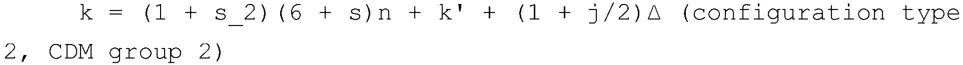 k = (1 + s_2)(6 + s)n + k' + (1 + j/2)Δ (configuration type 2, CDM group 2) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $s _ 2 ∈ \left\{0, 1, …\right\}$ $j ∈ \left\{0, 1, …, s//2\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

j may be configured by the NW, or may be defined by the specification.

(1 + s_0)(6 + s) may represent a multiplexing group interval in CDM group 0.

(1 + s_1)(6 + s) may represent a multiplexing group interval in CDM group 1.

(1 + s_2)(6 + s) may represent a multiplexing group interval in CDM group 2.

1 + j/2 may represent the inter-group interval.

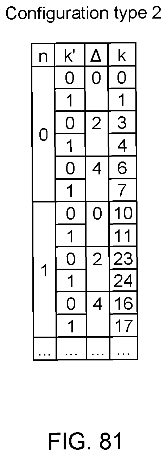

In an example in FIG. 81, s = 4, j = 1, s_0 = 0, s_1 = 1, and s_2 = 0, and k is determined based on n = 0, 1, ..., k' = 0, 1, and Δ = 0, 2, 4. In this case, CDM group 0 may be arranged in REs with k = 0, 1, 10, 11, ..., CDM group 1 may be arranged in REs with k = 3, 4, 23, 24, ..., and CDM group 2 may be arranged in REs with k = 6, 7, 16, 17, .... The multiplexing group interval in CDM group 0 is increased from an existing value of 6 to 10. The multiplexing group interval in CDM group 1 is increased from an existing value of 6 to 20. The multiplexing group interval in CDM group 2 is increased from an existing value of 6 to 10. The inter-group interval is increased from 2 to 3.
--- Equation 1: Similarly to embodiment 1-1, start point (offset) ∘ for CDM group 0 may be applied to equation 0.

### -- Case 2: enhanced DMRS type 2

k may follow at least one of some equations below.
--- Equation 0: k may be calculated by the following equations. 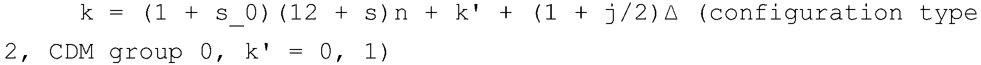 k = (1 + s_0)(12 + s)n + k' + (1 + j/2)Δ (configuration type 2, CDM group 0, k' = 0, 1) 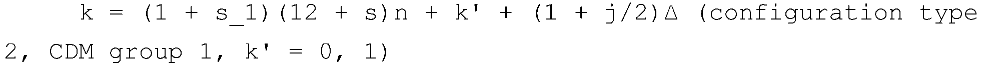 k = (1 + s_1)(12 + s)n + k' + (1 + j/2)Δ (configuration type 2, CDM group 1, k' = 0, 1) 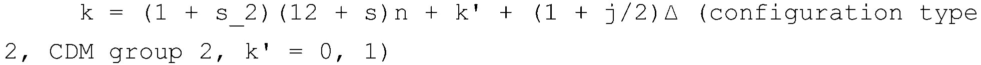 k = (1 + s_2)(12 + s)n + k' + (1 + j/2)Δ (configuration type 2, CDM group 2, k' = 0, 1) 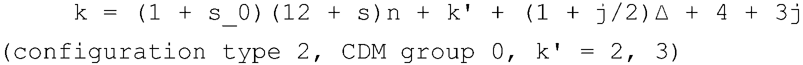 k = (1 + s_0)(12 + s)n + k' + (1 + j/2)Δ + 4 + 3j (configuration type 2, CDM group 0, k' = 2, 3) 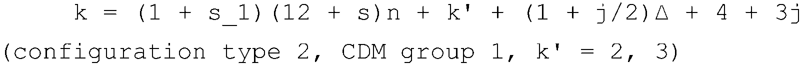 k = (1 + s_1)(12 + s)n + k' + (1 + j/2)Δ + 4 + 3j (configuration type 2, CDM group 1, k' = 2, 3) 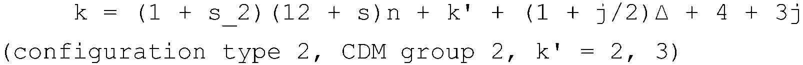 k = (1 + s_2)(12 + s)n + k' + (1 + j/2)Δ + 4 + 3j (configuration type 2, CDM group 2, k' = 2, 3) $k ′ = 0 , 1 , 2 , 3$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $s _ 2 ∈ \left\{0, 1, …\right\}$ $j ∈ \left\{0, 1, …, s//5\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

j may be configured by the NW, or may be defined by the specification.

(1 + s_0)(12 + s) may represent a multiplexing group interval in CDM group 0.

(1 + s_1)(12 + s) may represent a multiplexing group interval in CDM group 1.

(1 + s_2)(12 + s) may represent a multiplexing group interval in CDM group 2.

1 + j/2 may represent the inter-group interval.

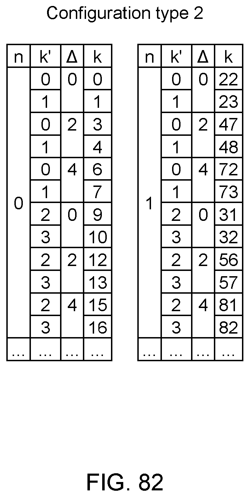

In an example in FIG. 82, s = 10, j = 1, s_0 = 0, s_1 = 1, and s_2 = 2, and k is determined based on n = 0, 1, ..., k' = 0, 1, 2, 3, and Δ = 0, 2, 4. In this case, CDM group 0 may be arranged in REs with k = 0, 1, 9, 10, 22, 23, 31, 32, ..., CDM group 1 may be arranged in REs with k = 3, 4, 12, 13, 47, 48, 56, 57, ..., and CDM group 2 may be arranged in REs with k = 6, 7, 15, 16, 72, 73, 81, 82, .... The multiplexing group interval in CDM group 0 is increased from an existing value of 12 to 22. The multiplexing group interval in CDM group 1 is increased from an existing value of 12 to 34. The multiplexing group interval in CDM group 2 is increased from an existing value of 12 to 66. The inter-group interval is increased from 2 to 3.
--- Equation 1: Similarly to embodiment 1-1, start point (offset) ∘ for CDM group 0 may be applied to equation 0.

### - Option 5

A multiplexing group interval in at least one CDM group is increased, an intra-group interval is increased, and an inter-group interval is increased. Different sparse factors may be used for a plurality of CDM groups. This option may be applied to at least one of some cases below.

### -- Case 1: basic DMRS type 1

k may follow at least one of some equations below.
--- Equation 0: k may be calculated by the following equations. 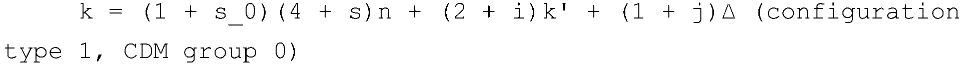 k = (1 + s_0)(4 + s)n + (2 + i)k' + (1 + j)Δ (configuration type 1, CDM group 0) 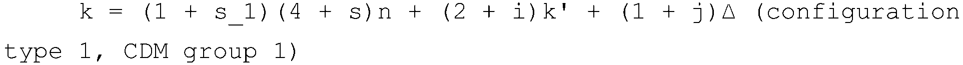 k = (1 + s_1)(4 + s)n + (2 + i)k' + (1 + j)Δ (configuration type 1, CDM group 1) $k ′ = 0 , 1$ $n = 0 , 1 , …$ $s ∈ \left\{0, 1, …\right\}$ $s_ 0 ∈ \left\{0, 1, …\right\}$ $s_ 1 ∈ \left\{0, 1, …\right\}$ $i ∈ \left\{0, 1, …, s\right\}$ $j ∈ \left\{0, 1, …, s-i\right\}$

s may be configured by a NW, or may be defined by a specification.

s_0 may be configured by the NW, or may be defined by the specification.

s_1 may be configured by the NW, or may be defined by the specification.

i may be configured by the NW, or may be defined by the specification.

j may be configured by the NW, or may be defined by the specification.

(1 + s_0)(4 + s) may represent a multiplexing group interval in CDM group 0.

(1 + s_1)(4 + s) may represent a multiplexing group interval in CDM group 1.

2 + i may represent the intra-group interval.

1 + j may represent the inter-group interval.

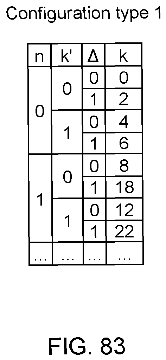

In an example in FIG. 83, s = 4, i = 2, j = 1, s_0 = 0, and s_1 = 1, and k is determined based on n = 0, 1, ..., k' = 0, 1, and Δ = 0, 1. In this case, CDM group 0 may be arranged in REs with k = 0, 4, 8, 12, ..., and CDM group 1 may be arranged in REs with k = 2, 6, 18, 22, .... The multiplexing group interval in CDM group 0 is increased from an existing value of 4 to 8. The multiplexing group interval in CDM group 1 is increased from an existing value of 4 to 16. The intra-group interval is maintained to an existing value of 2. The inter-group interval is increased from an existing value of 1 to 2.
--- Equation 1: Similarly to embodiment 1-1, start point (offset) ∘ for CDM group 0 may be applied to equation 0.

### -- Case 2: basic DMRS type 2

k may follow at least one of some equations below.
--- Equation 0: k may be calculated by the following equations. 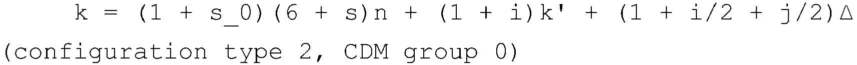 k = (1 + s_0)(6 + s)n + (1 + i)k' + (1 + i/2 + j/2)Δ (configuration type 2, CDM group 0) 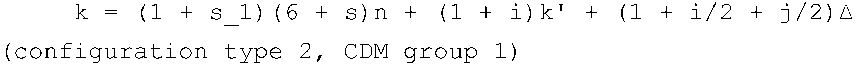 k = (1 + s_1)(6 + s)n + (1 + i)k' + (1 + i/2 + j/2)Δ (configuration type 2, CDM group 1) 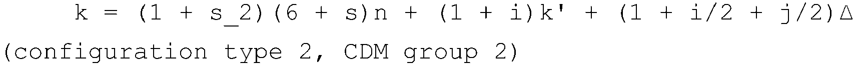 k = (1 + s_2)(6 + s)n + (1 + i)k' + (1 + i/2 + j/2)Δ (configuration type 2, CDM group 2) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $s _ 2 ∈ \left\{0, 1, …\right\}$ $i ∈ \left\{0, 1, …, s//3\right\}$ $j ∈ \left\{0, 1, …, \left(s-3i\right)//2\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

i may be configured by the NW, or may be defined by the specification.

j may be configured by the NW, or may be defined by the specification.

(1 + s_0)(6 + s) may represent a multiplexing group interval in CDM group 0.

(1 + s_1)(6 + s) may represent a multiplexing group interval in CDM group 1.

(1 + s_2)(6 + s) may represent a multiplexing group interval in CDM group 2.

1 + i may represent the intra-group interval.

(1 + i/2 + j/2)×2 may represent the inter-group interval.

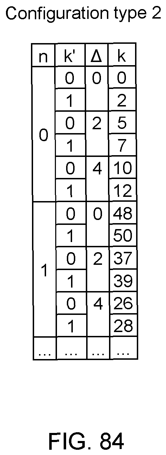

In an example in FIG. 84, s = 10, i = 1, j = 2, s_0 = 2, s_1 = 1, and s_2 = 0, and k is determined based on n = 0, 1, ..., k' = 0, 1, and Δ = 0, 2, 4. In this case, CDM group 0 may be arranged in REs with k = 0, 2, 48, 50, ..., CDM group 1 may be arranged in REs with k = 5, 7, 37, 39, ..., and CDM group 2 may be arranged in REs with k = 10, 12, 26, 28, .... The multiplexing group interval in CDM group 0 is increased from an existing value of 6 to 48. The multiplexing group interval in CDM group 1 is increased from an existing value of 6 to 32. The multiplexing group interval in CDM group 2 is increased from an existing value of 6 to 16. The intra-group interval is increased from an existing value of 1 to 2. The inter-group interval is increased from an existing value of 2 to 5.
--- Equation 1: Similarly to embodiment 1-1, start point (offset) ∘ for CDM group 0 may be applied to equation 0.

### -- Case 3: enhanced DMRS type 1

k may follow at least one of some equations below.
--- Equation 0: k may be calculated by the following equations. 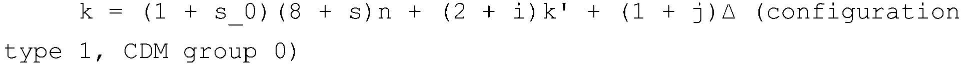 k = (1 + s_0)(8 + s)n + (2 + i)k' + (1 + j)Δ (configuration type 1, CDM group 0) 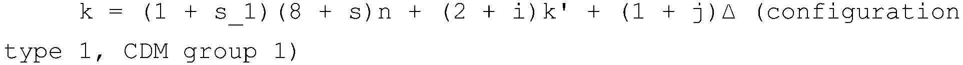 k = (1 + s_1)(8 + s)n + (2 + i)k' + (1 + j)Δ (configuration type 1, CDM group 1) $k ′ = 0 , 1$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $i ∈ \left\{0, 1, …, s//3\right\}$ $j ∈ \left\{0, 1, …, s-3i\right\}$

s may be configured by a NW, or may be defined by a specification.

s_0 may be configured by the NW, or may be defined by the specification.

s_1 may be configured by the NW, or may be defined by the specification.

i may be configured by the NW, or may be defined by the specification.

j may be configured by the NW, or may be defined by the specification.

(1 + s_0)(8 + s) may represent a multiplexing group interval in CDM group 0.

(1 + s_1)(8 + s) may represent a multiplexing group interval in CDM group 1.

2 + i may represent the intra-group interval.

1 + j may represent the inter-group interval.

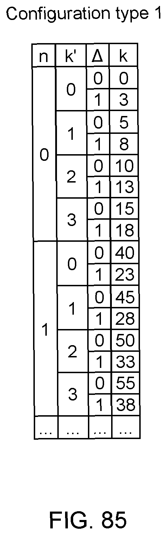

In an example in FIG. 85, s = 12, i = 3, j = 2, s_0 = 1, and s_1 = 0, and k is determined based on n = 0, 1, ..., k' = 0, 1, 2, 3, and Δ = 0, 1. In this case, CDM group 0 may be arranged in REs with k = 0, 5, 10, 15, 40, 45, 50, 55, ..., and CDM group 1 may be arranged in REs with k = 3, 8, 13, 18, 23, 28, 33, 38, .... The multiplexing group interval in CDM group 0 is increased from an existing value of 8 to 40. The multiplexing group interval in CDM group 1 is increased from an existing value of 8 to 20. The intra-group interval is increased from an existing value of 2 to 5. The inter-group interval is increased from an existing value of 1 to 3.
--- Equation 1: Similarly to embodiment 1-1, start point (offset) ∘ for CDM group 0 may be applied to equation 0.

### -- Case 4: enhanced DMRS type 2

k may follow at least one of some equations below.
--- Equation 0: k may be calculated by the following equations. 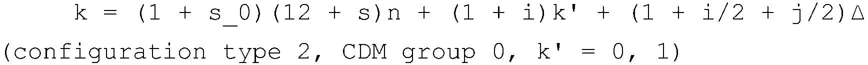 k = (1 + s_0)(12 + s)n + (1 + i)k' + (1 + i/2 + j/2)Δ (configuration type 2, CDM group 0, k' = 0, 1) 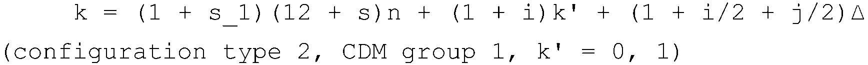 k = (1 + s_1)(12 + s)n + (1 + i)k' + (1 + i/2 + j/2)Δ (configuration type 2, CDM group 1, k' = 0, 1) 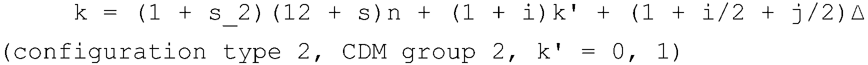 k = (1 + s_2)(12 + s)n + (1 + i)k' + (1 + i/2 + j/2)Δ (configuration type 2, CDM group 2, k' = 0, 1) 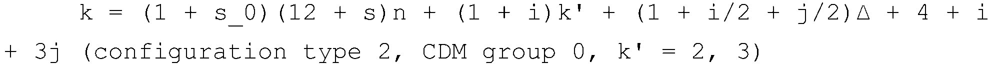 k = (1 + s_0)(12 + s)n + (1 + i)k' + (1 + i/2 + j/2)Δ + 4 + i + 3j (configuration type 2, CDM group 0, k' = 2, 3) 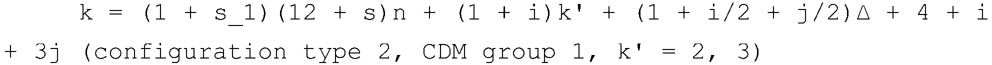 k = (1 + s_1)(12 + s)n + (1 + i)k' + (1 + i/2 + j/2)Δ + 4 + i + 3j (configuration type 2, CDM group 1, k' = 2, 3) 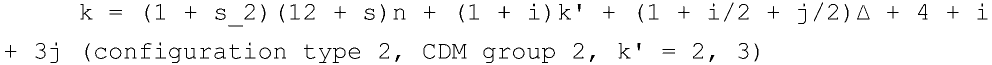 k = (1 + s_2)(12 + s)n + (1 + i)k' + (1 + i/2 + j/2)Δ + 4 + i + 3j (configuration type 2, CDM group 2, k' = 2, 3) $k ′ = 0 , 1 , 2 , 3$ $n = 0 , 1 , …$ $s ∈ \left\{0, 1, …\right\}$ $s _ 0 ∈ \left\{0, 1, …\right\}$ $s_ 1 ∈ \left\{0, 1, …\right\}$ $s _ 2 ∈ \left\{0, 1, …\right\}$ $i ∈ \left\{0, 1, …, s//6\right\}$ $j ∈ \left\{0, 1, …, \left(s-6i\right)//5\right\}$

s may be configured by a NW, or may be defined by a specification.

s_0 may be configured by the NW, or may be defined by the specification.

s_1 may be configured by the NW, or may be defined by the specification.

s_2 may be configured by the NW, or may be defined by the specification.

i may be configured by the NW, or may be defined by the specification.

j may be configured by the NW, or may be defined by the specification.

(1 + s_0)(12 + s) may represent a multiplexing group interval in CDM group 0.

(1 + s_1)(12 + s) may represent a multiplexing group interval in CDM group 1.

(1 + s_2)(12 + s) may represent a multiplexing group interval in CDM group 2.

1 + i may represent the intra-group interval.

(1 + i/2 + j/2)×2 may represent the inter-group interval.

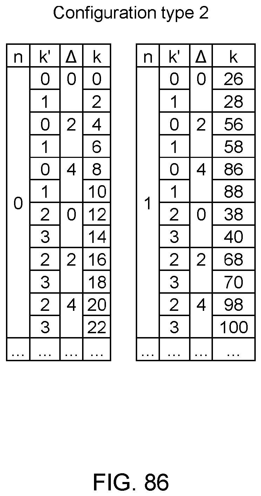

In an example in FIG. 86, s = 14, i = 1, j = 1, s_0 = 0, s_1 = 1, and s_2 = 2, and k is determined based on n = 0, 1, ..., k' = 0, 1, 2, 3, and Δ = 0, 2, 4. In this case, CDM group 0 may be arranged in REs with k = 0, 2, 12, 14, 26, 28, 38, 40, ..., CDM group 1 may be arranged in REs with k = 4, 6, 16, 18, 56, 58, 68, 70, ..., and CDM group 2 may be arranged in REs with k = 8, 10, 20, 22, 86, 88, 98,100, .... The multiplexing group interval in CDM group 0 is increased from an existing value of 12 to 26. The multiplexing group interval in CDM group 1 is increased from an existing value of 12 to 52. The multiplexing group interval in CDM group 2 is increased from an existing value of 12 to 78. The intra-group interval is increased from an existing value of 1 to 2. The inter-group interval is increased from an existing value of 2 to 4.
--- Equation 1: Similarly to embodiment 1-1, start point (offset) ∘ for CDM group 0 may be applied to equation 0.

### <<Embodiment 1-3>>

The present embodiment customizes a subcarrier index for each DMRS CDM group. The present embodiment may follow at least one of some options below.

### - Option 1

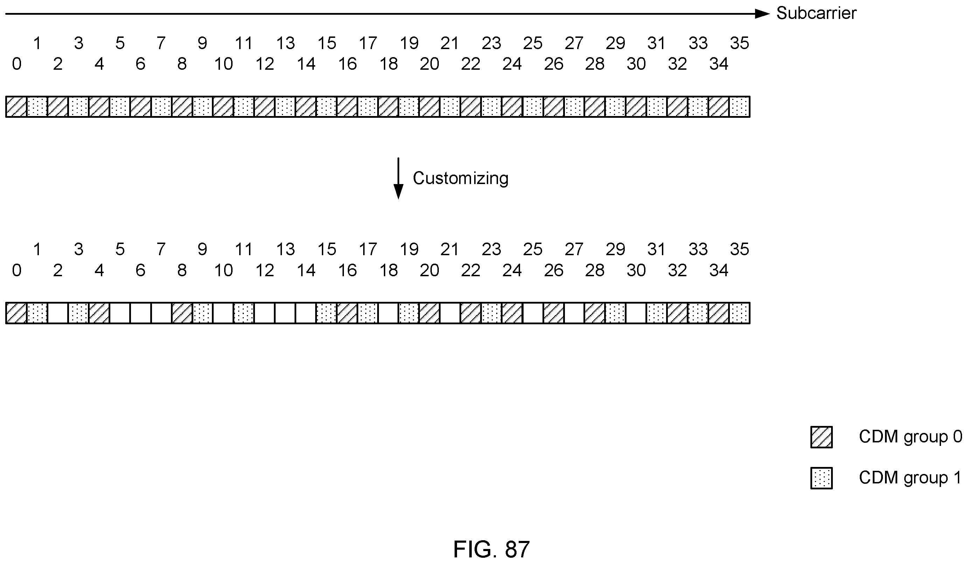

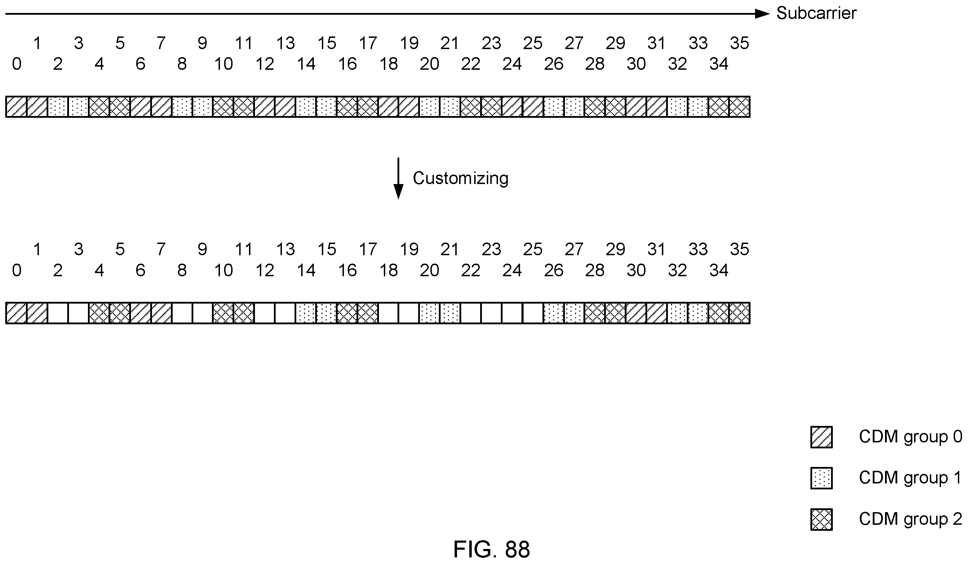

A subcarrier index for each DMRS CDM group based on a Rel-18 DMRS pattern may be customized. This option may be applied to at least one of some cases below.
-- Case 1/2: In basic/enhanced DMRS configuration type 1, a subcarrier index for each DMRS CDM group is customized. A resource for each DMRS port/each CDM group may be indicated/configured by at least one of customized parameters n, Δ, k', and k.
--- This case may follow at least one of some parameters below.
---- A subset of n may be indicated/configured in order to determine which subcarrier corresponds to a DMRS.
---- A subset of Δ may be indicated/configured in order to determine which subcarrier corresponds to a DMRS.
---- A subset of k' may be indicated/configured in order to determine which subcarrier corresponds to a DMRS.
---- A subset of k may be indicated/configured in order to determine which subcarrier corresponds to a DMRS.
---- A combination of at least two of a subset of n, a subset of Δ, a subset of k', and a subset of k may be indicated/configured in order to determine which subcarrier corresponds to a DMRS.
--- As in an example in FIG. 87, in basic/enhanced DMRS configuration type 1, subcarrier indices {0, 2, 4, ..., 34} for CDM group 0 and subcarrier indices {1, 3, 5, ..., 35} for CDM group 1 may be customized, and subcarrier indices {0, 4, 6, 8, 16, 20, 22, 24, 26, 28, 32, 34} for CDM group 0 and subcarrier indices {1, 3, 9, 11, 15, 17, 19, 23, 29, 31, 33, 35} for CDM group 1 may be configured by a NW.
-- Case 3/4: In basic/enhanced DMRS configuration type 2, a subcarrier index for each DMRS CDM group is customized. A resource for each DMRS port/each CDM group may be indicated/configured by at least one of customized parameters n, Δ, k', and k.
--- This case may follow at least one of some parameters below.
---- A subset of n may be indicated/configured in order to determine which subcarrier corresponds to a DMRS.
---- A subset of Δ may be indicated/configured in order to determine which subcarrier corresponds to a DMRS.
---- A subset of k' may be indicated/configured in order to determine which subcarrier corresponds to a DMRS.
---- A subset of k may be indicated/configured in order to determine which subcarrier corresponds to a DMRS.
---- A combination of at least two of a subset of n, a subset of Δ, a subset of k', and a subset of k may be indicated/configured in order to determine which subcarrier corresponds to a DMRS.
--- As in an example in FIG. 88, in basic/enhanced DMRS configuration type 2, subcarrier indices {0, 1, 6, 7, 12, 13, 18, 19, 24, 25, 30, 31} for CDM group 0, subcarrier indices {2, 3, 8, 9, 14, 15, 20, 21, 26, 27, 32, 33} for CDM group 1, and subcarrier indices {4, 5, 10, 11, 16, 17, 22, 23, 28, 29, 34, 35} for CDM group 2 may be customized, and subcarrier indices {0, 1, 6, 7, 30, 31} for CDM group 0, subcarrier indices {14, 15, 20, 21, 26, 27, 32, 33} for CDM group 1, and subcarrier indices {4, 5, 10, 11, 16, 17, 28, 29, 34, 35} for CDM group 2 may be configured by a NW.

### - Option 2

A subcarrier index for each DMRS CDM group may be customized without consideration of a Rel-18 DMRS pattern.

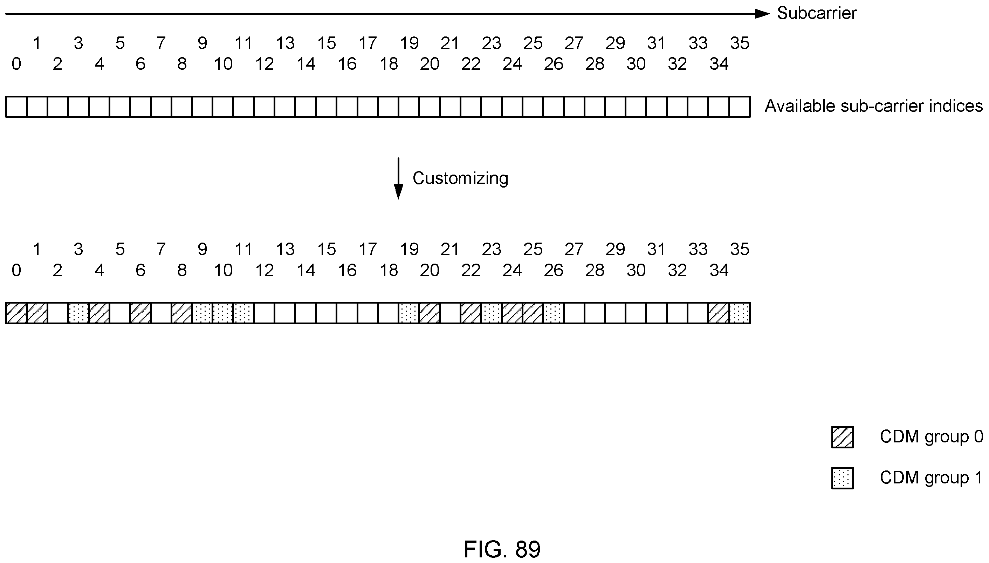

Subcarrier indices for two DMRS CDM groups (basic/enhanced DMRS configuration type 1) may be customized without consideration of a Rel-18 DMRS pattern. As in an example in FIG. 89, available subcarrier indices {0, 1, ..., 35} may be customized, and subcarrier indices {0, 1, 4, 6, 8, 20, 22, 24, 25, 34} for CDM group 0 and subcarrier indices {3, 9, 10, 11, 19, 23, 26, 35} for CDM group 1 may be configured by a NW.

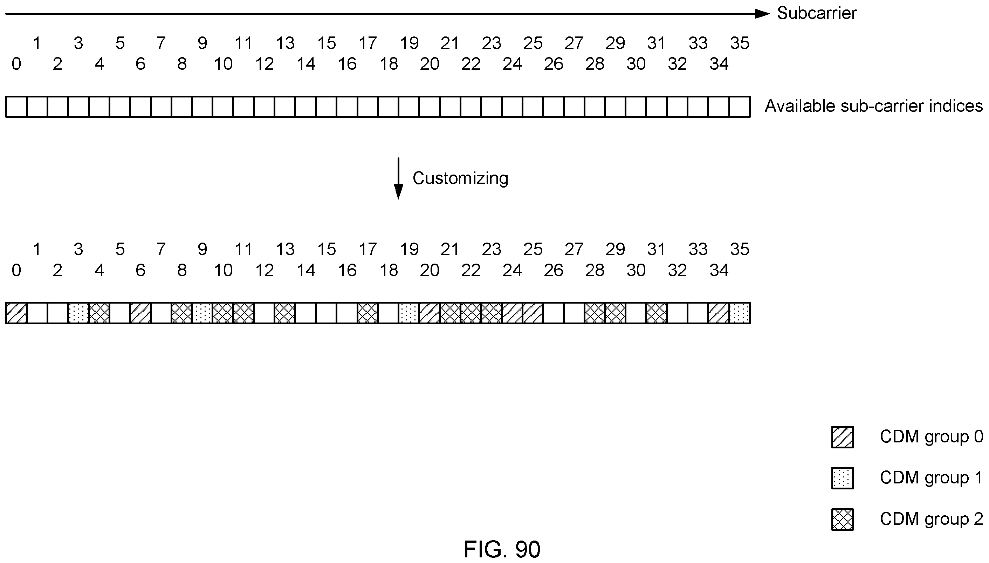

Subcarrier indices for three DMRS CDM groups (basic/enhanced DMRS configuration type 2) may be customized without consideration of a Rel-18 DMRS pattern. As in an example in FIG. 90, available subcarrier indices {0, 1, ..., 35} may be customized, and subcarrier indices {0, 6, 20, 24, 25, 34} for CDM group 0, subcarrier indices {3, 9, 19, 35} for CDM group 1, and subcarrier indices {4, 8, 10, 11, 13, 17, 21, 22, 23, 28, 30, 31} for CDM group 2 may be configured by a NW.

### <<Embodiment 1-4>>

The present embodiment relates to a DMRS configuration to be reduced. The present embodiment may follow at least one of some options below.

### - Option 1

In non-AI/ML channel estimation, a UE acquires a DMRS frequency configuration parameter from a NW through note 1 to be described below. The parameter may include at least one of some parameters below.
-- A DMRS configuration type
-- An increased multiplexing group interval or parameter s associated therewith
-- An increased intra-group interval or parameter i associated therewith
-- An increased inter-group interval or parameter j associated therewith
-- A plurality of CDM groups having different multiplexing group intervals/different sparse factors or parameters s_0, s_1, s_2 associated therewith
-- A subcarrier index for each CDM group
-- Another auxiliary parameter
-- A combination of a plurality of parameters among the parameters described above

### - Option 2

In AI/ML channel estimation, a parameter for DMRS frequency resource configuration (DMRS configuration/DMRS configuration parameter/DMRS frequency configuration parameter) is acquired according to an ID of a configured/activated/selected AI/ML functionality/model. The parameter may follow at least one of some procedures below.
-- An AI/ML functionality/model corresponds to one or more sets of DMRS frequency configuration parameters.
-- The UE determines a DMRS frequency configuration parameter, based on an AI/ML functionality/model. Here, the UE may follow at least one of some procedures below.
--- The UE may directly determine a DMRS frequency configuration parameter (set), based on an AI/ML functionality/model.
--- The UE may determine a DMRS frequency configuration parameter (set), based on an AI/ML functionality/model combined with a UE capability.
-- The UE determines a DMRS frequency configuration parameter, based on a result/output of an ID of an associated AI/ML functionality/model.
-- The UE/NW may select one of a plurality of DMRS frequency configuration parameter sets, and an ID of the selected set may be received/reported by the UE through at least one of notes 1 to 3 to be described below.
-- Variation: A DMRS frequency configuration parameter may be configured, and the UE may determine, based on the DMRS frequency configuration parameter, which AI/ML functionality/model is to be used.

### - Option 3

A combination of options 1 and 2. For example, some candidate DMRS frequency configuration parameters are determined according to option 1, and a DMRS frequency configuration parameter is determined among the some candidate DMRS frequency configuration parameters, according to option 2.

### <<Embodiment 1-5>>

The present embodiment relates to scheduling restriction/adjustment.

In addition to at least one of Embodiment 1-1 to Embodiment 1-3, a DMRS configuration may be adjusted according to scheduling granularity related to the number X of RBs in each scheduling unit/RB group.

There is a possibility that, based on at least one of Embodiments 1-1 to Embodiment 1-3 using a configuration (s/i/j) with a multiplexing group interval/intra-group interval/inter-group interval, different numbers of DMRS REs are present in each scheduling unit, which causes high complexity of channel estimation on the UE side. For example, assuming that the numbers of DMRS REs in a frequency domain are 4 and 2 for a first port and a second port in a 2-port DMRS configuration in one RB, respectively, for different numbers of DMRS REs in the frequency domain, two channel estimation algorithms are to be present separately for the first port and the second port. However, when the number of DMRSs in the frequency domain is the same for the two ports, the same channel estimation algorithm is expected.

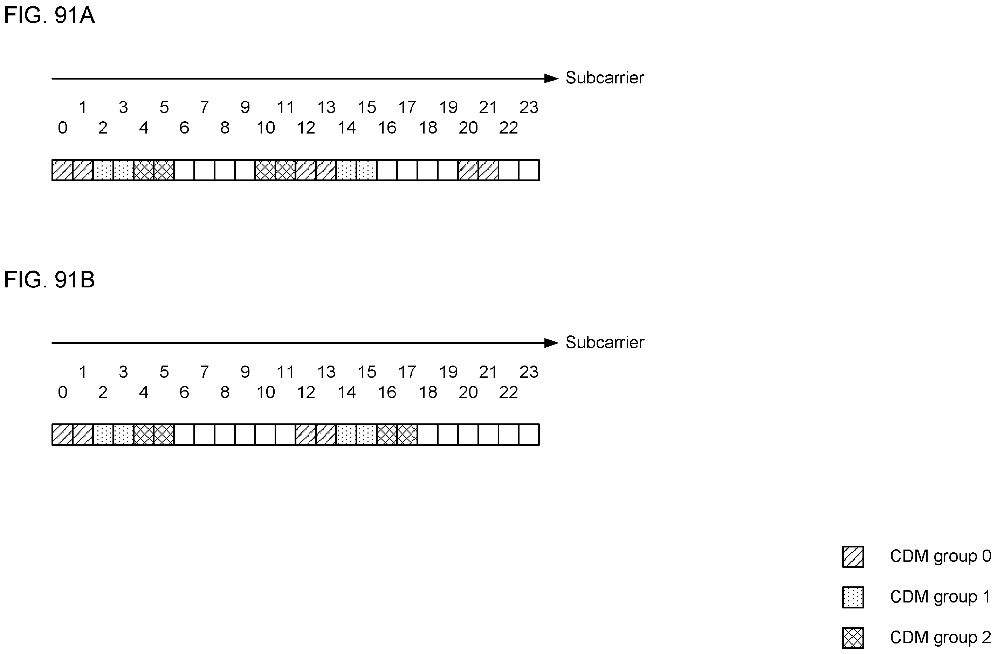

The present embodiment may follow at least one of some policies below.
- Policy 1 (UE perspective, policy for higher (high-performance) UE): The UE may assume a plurality of different patterns of DMRS RE positions for a plurality of different scheduling units/RB groups, and may perform corresponding channel estimation or DMRS transmission accordingly. For example, in case 2 of option 1 of Embodiment 1-1, a DMRS configuration may not be uniform for two RBs as follows (FIG. 91A).
   -- Subcarrier indices in CDM group 0 are {0, 1, 10, 11, 20, 21}.
   -- Subcarrier indices in CDM group 1 are {2, 3, 12, 13}.
   -- Subcarrier indices in CDM group 2 are {4, 5, 14, 15}.
   -- For CDM group 0, channel estimation algorithm 1 for estimating a channel, based on six DMRS REs, may be adopted. For CDM groups 1 and 2, channel estimation algorithm 2 for estimating a channel, based on four DMRS REs, may be adopted. Alternatively, the UE may be able to jointly estimate channels, based on CDM groups 0 to 2 in the two RBs.
- Policy 2 (NW perspective, policy for lower (low-performance) UE): In order to ensure the same DMRS RE position for a plurality of different scheduling units/RB groups, there may be a restriction on a DMRS configuration in at least one of Embodiment 1-1 to Embodiment 1-3. For example, in case 2 of option 1 of Embodiment 1-1, s may be equal to 12 so that a uniform DMRS configuration is acquired for two RBs as follows (FIG. 91B).
   -- Subcarrier indices in CDM group 0 are {0, 1, 12, 13}.
   -- Subcarrier indices in CDM group 1 are {2, 3, 14, 15}.
   -- Subcarrier indices in CDM group 2 are {4, 5, 16, 17}.
   -- For CDM groups 0 to 2, channel estimation algorithm 1 for estimating a channel, based on four DMRS REs, may be adopted.

### <<Embodiment 1-6>>

The present embodiment relates to a UE capability.

A UE may report at least one of some capabilities below.
- Capability of each embodiment
- Capability of each option in each embodiment or capability of a combination of a plurality of options in each embodiment
- Capability of each alternative in each embodiment or capability of a combination of a plurality of alternatives in each embodiment
- Capability of each policy in Embodiment 1-5

The UE may report at least one of the some capabilities above for each functionality or model ID.

The UE may report at least one of the some capabilities above for each frequency. The UE may report at least one of the some capabilities above (with/without distinction between TDD and FDD, with/without distinction between a terrestrial network (TN) and a non-terrestrial network (NTN)) for each UE, each frequency range (FR), each SCS, each band, each band combination, each FS, or each FSPC.

According to the present embodiment, at least one of reduction of DMRS resources/overhead and increase of DMRS ports can be achieved.

### <Embodiment 2>

The present embodiment relates to a new DMRS configuration in a time domain. The configuration may correspond to a certain AI/ML functionality/model (ID).

The present embodiment may regularly/irregularly improve an interval between a plurality of DMRS time resources by redesigning/adding a time domain position at a position of a PDSCH/PUSCH in an existing specification.

Reduction of DMRSs configured for DMRS ports/CDM groups in a time domain may follow at least one of some embodiments 2-x below.

### <<Embodiment 2-0>>

The present embodiment further indicates a position, based on a position selected based on a configuration table in Rel. 18, to thereby reduce DMRS resources in each slot in the time domain. The indication may be defined in a specification, may be configured by a NW through note 1 to be described below, or may be associated with an AI/ML functionality/model (ID).

A configuration of DMRS resources in a frequency domain may be determined based on at least one of an existing DMRS configuration and Embodiment 1.

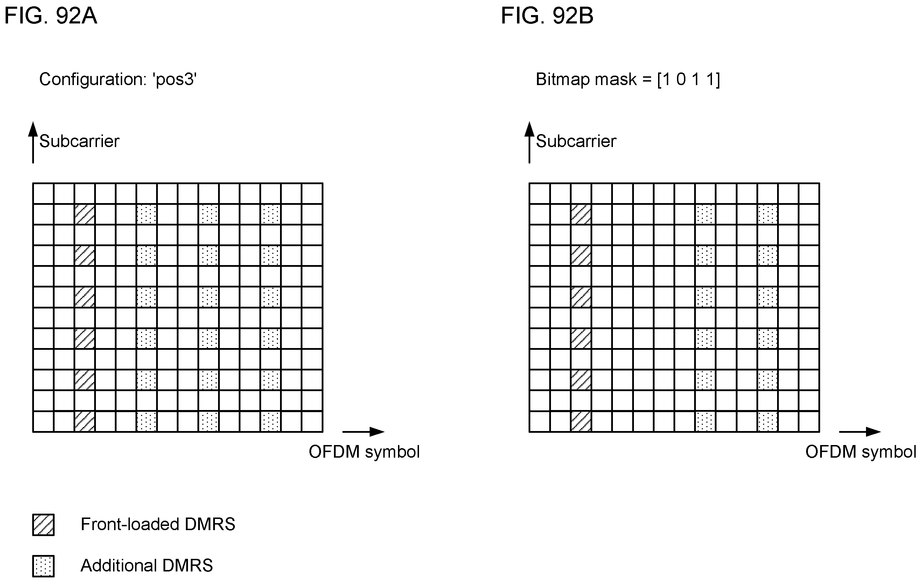

A new configuration may include the following information. - Indication of DMRS resources in selected symbols in each slot For example, as in an example in FIG. 92A, when 'pos3' configures 4 symbols for DMRSs (1-symbol front-loaded DMRS and 3-symbol additional DMRS), the indication may be a bitmap mask [1 0 1 1] for 'pos3,' for selection from a plurality of reserved DMRS positions. The 4 symbols may correspond to 4 respective bits of the bitmap mask. The value of 1 of each bit may indicate that the corresponding symbol is used for a DMRS. As in an example in FIG. 92B, the bitmap mask [1 0 1 1] may indicate that the first, third, and fourth symbols for the 4-symbol DMRS are used for DMRSs.

### <<Embodiment 2-1>>

The present embodiment reduces the maximum number of available positions using flexible positions in the time domain in each slot. The flexible positions may be defined in a specification, may be configured by a NW through note 1 to be described below, or may be associated with an AI/ML functionality/model (ID) (for example, a result/output of an ID of a configured/indicated functionality/model).

A configuration of DMRS resources in a frequency domain may be determined based on at least one of an existing DMRS configuration and Embodiment 1.

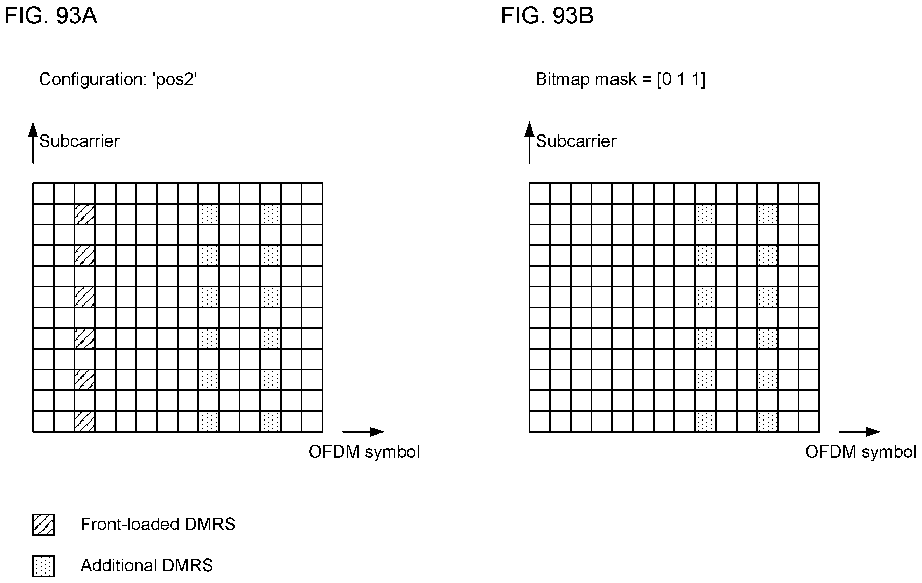

A new configuration may include at least one of some pieces of information below.
- A new table of DMRS positions
- A new parameter in the table For example, l_{A2_10}, x_{A2_10}, y_{A2_10}.
- Indication of DMRS resources in selected symbols in each slot For example, as in an example in FIG. 93A, when 'pos2' configures a 3-symbol DMRS (1-symbol front-loaded DMRS and 2-symbol additional DMRS), the indication may be a bitmap mask [0 1 1] to select the second and third symbols. The 3 symbols may correspond to 3 respective bits of the bitmap mask. The value of 1 of each bit may indicate that the corresponding symbol is used for a DMRS. As in an example in FIG. 93B, the bitmap mask [0 1 1] may indicate that the second and third symbols for the 3-symbol DMRS are used for DMRSs.
- A combination of two or more pieces of the some pieces of information above

### <<<Example of Embodiment 2-1>>>

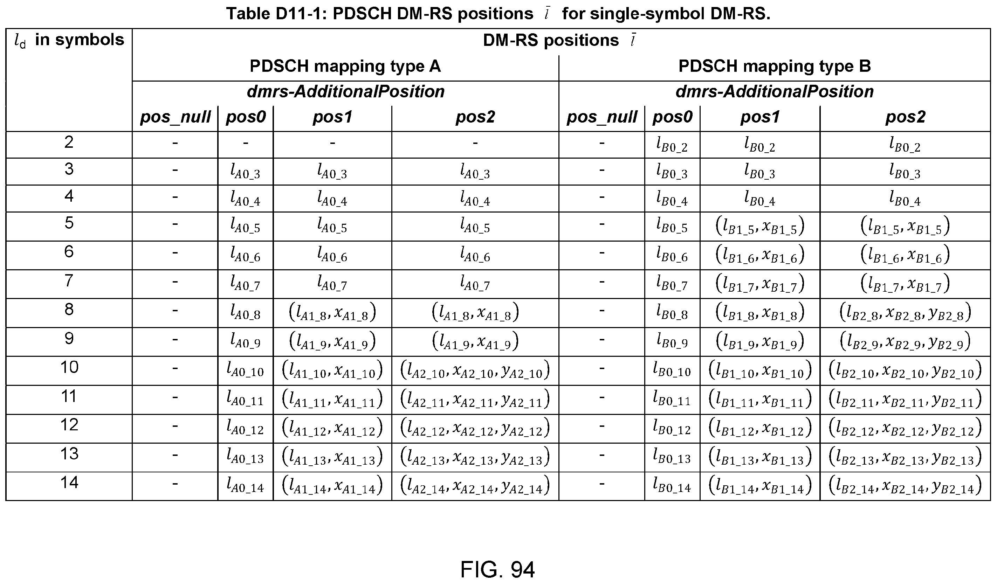

FIG. 94 shows an example of table D11-1 including DMRS positions for a single-symbol DMRS for PDSCH. This table indicates a value of l⁻ for a combination of l_{d} and dmrs-AdditionalPosition. According to this table, the maximum number of available positions of DMRS resources configured in the time domain in one slot is reduced. When DMRS position l⁻ is (l_{A2_14}, x_{A2_14}, y_{A2_14}) and a 3-bit bit mask is (1, 0, 1), actual DMRS position l⁻ is (l_{A2_14}, y_{A2_14}).

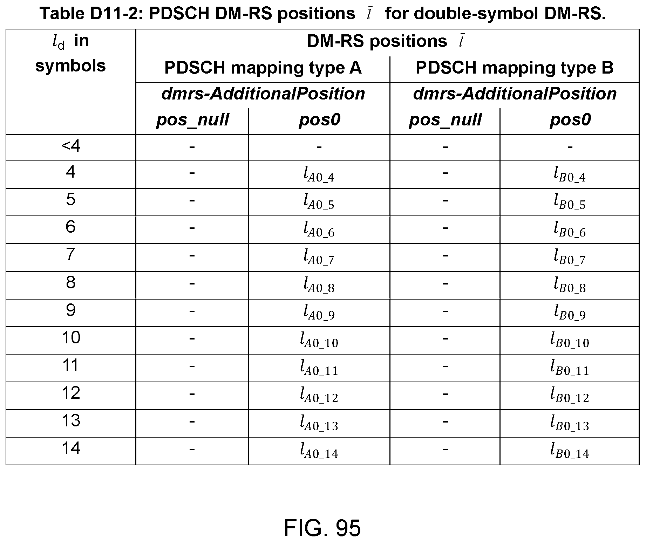

FIG. 95 shows an example of table D11-2 including DMRS positions for a double-symbol DMRS for PDSCH. This table indicates a value of l⁻ for a combination of l_{d} and dmrs-AdditionalPosition. According to this table, the maximum number of available positions of DMRS resources configured in the time domain in one slot is reduced.

### <<Embodiment 2-2>>

The present embodiment relates to frequency domain resources in respective time domain resources for DMRSs.

Different DMRS resources in a frequency domain may be used for a plurality of different symbols in each slot. The configuration may be defined in a specification, may be configured by a NW through note 1 to be described below, or may be associated with an AI/ML functionality/model (ID).

A configuration of DMRS resources in a frequency domain may be determined based on at least one of an existing DMRS configuration and Embodiment 1.

A configuration of symbols for DMRS resources in each slot may be determined based on at least one of an existing DMRS configuration and Embodiment 2-1.

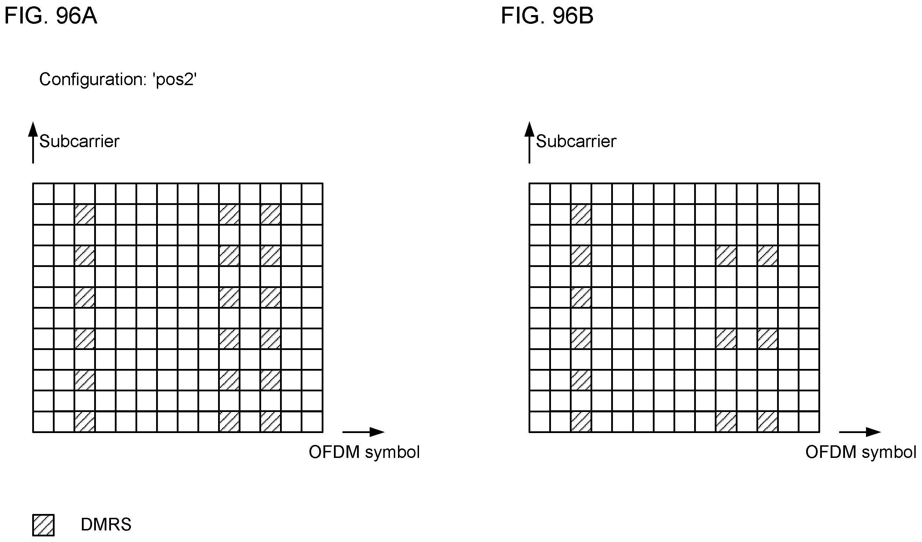

A new configuration may include at least one piece of some pieces of information below.
- Indication of a configuration of DMRS resources in the frequency domain in specific symbols in each slot For example, as in an example in FIG. 96A, when 3 symbols for DMRSs are configured, the indication may indicate that an equation for an existing DMRS configuration is used for the first DMRS symbol and that Embodiment 1-1 is used for the second and third DMRS symbols, as in an example in FIG. 96B. The indication may be, for example, a bitmap mask [0 1 1].

### <<<Example of Embodiment 2-2>>>

The new configuration may indicate different DMRS resources in the frequency domain, for a plurality of different symbols, in each slot.

For the time domain configuration of Embodiment 2-1, configuration 1 may be an existing configuration, and configuration 2 may be the configuration of case 1 of Embodiment 1-1.

For example, configuration 1 may be given by the following equations. $k = 4 n + 2 k ′ + Δ \left(configuration type 1\right)$ $k ′ = 0 , 1$ $n = 0 , 1 , …$

For example, configuration 2 may be given by the following equations. $k = \left(4+s\right) n + 2 k ′ + Δ \left(configuration type 1\right)$ $k ′ = 0 , 1$ $n = 0 , 1 , …$ $s = 4$

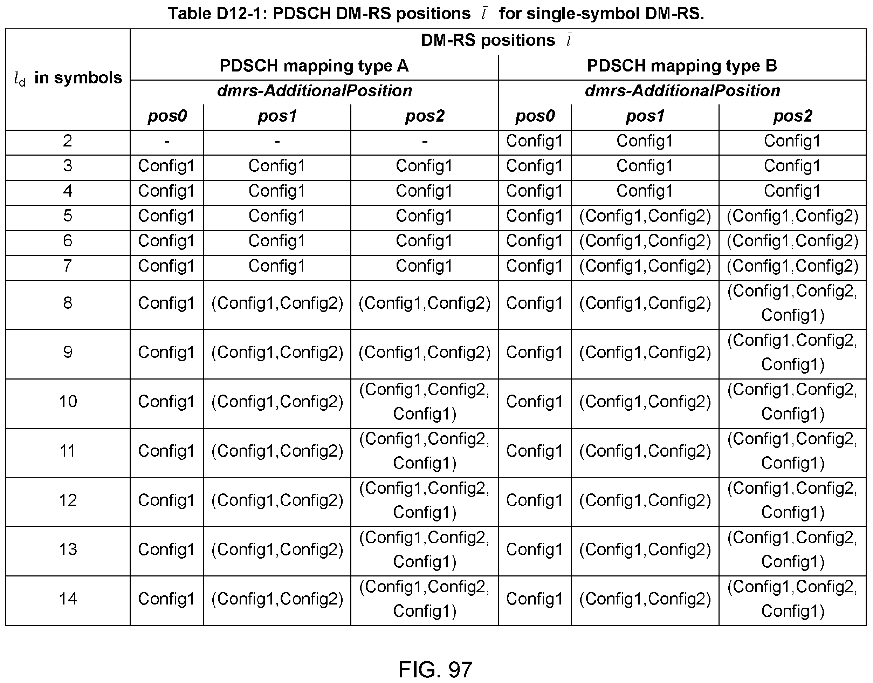

FIG. 97 shows an example of table D12-1 including DMRS positions for a single-symbol DMRS for PDSCH. This table indicates a value of l⁻ for a combination of l_{d} and dmrs-AdditionalPosition. This table may provide a new configuration for the time domain. The value of l⁻ may be provided by configuration 1 (Config1) or configuration 2 (Config2) for each symbol.

### <<Embodiment 2-3>>

The present embodiment relates to frequency domain resources in respective time domain resources for DMRSs.

Different DMRS resources in at least one of a frequency domain and a time domain may be used in a plurality of different slots. The configuration may be defined in a specification, may be configured by a NW through note 1 to be described below, or may be associated with an AI/ML functionality/model (ID).

A configuration of DMRS resources in a frequency domain may be determined based on at least one of an existing DMRS configuration and Embodiment 1.

A configuration of symbols for DMRS resources in each slot may be determined based on at least one of an existing DMRS configuration, Embodiment 2-1, and Embodiment 2-2.

A new configuration may include at least one piece of some pieces of information below.
- Indication of a configuration of DMRS resources in a specific slot For example, the indication indicates that an existing DMRS configuration is used for a slot with SFN mod 2 = 0 and that Embodiment 2-1 is used for a slot with SFN mod 2 = 1.
- Indication of a configuration of the number of DMRS symbols in a specific slot For example, the indication indicates that 'pos0' is configured for a slot with SFN mod 2 = 0 and that 'pos_null' is configured for a slot with SFN mod 2 = 1.
- A combination of two or more pieces of the some pieces of information above

Variation: The UE may not expect/assume a PDSCH/PUSCH/PDCCH/PUCCH not including DMRS symbols in a DMRS bundling time-domain window.

### <<<Example of Embodiment 2-3>>>

The new configuration may indicate different DMRS resources in the frequency domain, for a plurality of different slots in the time domain.

For example, for the slot with SFN mod 2 = 0, a slot configuration may be the existing DMRS configuration, the number of symbols may be 'pos0,' and a position may be l₀. For the slot with SFN mod 2 = 1, a slot configuration may be Embodiment 2-1, the number of symbols may be 'pos1' (bitmap [0 1]), and actual position l₀ may be (x_{A1_14}) in a case where l₀ based on a table is (l_{A1_14}, x_{A1_14}) and where a bitmap is [0 1].

### <<Embodiment 2-4>>

The present embodiment relates to a UE capability.

A UE may report at least one of some capabilities below.
- Capability of each embodiment
- Capability of each option in each embodiment or capability of combination of plurality of options in each embodiment
- Capability of each alternative in each embodiment or capability of combination of plurality of alternatives in each embodiment
- Capability for support of enhanced DMRS

The UE may report at least one of the some capabilities above for each functionality or model ID.

The UE may report at least one of the some capabilities above for each frequency. The UE may report at least one of the some capabilities above (with/without distinction between TDD and FDD, with/without distinction between a terrestrial network (TN) and a non-terrestrial network (NTN)) for each UE, each frequency range (FR), each SCS, each band, each band combination, each FS, or each FSPC.

According to the present embodiment, at least one of reduction of DMRS resources/overhead and increase of DMRS ports can be achieved.

### <Embodiment 3>

The present embodiment relates to a new DMRS configuration in a code domain. The configuration may correspond to a certain AI/ML functionality/model (ID).

The present embodiment may design a non-orthogonal (cover) code for replacing an OCC, in a condition for time/frequency resources to be reduced, in order to maintain supported DMRS ports in a CDM group in an existing specification.

Reduction of DMRSs configured for DMRS ports/CDM groups in a code domain may follow at least one of some embodiments 3-x below.

### <<Embodiment 3-1>>

The present embodiment further indicates a position, based on a position (resource in the time/frequency domain) selected based on a configuration table in Rel. 18, to thereby reduce DMRS resources in each CDM group in a code domain. The indication may be defined in a specification, may be configured by a NW through note 1 to be described below, or may be associated with an AI/ML functionality/model (ID).

A configuration of DMRS resources in the frequency/time domain may be determined based on at least one of an existing DMRS configuration, Embodiment 1, and Embodiment 2.

A new CDM configuration may include at least one of some pieces of information below.
- Indication of a DMRS resource to be selected for one or more selected CDM groups The indication may follow at least one of the following.
   -- The indication may be performed per CDM group or may be common to all CDM groups. For example, a bitmap mask per one or more CDM groups may be used to further select a resource from a plurality of reserved DMRS resources. For example, an RE index per one or more CDM groups may be used to indicate a reserved/canceled DMRS resource.
   -- A mapping relationship between the bitmap and a DMRS RE in a CDM group may be defined by a specification or may be configured by a NW (for example, may be included in the new CDM configuration). The mapping relationship may indicate which DMRS RE in one CDM group a bit of the bitmap correspond to. For example, a plurality of DMRS REs in one CDM group are ordered, and a plurality of bits of the bitmap may be mapped one-to-one to the plurality of ordered DMRS REs. The plurality of DMRS REs in the one CDM group may be ordered first in ascending or descending order with respect to the frequency domain (are arranged in ascending or descending order with respect to the frequency domain if there are a plurality of resources at the same time), and may then be ordered in ascending or descending order with respect to the time domain, or may be ordered first in ascending or descending order with respect to the time domain (are arranged in ascending or descending order with respect to the time domain if there are a plurality of resources at the same frequency), and may then be ordered in ascending or descending order with respect to the frequency domain.

A new configuration of power boosting for a new CDM configuration may be introduced. For example, the new configuration may enhance an existing amplitude scaling factor (or a ratio of PDSCH/PUSCH EPRE to DMRS EPRE β_{DMRS} [dB]) for each one or more CDM groups. For example, the new configuration may introduce a new amplitude scaling factor (or a ratio of PDSCH/PUSCH EPRE to DMRS EPRE β_{DMRS} [dB]) and a new table for each one or more CDM groups.

The UE may not expect/assume that an existing DMRS port and a new DMRS port (based on one or more embodiments) are received in the same CDM group for DL transmission.

The UE may not expect/assume that an existing DMRS port and a new DMRS port (based on one or more embodiments) are transmitted in the same CDM group for UL transmission.

A receiver (UE or NW) may separate a plurality of OCCs by using AI/ML even when some of the OCCs become zero. A DMRS and an OCC are not allocated to REs of some of the OCCs, thereby enabling the number of DMRS ports to be maintained while reducing DMRS resources.

### <<<Example 1 of Embodiment 3-1>>>

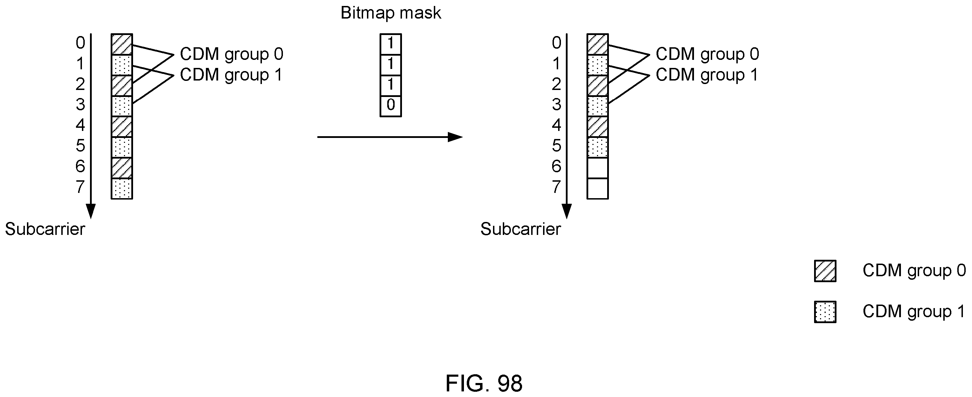

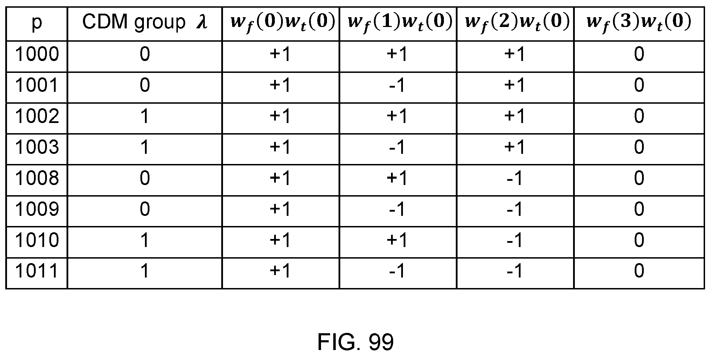

Bitmap masks for the respective CDM groups may be the same. In an example of an enhanced configuration type 1 single-symbol DMRS, eight DMRS ports are used, and w_f(0) to w_f(3) and w_t(0) are valid. In this example, ports 1000, 1001, 1008, 1009 in CDM group 0 and ports 1002, 1003, 1010, 1011 in CDM group 1 are used. For each CDM group, four DMRS ports are supported by using four FD-OCCs for four DMRS REs. In this example, for application of a bitmap mask, the DMRS REs are ordered in ascending order of RE indices. As in examples in FIG. 98 and FIG. 99, a 4-bit bitmap mask [1 1 1 0] is applied to four DMRS REs (length-4 FD-OCCs) in each CDM group, thereby causing w_f(0) to w_f(2) to be applied and causing w_f(3) to become 0. For each CDM group, four DMRS ports are supported by using four FD-OCCs for three DMRS REs.

### <<<Example 2 of Embodiment 3-1>>>

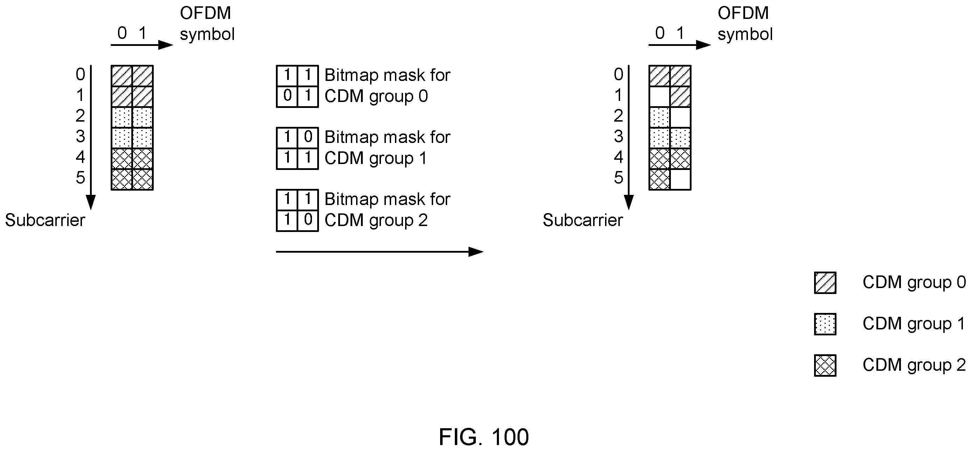

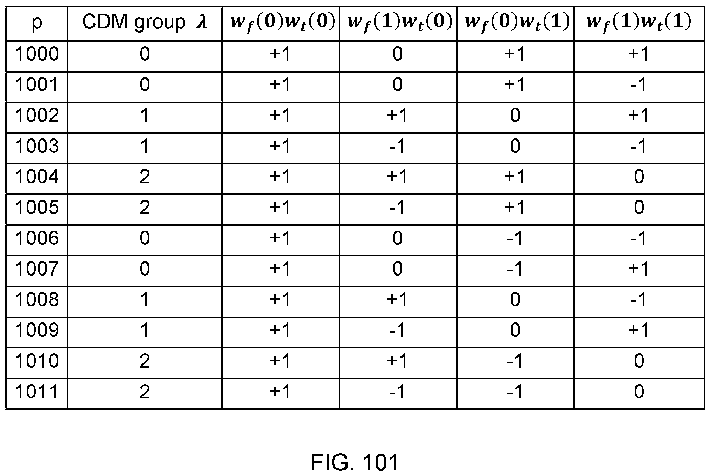

Bitmap masks for the respective CDM groups may be different. In an example of a basic configuration type 2 double-symbol DMRS, twelve DMRS ports are used, and w_f(0), w_f(1) and w_t(0), w_t(1) are valid. In this example, ports 1000, 1001, 1006, 1007 in CDM group 0, ports 1002, 1003, 1008, 1009 in CDM group 1, and ports 1004, 1005, 1010, 1011 in CDM group 2 are used. For each CDM group, four DMRS ports are supported by using two FD-OCCs and two TD-OCCs for four DMRS REs. In this example, for application of a bitmap mask, the DMRS REs are ordered first in ascending order of RE indices in the frequency domain, and are then ordered in ascending order of symbol indices in the time domain. As in examples in FIG. 100 and FIG. 101, a 4-bit bitmap mask [1 0 1 1] is applied to four DMRS REs in CDM group 0, thereby causing w_f(1)w_t(0) to become 0. A 4-bit bitmap mask [1 1 0 1] is applied to four DMRS REs in CDM group 1, thereby causing w_f(0)w_t(1) to become 0. A 4-bit bitmap mask [1 1 1 0] is applied to four DMRS REs in CDM group 2, thereby causing w_f(1)w_t(1) to become 0. For each CDM group, four DMRS ports are supported by using two FD-OCCs and two TD-OCCs for three DMRS REs.

### <<<Example 3 of Embodiment 3-1>>>

In the power boosting, DMRS (amplitude) scaling factor β_{PUSCH}^{DMRS} is given by β_{PUSCH}^{DMRS} = 10^{-β_DMRS/20}. The DMRS scaling factor may follow at least one of some options below.
- Option 1: A DMRS scaling factor is determined for each symbol in one CDM group.
- Option 2: A DMRS scaling factor common over a plurality of symbols in one CDM group is determined. For example, the common DMRS scaling factor in the one CDM group may be a minimum value of DMRS scaling factors per symbol in the one CDM group.

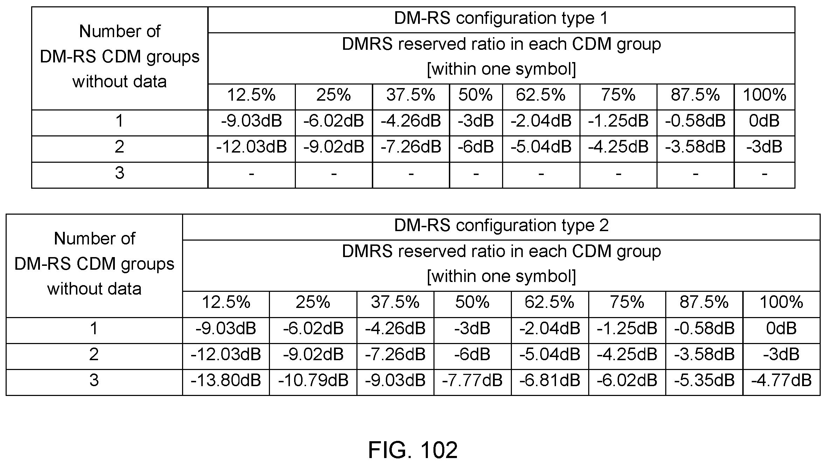

The ratio of PDSCH/PUSCH EPRE to DMRS EPRE β_{DMRS} [dB] may be defined by enhancing an existing table, as in an example table in FIG. 102. This table indicates β_{DMRS} for a DMRS configuration type, the number of DMRS CDM groups without data, and a DMRS reserved ratio in each CDM group [within one symbol].

### <<<Example 4 of Embodiment 3-1>>>

In power boosting, intermediate quantity α~_{k,l}^{(p_j,µ)} is precoded, is multiplied by amplitude scaling factor β_{PUSCH}^{DMRS} and an amplitude scaling factor λ_{p~_j}^{DMRS} for port p~ⱼ so that transmission power is matched, and is mapped to physical resources. α_{k,l}^{(p_j,µ)} based on α~_{k,l}^{(p_j,µ)} may be given by equation E2 below. $\left[\begin{matrix}{a}_{k , l}^{\left({p}_{0}, μ\right)} \\ ⋮ \\ {a}_{k , l}^{\left({p}_{0 ρ - 1}, μ\right)}\end{matrix}\right] = {β}_{PUSCH}^{DMRS} W \left[\begin{matrix}{λ}_{{{p}^{˜}}_{0}}^{DMRS} {{a}^{˜}}_{k , l}^{\left({{p}^{˜}}_{0}, μ\right)} \\ ⋮ \\ {λ}_{{{p}^{˜}}_{υ - 1}}^{DMRS} {{a}^{˜}}_{k , l}^{\left({{p}^{˜}}_{υ - 1}, μ\right)}\end{matrix}\right]$ (E2)

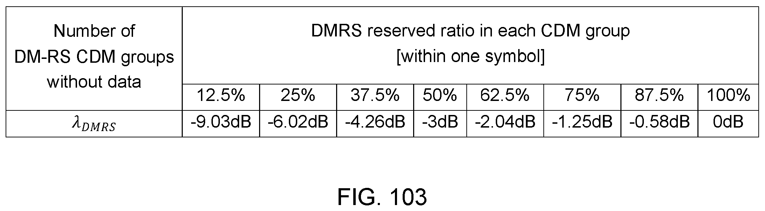

The amplitude scaling factor λ_{p~_j}^{DMRS} for port p~ⱼ is given by λ_{p~_j}^{DMRS} = 10^{-λDMRS/20}. A new table for λ_{DMRS} [dB] may be defined in a specification. An example of the new table in FIG. 103 indicates λ_{DMRS} for a DMRS reserved ratio in each CDM group [within one symbol].

### <<Embodiment 3-2>>

The present embodiment further indicates a position, based on a position selected based on a new configuration table, to thereby reduce DMRS resources in each CDM group in a code domain. The indication may be defined in a specification, may be configured by a NW through note 1 to be described below, or may be associated with an AI/ML functionality/model (ID).

A configuration of DMRS resources in the frequency/time domain may be determined based on at least one of an existing DMRS configuration, Embodiment 1, and Embodiment 2.

A new CDM configuration may include at least one of some pieces of information below.
- A structure of a table for a new CDM configuration The table structure may follow at least one of some features below.
   -- The table structure may be determined based on an existing CDM configuration.
   -- The table structure may be a new table structure. For example, the table includes, for one CDM group supporting up to eight DMRS ports, an OCC with eight parameters in place of six parameters in the existing CDM configuration.
- A parameter in the table The parameter may follow at least one of some features below.
   -- The parameter may be defined in a table in a specification.
   -- The new parameter may be transmitted between a NW and a UE through note 2/note 3 to be described below.
   -- The new parameter may be generated by an AI/ML functionality/model.
   -- The new parameter may be generated by an AI/ML functionality/model based on an existing orthogonal DMRS port.
- Indication of a DMRS resource to be selected for each CDM group The indication may follow at least one of some features below.
   -- For example, for a CDM group, a bitmap mask may be used to further select a resource from reserved DMRS resources.
   -- A mapping relationship between the bitmap and a DMRS RE in a CDM group may be defined by a specification or may be configured by a NW (for example, may be included in the new CDM configuration). The mapping relationship may indicate which DMRS RE in one CDM group a bit of the bitmap correspond to. For example, a plurality of DMRS REs in one CDM group are ordered, and a plurality of bits of the bitmap may be mapped one-to-one to the plurality of ordered DMRS REs. The plurality of DMRS REs in the one CDM group may be ordered first in ascending or descending order with respect to the frequency domain (are arranged in ascending or descending order with respect to the frequency domain if there are a plurality of resources at the same time), and may then be ordered in ascending or descending order with respect to the time domain, or may be ordered first in ascending or descending order with respect to the time domain (are arranged in ascending or descending order with respect to the time domain if there are a plurality of resources at the same frequency), and may then be ordered in ascending or descending order with respect to the frequency domain.

A new configuration of power boosting for a new CDM configuration may be introduced. For example, regarding the new configuration, an amplitude scaling factor (or a ratio of PDSCH/PUSCH EPRE to DMRS EPRE β_{DMRS} [dB]) may be calculated for each one or more CDM groups, according to a valid parameter. When a parameter in the new CDM configuration is normalized, the power boosting method of Embodiment 3-1 is available.

### <<<Example 1 of Embodiment 3-2>>>

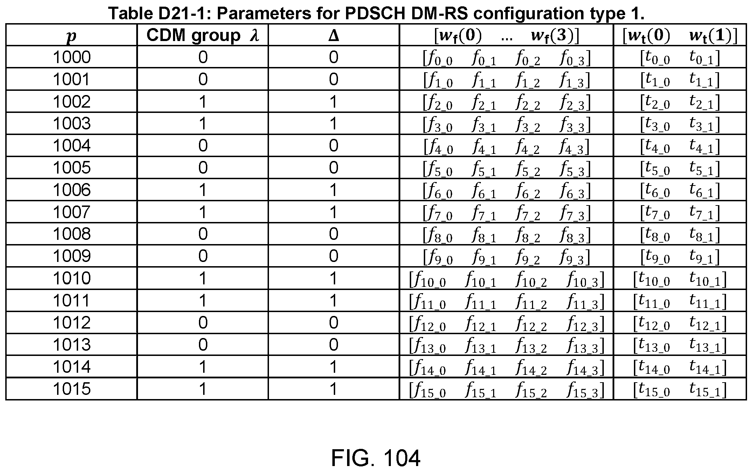

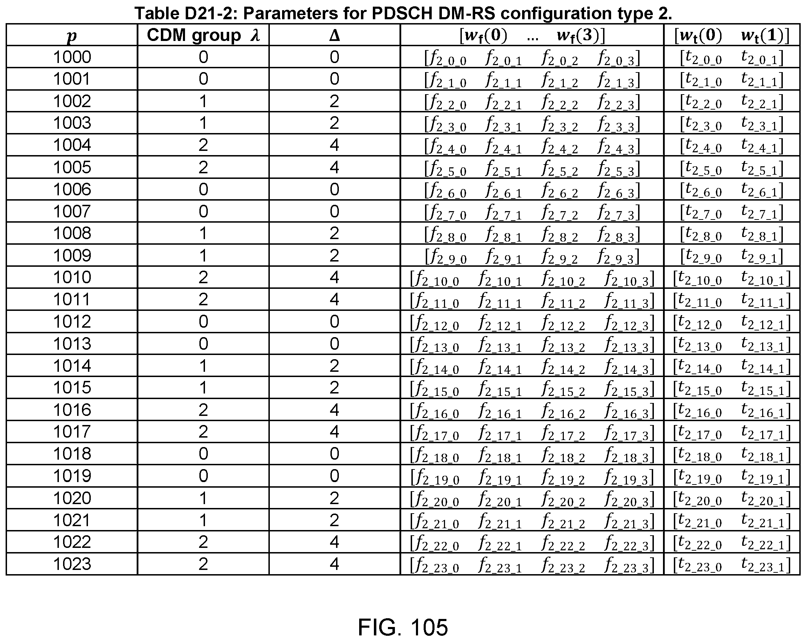

FIG. 104 shows an example of table D21-1 for CDM configuration for DMRS configuration type 1 for PDSCH. FIG. 105 shows an example of table D21-2 for CDM configuration for DMRS configuration type 2 for PDSCH. This example may follow at least one of some features below.
- The table structure is an existing CDM configuration. As a variation, the table for the CDM configuration may include eight parameters (w_f0_t0, w_f1_t0, w_f2_t0, w_f3_t0, w_f0_t1, w_f1_t1, w_f2_t1, w_f3_t1) in place of six parameters (w_f(0), w_f(1), w_f(2), w_f(3), w_t(0), w_t(1)) for one CDM group.
- Table parameters may be defined in a table in a specification.
- Similarly to table D21-1/D21-2, a table for CDM configuration for PUSCH may be defined in a specification.

### <<<Example 2 of Embodiment 3-2>>>

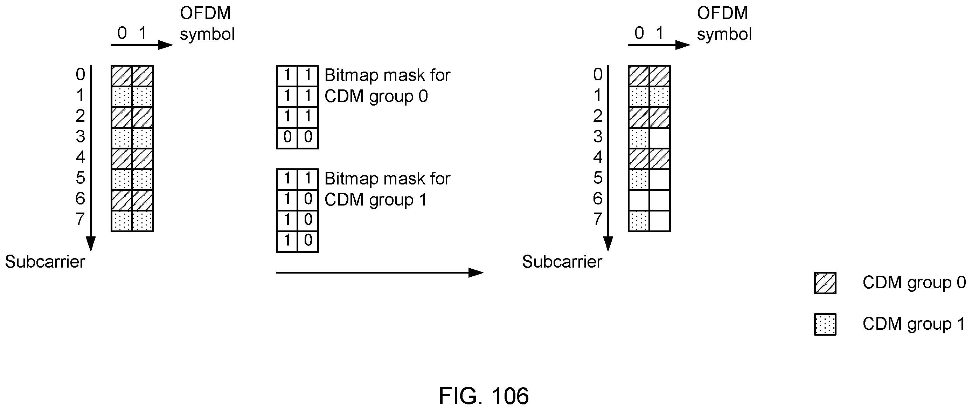

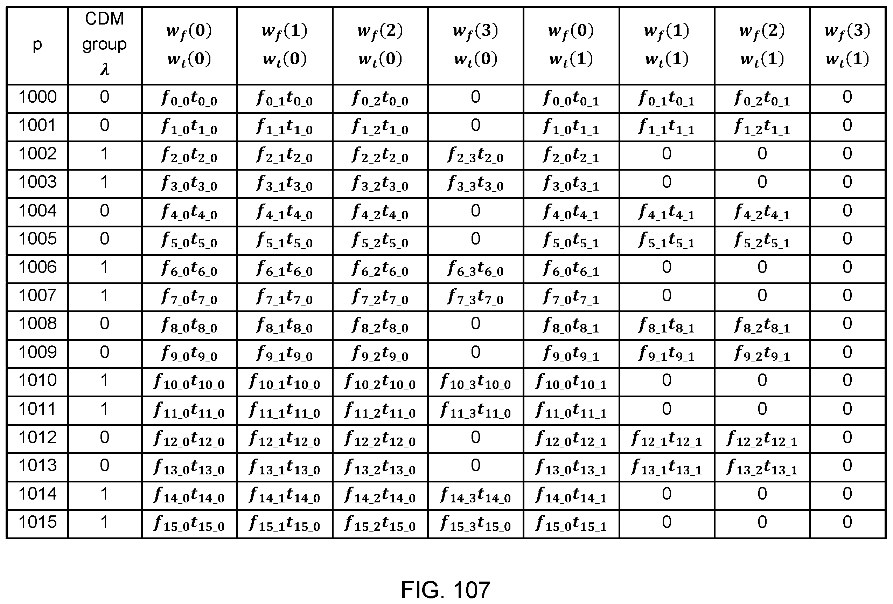

The table of CDM configurations described above (for example, D21-1/D21-2) may be used for a double-symbol DMRS. Different bitmap masks may be used for respective CDM groups. For each CDM group, eight DMRS ports are supported by using four FD-OCCs and two TD-OCCs for eight DMRS REs. As shown in FIG. 106 and FIG. 107, for configuration of table D21-1, a bitmap mask [1 1 1 0 1 1 1 0] is applied to CDM group 0 and a bitmap mask [1 1 1 1 1 0 0 0] is applied to CDM group 1. Actual parameters are determined by applying a bit mask to new parameters (FD-OCCs/TC-OCCs) defined in the table. Even when six DMRS REs of the eight DMRS REs are used for CDM group 0, the eight DMRS ports are maintained. Even when five DMRS REs of the eight DMRS REs are used for CDM group 1, the eight DMRS ports are maintained.

### <<<Example 3 of Embodiment 3-2>>>

In the power boosting, an amplitude scaling factor may be calculated according to a valid parameter.

Intermediate quantity α~_{k,l}^{(p_j,µ)} is precoded, is multiplied by amplitude scaling factor β_{PUSCH}^{DMRS} and an amplitude scaling factor λ_{p~_j}^{DMRS} for port p~ⱼ so that transmission power is matched, and is mapped to physical resources. α_{k,l}^{(p_j,µ)} based on α~_{k,l}^{(p_j,µ)} may be given by equation E2 described above.

For example 2 of Embodiment 3-2, amplitude scaling factor λ₁₀₀₀^{DMRS} for port p = 1000 may be given by equation E3 below. ${λ}_{1000}^{DMRS} = \sqrt{\frac{8}{{\sum }_{i = 0}^{2} {\left‖{f}_{0 _ i}{t}_{0 _ 0}\right‖}^{2} + {\sum }_{i = 0}^{2} {\left‖{f}_{0 _ i}{t}_{0 _ 1}\right‖}^{2}}}$ (E3)

Here, the numerator "8" indicates available DMRS energy. The denominator indicates valid DMRS energy based on the parameter.

According to this power boosting, when DMRSs are not arranged for some DMRS resources as in example 2 of Embodiment 3-2, power for another DMRS resource can be increased.

### <<Embodiment 3-3>>

For an enhanced DMRS in at least one of Embodiment 3-1 and Embodiment 3-2, an additional PDSCH processing time in a PDSCH processing capability may be reported by a UE. The present embodiment may follow at least one of some options below.
- Option 1: An existing table of PDSCH processing times for a PDSCH processing capability is enhanced.
- Option 2: Additional PDSCH processing time configuration is introduced.
- Option 3: A new table of PDSCH processing times for a new UE capability is introduced.

### <<<Example 1 of Embodiment 3-3>>>

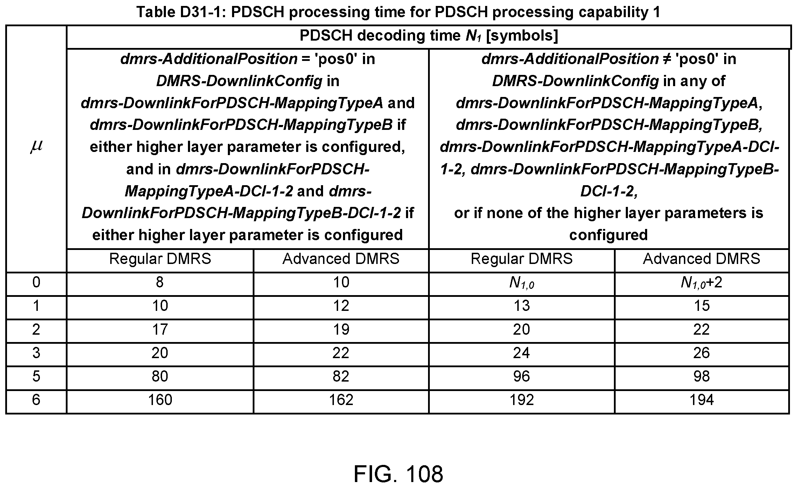

In option 1, as in an example of table D31-1 in FIG. 108, an existing table indicating PDSCH processing times for PDSCH processing capability 1 may be enhanced. This table includes PDSCH processing times for an existing DMRS (regular DMRS) and PDSCH processing times for an enhanced DMRS (advanced DMRS) in at least one of Embodiment 3-1 and Embodiment 3-2. The names of the regular DMRS/advanced DMRS and values of the PDSCH processing times are not limited to this example.

### <<<Example 2 of Embodiment 3-3>>>

In option 2, an additional parameter may be introduced to an existing equation for processing time. For example, T_{proc,1} may be given by the following equation. ${T}_{proc , 1} = \left({N}_{1}+{N}_{a}+{d}_{1 , 1}+{d}_{2}\right) \left(2048+144\right) ⋅ κ {2}^{- μ} ⋅ {T}_{C} + {T}_{ext}$

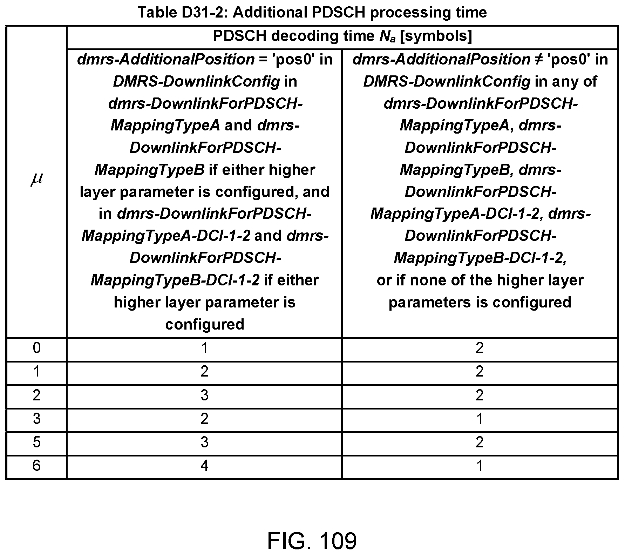

The additional parameter Nₐ may be an additional PDSCH processing time. FIG. 109 shows an example of table D31-2 including additional PDSCH processing time Nₐ for µ. The names of the additional PDSCH processing time/Nₐ and value of the additional PDSCH processing time are not limited to this example.

### <<<Example 3 of Embodiment 3-3>>>

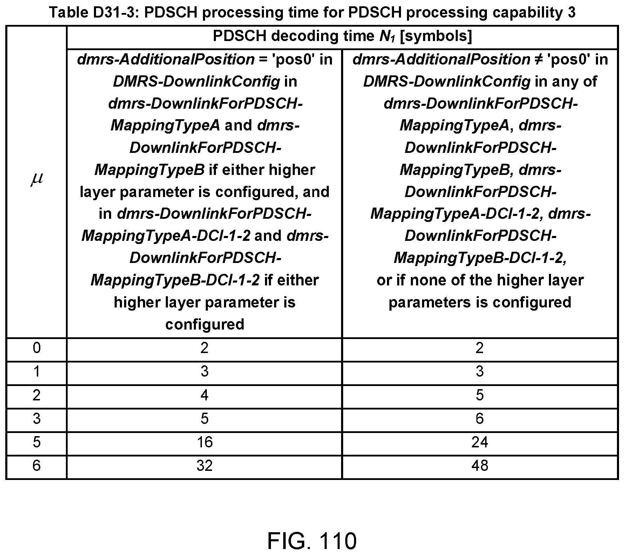

In option 3, UE processing capability 3 may be introduced. N1 may be based on at least one of an existing table and a new table. FIG. 110 shows an example of new table D31-3. The new table may indicate a PDSCH processing time for µ, for UE processing capability 3. The name of UE processing capability 3 and value of the PDSCH processing time are not limited to this example.

### <<Embodiment 3-4>>

The present embodiment relates to a UE capability.

A UE may report at least one of some capabilities below.
- Capability of each embodiment
- Capability of each option in each embodiment or capability of combination of plurality of options in each embodiment
- Capability of each alternative in each embodiment or capability of combination of plurality of alternatives in each embodiment
- Capability for support of at least one of transmission of PUCCH/PUSCH using enhanced DMRS and reception of PDCCH/PDSCH using enhanced DMRS

The UE may report at least one of the some capabilities above for each functionality or model ID.

The UE may report at least one of the some capabilities above for each frequency. The UE may report at least one of the some capabilities above (with/without distinction between TDD and FDD, with/without distinction between a terrestrial network (TN) and a non-terrestrial network (NTN)) for each UE, each frequency range (FR), each SCS, each band, each band combination, each FS, or each FSPC.

According to the present embodiment, at least one of reduction of DMRS resources/overhead and increase of DMRS ports can be achieved.

### <Note 1>

In the present disclosure, a procedure for at least one of whether a certain embodiment is applied, which embodiment is to be applied, whether a certain option/alternative is applied, and which option/alternative is to be applied may follow at least one of the following.
- The procedure is configured by one or more higher layer parameters.
- The procedure is determined by one or more associated higher layer parameters.
- The procedure is indicated by a MAC CE or DCI.
- The procedure is determined based on one or more UE capabilities.
- The procedure is described in a specification.
- The procedure is based on a condition described in a specification.
- The procedure is determined by a combination of two or more of the some procedures above. For example, the procedure is determined by configuration/indication of a higher layer parameter/MAC CE/DCI and a reported UE capability.

In the present disclosure, a plurality of options/alternatives may be combined as one option/alternative.

In the present disclosure, only when the UE has reported support of a certain functionality or mode, the UE may expect/assume a certain embodiment or one or more options/alternatives of the certain embodiment.

### <Note 2>

In the present disclosure, a UE may receive, from a NW, information related to at least one of some types below. In the present disclosure, a NW, a base station, and a gNB may be interchangeably interpreted.
- Information via higher layer signaling (for example, an RRC message, an LTE positioning protocol (LPP) message)
- MAC CE It may be a MAC CE with a new LCID in a subheader, or may be enhancement of an existing MAC CE. For example, the enhancement may be introduction of a new octet.
- DCI It may be an existing DCI field, or may be a newly introduced DCI field. The DCI may be DCI with a CRC scrambled by an existing RNTI or a newly introduced RNTI. The DCI may be an existing DCI format, or may be a newly introduced DCI format.
- Combination of two or more of some types above

In the present disclosure, the UE may receive information from the NW, according to some periodic types (time domain behaviors) below.
- Periodic
- Semi-persistent Reception of the information may be triggered by indication by the UE or the NW.
- Aperiodic Reception of the information may be triggered by indication by the UE or the NW.

### <Note 3>

In the present disclosure, a UE may report/transmit, to a NW, information related to at least one of some types below. In the present disclosure, a NW, a base station, and a gNB may be interchangeably interpreted.
- Information via higher layer signaling (for example, an RRC message, an LTE positioning protocol (LPP) message)
- MAC CE It may be a MAC CE with a new LCID in a subheader, or may be enhancement of an existing MAC CE. For example, the enhancement may be introduction of a new octet.
- UCI It may be UCI on a PUCCH or a PUSCH.
- Combination of two or more of some types above

In the present disclosure, the UE may report/transmit information to the NW, according to some periodic types (time domain behaviors) below.
- Periodic
- Semi-persistent Reporting/transmission of the information may be triggered by indication by the UE or the NW.
- Aperiodic Reporting/transmission of the information may be triggered by indication by the UE or the NW.

### <Note 4>

In the present disclosure, a functionality may be a set of parameters capable of being supported based on a condition indicated by a UE capability. For example, the set may include a set of parameters for at least one of CSI prediction, beam prediction, CSI compression, mobility, target/candidate beam/cell prediction, RRM prediction, channel estimation, and signal detection.

In the present disclosure, the UE may report, as a condition, some parameter value associated with a functionality or model to the NW through the one or more signalings of note 3. For example, the condition may be reported through UE capability reporting or reporting of a UE function/function group.

In the present disclosure, the UE may report, as an additional condition, some parameter value associated with a functionality or model through the one or more signalings of note 3 or a method other than signaling on an NW air interface.

In the present disclosure, the UE may be indicated with some parameter value as an additional condition through the one or more signalings of note 2 or the method other than the signaling on the NW air interface.

In the present disclosure, the UE may report, as information/indication of an additional condition, some information/indication related to the parameter above (for example, a parameter name) through the one or more signalings of note 3 or the method other than the signaling on the NW air interface.

In the present disclosure, the UE may be indicated with information/indication related to the parameter above as information/indication of an additional condition through the one or more signalings of note 2 or the method other than the signaling on the NW air interface. For example, the UE may report a device ID, a device vendor ID, and the like as additional conditions. The UE may be indicated with a cell ID as an additional condition. For example, the UE may report or be indicated with information/indication such as the name of a parameter (for example, "Cell ID" or "UE ID" in place of an ID value), as information/indication of an additional condition.

In the present disclosure, the method other than the signaling on the NW air interface may refer to a UE preconfiguration (for example, configured by a UE vendor), an operator configuration provided by an NW operator, or the like.

### <Supplements>

### <<Notification of Information to UE>>

Any notification of information [from a network (NW) (for example, a base station (BS))] to a UE (in other words, any reception, in a UE, of information from a BS) in the above-described embodiments may be performed by using physical layer signaling (for example, DCI), higher layer signaling (for example, RRC signaling, MAC CE), a specific signal/channel (for example, PDCCH, PDSCH, reference signal), or any combination of them.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Any notification of information to the UE in the above-described embodiments may be performed periodically, semi-persistently, or aperiodically.

### <<Notification of Information from UE>>

Any notification of information from a UE [to a NW] (in other words, any transmission/reporting, by a UE, of information to a BS) in the above-described embodiments may be performed by using physical layer signaling (for example, UCI), higher layer signaling (for example, RRC signaling, MAC CE), a specific signal/channel (for example, PUCCH, PUSCH, PRACH, reference signal), or any combination of them.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Any notification of information from the UE in the above-described embodiments may be performed periodically, semi-persistently, or aperiodically.

### <<Application of Respective Embodiments>>

In a UE/BS, specific (one or a plurality of) processing/operation/control/assumption/information for at least one embodiment of the above-described embodiments may be applied (may be used) in a case where any one or more of conditions below are satisfied.
- A higher layer parameter indicating the specific processing/operation/control/assumption/information is configured.
- The specific processing/operation/control/assumption/information is determined based on a related higher layer parameter.
- The specific processing/operation/control/assumption/information is indicated/activated/triggered by a MAC CE / DCI / UCI/ resource / channel / RS.
- A specific UE capability indicating (or related to) the specific processing/operation/control/assumption/information is reported or supported.
- Application of the specific processing/operation/control/assumption/information is judged based on a specific condition.

The specific UE capability may indicate at least one of the following:
- supporting of specific processing/operation/control/assumption/information
- capability of each embodiment
- capability of each option in each embodiment or capability of a combination of a plurality of options in each embodiment
- capability of each alternative in each embodiment or capability of a combination of a plurality of alternatives in each embodiment

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

In a case where none of the conditions described above is satisfied, the UE/BS may follow an operation defined in an existing 3GPP release.

### (Supplementary Note)

Regarding one embodiment of the present disclosure, the following supplementary notes of the invention will be given.

### {Supplementary Note 1}

A terminal including:
a receiving section that receives a configuration of a demodulation reference signal (DMRS) for a physical uplink shared channel; and
a control section that determines, based on the configuration, a plurality of frequency resources with an interval wider than an interval of a plurality of specific frequency resources of a specific DMRS based on a specific configuration and that controls transmission of the DMRS by using the plurality of frequency resources.

### {Supplementary Note 2}

The terminal according to supplementary note 1, wherein a plurality of frequency resource densities corresponding to a plurality of respective code division multiplexing (CDM) groups are equal to each other.

### {Supplementary Note 3}

The terminal according to supplementary note 1 or 2, wherein a plurality of frequency resource densities corresponding to a plurality of respective code division multiplexing (CDM) groups are different from each other.

### {Supplementary Note 4}

The terminal according to any one of supplementary notes 1 to 3, wherein the configuration indicates a subset of the plurality of frequency resources.

### (Supplementary Note)

Regarding one embodiment of the present disclosure, the following supplementary notes of the invention will be given.

### {Supplementary Note 1}

A terminal including:
a receiving section that receives a configuration of a demodulation reference signal (DMRS) for a physical downlink shared channel; and
a control section that determines, based on the configuration, a plurality of frequency resources with an interval wider than an interval of a plurality of specific frequency resources of a specific DMRS based on a specific configuration and that controls reception of the DMRS by using the plurality of frequency resources.

### {Supplementary Note 2}

The terminal according to supplementary note 1, wherein a plurality of frequency resource densities corresponding to a plurality of respective code division multiplexing (CDM) groups are equal to each other.

### {Supplementary Note 3}

The terminal according to supplementary note 1 or 2, wherein a plurality of frequency resource densities corresponding to a plurality of respective code division multiplexing (CDM) groups are different from each other.

### {Supplementary Note 4}

The terminal according to any one of supplementary notes 1 to 3, wherein the configuration indicates a subset of the plurality of frequency resources.

### (Supplementary Note)

Regarding one embodiment of the present disclosure, the following supplementary notes of the invention will be given.

### {Supplementary Note 1}

A terminal including:
a receiving section that receives a configuration of a demodulation reference signal (DMRS) for a physical uplink shared channel; and
a control section that determines, based on the configuration, one or more time resources for some of a plurality of specific time resources of a specific DMRS based on a specific configuration and that controls transmission of the DMRS by using the one or more time resources.

### {Supplementary Note 2}

The terminal according to supplementary note 1, wherein the configuration includes a bitmap indicating the some of the resources.

### {Supplementary Note 3}

The terminal according to supplementary note 1 or 2, wherein the one or more time resources are a plurality of time resources, and a plurality of frequency resources corresponding to the plurality of respective time resources are different from each other.

### {Supplementary Note 4}

The terminal according to any one of supplementary notes 1 to 3, wherein a plurality of resources of the DMRS corresponding to a plurality of respective slots are different from each other.

### (Supplementary Note)

Regarding one embodiment of the present disclosure, the following supplementary notes of the invention will be given.

### {Supplementary Note 1}

A terminal including:
a receiving section that receives a configuration of a demodulation reference signal (DMRS) for a physical downlink shared channel; and
a control section that determines, based on the configuration, one or more time resources for some of a plurality of specific time resources of a specific DMRS based on a specific configuration and that controls reception of the DMRS by using the one or more time resources.

### {Supplementary Note 2}

The terminal according to supplementary note 1, wherein the configuration includes a bitmap indicating the some of the resources.

### {Supplementary Note 3}

The terminal according to supplementary note 1 or 2, wherein the one or more time resources are a plurality of time resources, and a plurality of frequency resources corresponding to the plurality of respective time resources are different from each other.

### {Supplementary Note 4}

The terminal according to any one of supplementary notes 1 to 3, wherein a plurality of resources of the DMRS corresponding to a plurality of respective slots are different from each other.

### (Supplementary Note)

Regarding one embodiment of the present disclosure, the following supplementary notes of the invention will be given.

### {Supplementary Note 1}

A terminal including:
a receiving section that receives a configuration of a demodulation reference signal (DMRS) for a physical uplink shared channel; and
a control section that determines, based on the configuration, a plurality of resources being some of a plurality of specific resources with an orthogonal cover code and that controls transmission of the DMRS by using the one or more time resources.

### {Supplementary Note 2}

The terminal according to supplementary note 1, wherein the configuration includes a bitmap indicating the some of a plurality of specific resources.

### {Supplementary Note 3}

The terminal according to supplementary note 1 or 2, wherein power boosting is applied to the plurality of resources.

### {Supplementary Note 4}

The terminal according to any one of supplementary notes 1 to 3, wherein the control section reports a capability related to the DMRS.

### (Supplementary Note)

Regarding one embodiment of the present disclosure, the following supplementary notes of the invention will be given.

### {Supplementary Note 1}

A terminal including:
a receiving section that receives a configuration of a demodulation reference signal (DMRS) for a physical downlink shared channel; and
a control section that determines, based on the configuration, a plurality of resources being some of a plurality of specific resources with an orthogonal cover code and that controls reception of the DMRS by using one or more time resources.

### {Supplementary Note 2}

The terminal according to supplementary note 1, wherein the configuration includes a bitmap indicating the some of a plurality of specific resources.

### {Supplementary Note 3}

The terminal according to supplementary note 1 or 2, wherein power boosting is applied to the plurality of resources.

### {Supplementary Note 4}

The terminal according to any one of supplementary notes 1 to 3, wherein additional processing time is applied to the physical downlink shared channel.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

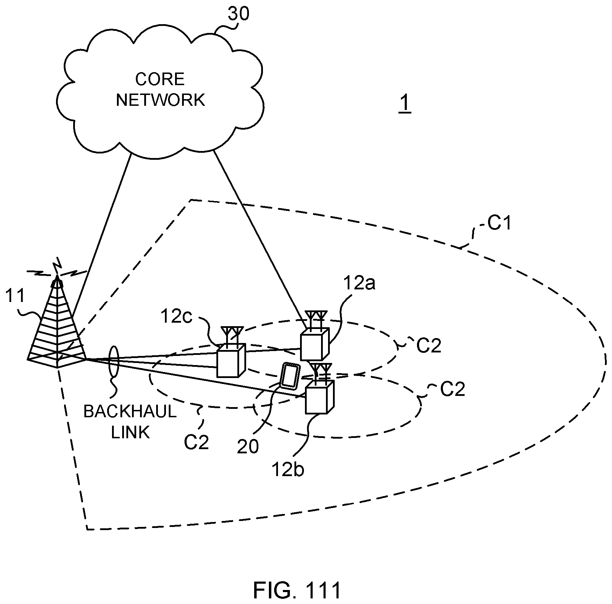

FIG. 111 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, the shape, the size, and the like of the cells and user terminals 20 are by no means limited to the aspect shown in the diagram. Hereinafter, the base stations 11 and 12 will be collectively referred to as "base stations 10," unless specified otherwise.

Note that the radio communication system 1 may use Multi Input Multi Output (MIMO). For example, one cell may be formed by one antenna/base station 10 or may be formed by a plurality of antennas/base stations 10. One [virtual] cell (which may be referred to as, for example, a super cell) may be constituted by a plurality of [virtual] cells (which may be referred to as, for example, subcells). The super cell may correspond to a cell with a fixed physical range, and the sub-cells may each correspond to a cell with a physical range that fluctuates semi-statically/dynamically. In this case, the radio communication system 1 may be referred to as a cell-free system.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2/Xn interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

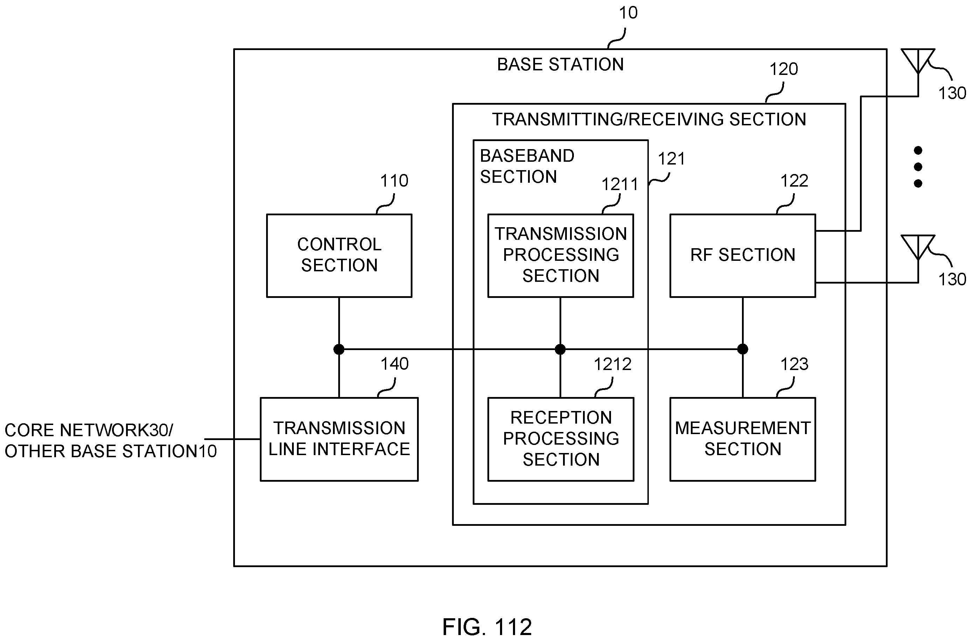

FIG. 112 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the base station 10 may be divided into three elements that are a radio unit (RU), a distributed unit (DU), and a central unit (CU). For example, the RU may implement RF processing (such as digital beam forming, digital-analogue conversion, and analogue beam forming) and physical layer lower functions (such as precoding, IFFT, and FFT). The DU may implement physical layer higher functions (such as from coding to resource element mapping), MAC layer functions, and RLC layer functions. The CU may implement functions of a PDCP layer, a Service Data Adaptation Protocol (SDAP) layer, and an RRC layer.

In the present disclosure, the base station 10 may include one apparatus that implements all the RU, DU, and CU functions or may include a plurality of apparatuses connected to each other that each implement part of the RU, DU, and CU functions. In the present disclosure, the base station 10 and the RU/DU/CU may be interchangeably interpreted.

The transmitting/receiving section 120 may transmit a configuration of a demodulation reference signal (DMRS) for a physical uplink shared channel. The control section 110 may determine, based on the configuration, a plurality of frequency resources with an interval wider than an interval of a plurality of specific frequency resources of a specific DMRS based on a specific configuration, and may control reception of the DMRS by using the plurality of frequency resources.

The transmitting/receiving section 120 may transmit a configuration of a demodulation reference signal (DMRS) for a physical downlink shared channel. The control section 110 may determine, based on the configuration, a plurality of frequency resources with an interval wider than an interval of a plurality of specific frequency resources of a specific DMRS based on a specific configuration, and may control transmission of the DMRS by using the plurality of frequency resources.

The transmitting/receiving section 120 may transmit a configuration of a demodulation reference signal (DMRS) for a physical uplink shared channel. The control section 110 may determine, based on the configuration, one or more time resources for some of a plurality of specific time resources of a specific DMRS based on a specific configuration, and may control reception of the DMRS by using the one or more time resources.

The transmitting/receiving section 120 may transmit a configuration of a demodulation reference signal (DMRS) for a physical downlink shared channel. The control section 110 may determine, based on the configuration, one or more time resources for some of a plurality of specific time resources of a specific DMRS based on a specific configuration, and may control transmission of the DMRS by using the one or more time resources.

The transmitting/receiving section 120 may transmit a configuration of a demodulation reference signal (DMRS) for a physical uplink shared channel. The control section 110 may determine, based on the configuration, a plurality of resources being some of a plurality of specific resources with an orthogonal cover code, and may control reception of the DMRS by using one or more time resources.

The transmitting/receiving section 120 may transmit a configuration of a demodulation reference signal (DMRS) for a physical downlink shared channel. The control section 110 may determine, based on the configuration, a plurality of resources being some of a plurality of specific resources with an orthogonal cover code, and may control transmission of the DMRS by using one or more time resources.

### (User Terminal)

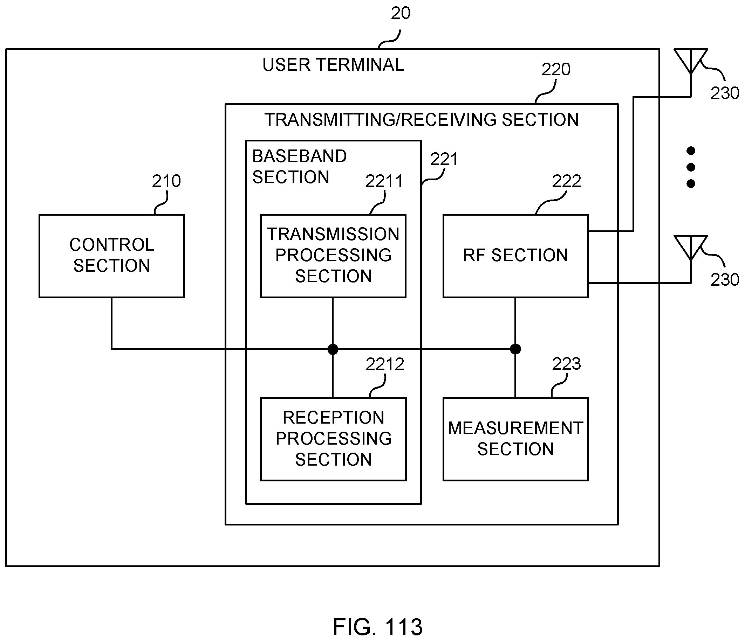

FIG. 113 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of a demodulation reference signal (DMRS) for a physical uplink shared channel. The control section 210 may determine, based on the configuration, a plurality of frequency resources with an interval wider than an interval of a plurality of specific frequency resources of a specific DMRS based on a specific configuration, and may control transmission of the DMRS by using the plurality of frequency resources.

A plurality of frequency resource densities corresponding to a plurality of respective code division multiplexing (CDM) groups may be equal.

A plurality of frequency resource densities corresponding to a plurality of respective code division multiplexing (CDM) groups may be different.

The configuration may indicate a subset of the plurality of frequency resources.

The transmitting/receiving section 220 may receive a configuration of a demodulation reference signal (DMRS) for a physical downlink shared channel. The control section 210 may determine, based on the configuration, a plurality of frequency resources with an interval wider than an interval of a plurality of specific frequency resources of a specific DMRS based on a specific configuration, and may control reception of the DMRS by using the plurality of frequency resources.

A plurality of frequency resource densities corresponding to a plurality of respective code division multiplexing (CDM) groups may be equal.

A plurality of frequency resource densities corresponding to a plurality of respective code division multiplexing (CDM) groups may be different.

The configuration may indicate a subset of the plurality of frequency resources.

The transmitting/receiving section 220 may receive a configuration of a demodulation reference signal (DMRS) for a physical uplink shared channel. The control section 210 may determine, based on the configuration, one or more time resources for some of a plurality of specific time resources of a specific DMRS based on a specific configuration, and may control transmission of the DMRS by using the one or more time resources.

The configuration may include a bitmap indicating the some of the resources.

The one or more time resources are a plurality of time resources, and a plurality of frequency resources corresponding to the plurality of respective time resources may be different.

A plurality of resources of the DMRS corresponding to a plurality of respective slots may be different.

The transmitting/receiving section 220 may receive a configuration of a demodulation reference signal (DMRS) for a physical downlink shared channel. The control section 210 may determine, based on the configuration, one or more time resources for some of a plurality of specific time resources of a specific DMRS based on a specific configuration, and may control reception of the DMRS by using the one or more time resources.

The configuration may include a bitmap indicating the some of the resources.

The one or more time resources are a plurality of time resources, and a plurality of frequency resources corresponding to the plurality of respective time resources may be different.

A plurality of resources of the DMRS corresponding to a plurality of respective slots may be different.

The transmitting/receiving section 220 may receive a configuration of a demodulation reference signal (DMRS) for a physical uplink shared channel. The control section 210 may determine, based on the configuration, a plurality of resources being some of a plurality of specific resources with an orthogonal cover code, and may control transmission of the DMRS by using the one or more time resources.

The configuration may include a bitmap indicating the some of the resources.

Power boosting may be applied to the plurality of resources.

The control section 210 may report a capability related to the DMRS.

The transmitting/receiving section 220 may receive a configuration of a demodulation reference signal (DMRS) for a physical downlink shared channel. The control section 210 may determine, based on the configuration, a plurality of resources being some of a plurality of specific resources with an orthogonal cover code, and may control reception of the DMRS by using one or more time resources.

The configuration may include a bitmap indicating the some of the resources.

Power boosting may be applied to the plurality of resources.

Additional processing time may be applied to the physical downlink shared channel.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

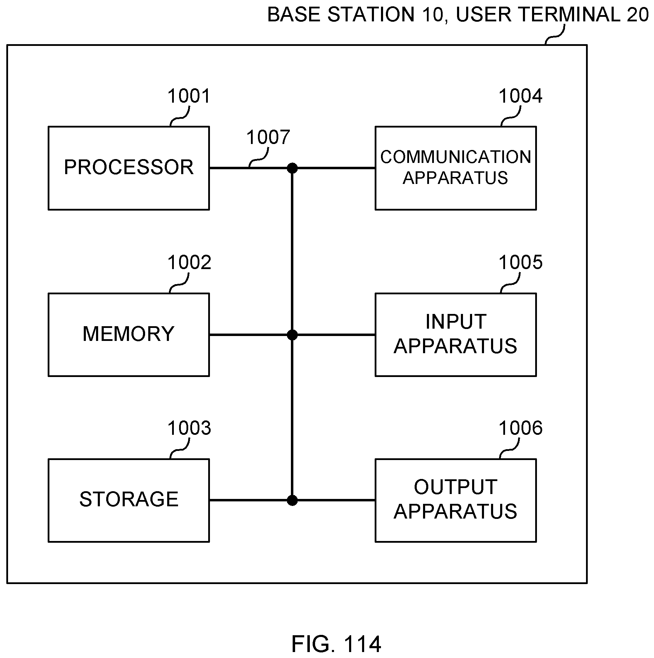

For example, a base station, a user terminal, and so on according to one embodiment of the present disclosure may function as a computer that executes the processes of the radio communication method of the present disclosure. FIG. 114 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

It should be noted that an apparatus (e.g., a network node providing NF) included in the core network 30 may also be realized by the functional blocks / hardware structure described above.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

For any information (e.g., variables, constants, parameters) described in the present disclosure, even if not explicitly stated in the above embodiments, information indicating/identifying [a value of] such information (or information related to such information) may be notified from any first device (e.g., UE / base station) to any second device (e.g., base station / UE).

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

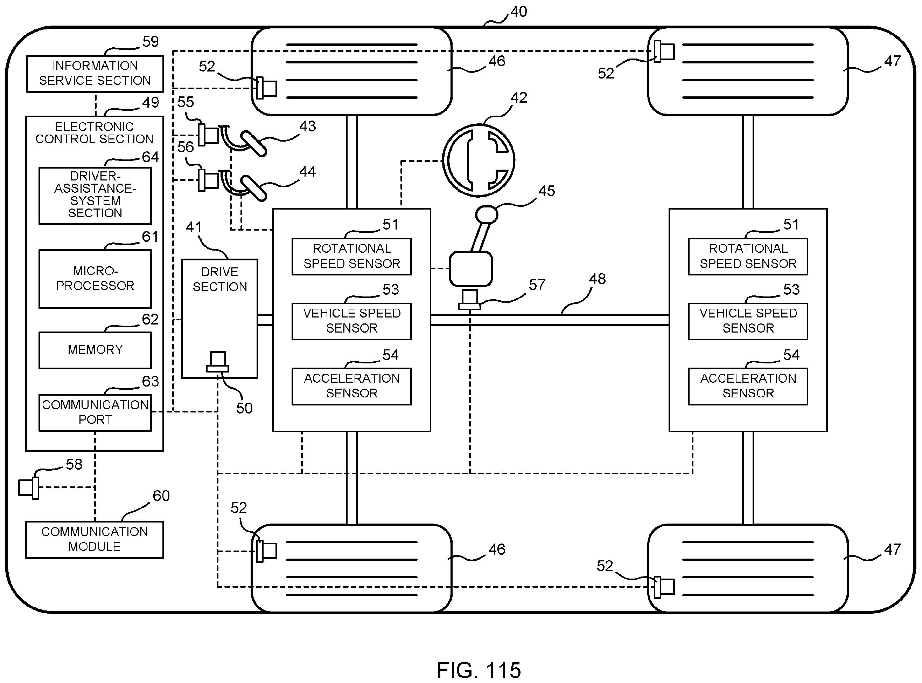

FIG. 115 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...", "..." (if "..." above is a to-infinitive, this "..." is a verb without "to"), or the like. "Does not expect ..." may be used interchangeably with "be not expected ...", "does not ..." (if "..." above is a to-infinitive, this "..." is a verb without "to"), or the like. Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a configuration of a demodulation reference signal (DMRS) for a physical downlink shared channel; and
a control section that determines, based on the configuration, a plurality of resources for some of a plurality of specific resources with an orthogonal cover code and that controls reception of the DMRS by using one or more time resources.

2. The terminal according to claim 1, wherein
the configuration includes a bitmap indicating the some of a plurality of specific resources.

3. The terminal according to claim 1, wherein
power boosting is applied to the plurality of resources.

4. The terminal according to claim 1, wherein
additional processing time is applied to the physical downlink shared channel.

5. A radio communication method for a terminal, the radio communication method comprising:
receiving a configuration of a demodulation reference signal (DMRS) for a physical downlink shared channel; and
determining, based on the configuration, a plurality of resources for some of a plurality of specific resources with an orthogonal cover code and controlling reception of the DMRS by using one or more time resources.

6. A base station comprising:
a transmitting section that transmits a configuration of a demodulation reference signal (DMRS) for a physical downlink shared channel; and
a control section that determines, based on the configuration, a plurality of resources for some of a plurality of specific resources with an orthogonal cover code and that controls transmission of the DMRS by using one or more time resources.
